(19) Europäisches Patentamt
European Patent Office
Office européen des brevets

(11) EP 4 332 137 A1

(12) EUROPEAN PATENT APPLICATION

(43) Date of publication:
**06.03.2024 Bulletin 2024/10**

(21) Application number: **23193917.4**

(22) Date of filing: **29.08.2023**

(51) International Patent Classification (IPC):
***C08G 18/02*** (2006.01) ***B05D 7/00*** (2006.01)
***C07C 263/10*** (2006.01) ***C08G 18/08*** (2006.01)
***C08G 18/28*** (2006.01) ***C08G 18/42*** (2006.01)
***C08G 18/62*** (2006.01) ***C08G 18/70*** (2006.01)
***C08G 18/72*** (2006.01) ***C08G 18/73*** (2006.01)
***C08G 18/77*** (2006.01) ***C08G 18/78*** (2006.01)
***C08G 18/79*** (2006.01) ***C08G 18/80*** (2006.01)
***C09D 175/04*** (2006.01)

(52) Cooperative Patent Classification (CPC):
**C09D 175/04; C08G 18/022; C08G 18/0828; C08G 18/283; C08G 18/4277; C08G 18/6225; C08G 18/706; C08G 18/725; C08G 18/73; C08G 18/771; C08G 18/775; C08G 18/7887; C08G 18/792; C08G 18/798; C08G 18/8093;**

(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.09.2022 JP 2022140086**

(71) Applicant: **Asahi Kasei Kabushiki Kaisha**
**Tokyo 1000006 (JP)**

(72) Inventors:
- **Shinomiya, Kie**
  **Tokyo, 100-0006 (JP)**
- **Suzuki, Mio**
  **Tokyo, 100-0006 (JP)**
- **Yamauchi, Masakazu**
  **Tokyo, 100-0006 (JP)**

(74) Representative: **Strehl Schübel-Hopf & Partner**
**Maximilianstrasse 54**
**80538 München (DE)**

# (54) BASE COATING COMPOSITION, MULTILAYER COATING FILM LAMINATE, AND METHOD FOR FORMING MULTILAYER COATING FILM LAMINATE

(57) The present invention provides a base coating composition for forming a multilayer coating film laminate on an object to be coated, wherein the multilayer coating film laminate includes a base layer and one or more coating films; the base coating composition contains a polyisocyanate component (A) and a hydroxyl group-containing resin component; and the polyisocyanate component (A) contains a polyisocyanate containing a sulfonic acid anion group within a molecule, and one or more tertiary ammonium cations of an amine compound represented by a general formula (1).

EP 4 332 137 A1

(52) Cooperative Patent Classification (CPC): (Cont.)
B05D 7/572

**Description**

FIELD OF THE INVENTION

The present invention relates to a base coating composition, a multilayer coating film laminate, and a method for forming a multilayer coating film laminate.

BACKGROUND OF THE INVENTION

In recent years, the use of aqueous coating material compositions has been increasing, for example, as base coat coating materials used in automobile exterior and interior panel parts. These aqueous coating material compositions contain almost no organic solvent and are therefore suitable from the viewpoint of preventing environmental pollution.

For example, Patent Document 1 discloses an aqueous coating material composition that combines an aqueous base polyol and a specific melamine.

PRIOR ART DOCUMENTS

[Patent Document]

[Patent Document 1] Japanese Unexamined Patent Application, First Publication No. Hei 7-207220

SUMMARY OF THE INVENTION

Problems to be Solved by the Invention

On the other hand, in addition to the viewpoint of global environmental protection, there is a strong demand for coating material compositions that can also be used for plastics with low heat resistance. A coating material composition that can also be used for plastics with low heat resistance means a coating material composition that exhibits coating film performance even at low curing temperatures.

However, with the technique disclosed in Patent Document 1, when the curing temperature is low, the chipping resistance, coating film hardness and the like of a multilayer coating film laminate may be insufficient.

The present invention has been made in view of the above circumstances, with an object of providing a base coating composition capable of producing a multilayer coating film laminate having excellent hardness and water resistance even when cured at low temperatures, a multilayer coating film laminate using the aforementioned base coating composition, and a method for forming the aforementioned multilayer coating film laminate.

In the present specification, the expression "curing at low temperatures" means that the curing temperature is within a temperature range of 40°C or higher and 140°C or lower.

Means for Solving the Problem

That is, the present invention includes the following aspects.

[1] A base coating composition for forming a multilayer coating film laminate on an object to be coated, wherein the aforementioned multilayer coating film laminate includes a base layer and one or more coating films; the aforementioned base coating composition contains a polyisocyanate component (A) and a hydroxyl group-containing resin component; and the aforementioned polyisocyanate component (A) contains a polyisocyanate containing a sulfonic acid anion group in the molecule, and one or more tertiary ammonium cations of an amine compound represented by the following general formula (1).

[Chemical Formula 1]

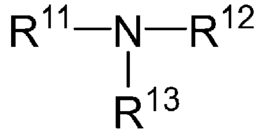

(1)

(In the general formula (1), $R^{11}$, $R^{12}$, and $R^{13}$ each independently represent a hydrocarbon group having 1 to 10

carbon atoms which may contain an ether bond. At least one selected from the group consisting of $R^{11}$, $R^{12}$, and $R^{13}$ may contain a ring structure, and two or more selected from the group consisting of $R^{11}$, $R^{12}$, and $R^{13}$ may be bonded to each other to form a ring structure. The aforementioned ring structure is an aromatic ring, a cycloalkyl group having 5 or 6 carbon atoms, a 5- or 6-membered ring in which $R^{11}$ and $R^{12}$ are bonded to each other, or a multi-membered multi-ring in which $R^{11}$, $R^{12}$, and $R^{13}$ are bonded to each other.)

[2] The base coating composition according to Claim 1, wherein the aforementioned polyisocyanate component (A) contains a uretdione dimer of a diisocyanate monomer and an isocyanurate trimer of a diisocyanate monomer.

[3] The base coating composition according to [2], wherein a content of the aforementioned uretdione dimer is 1.0% by mass or more and 20.0% by mass or less with respect to a total mass of the aforementioned polyisocyanate component (A).

[4] The base coating composition according to any one of [1] to [3], wherein the aforementioned polyisocyanate component (A) contains an iminooxadiazinedione group, and a specific molar ratio represented by the following formula (2) is 0.05 or more and 0.60 or less.

$$\text{Specific molar ratio} = (B + C) / (A + B + C) \qquad (2)$$

(In the formula (2), A represents a content ratio (mol%) of an isocyanurate group represented by the following formula (I), B represents a content ratio (mol%) of an iminooxadiazinedione group represented by the following formula (II), and C represents a content ratio (mol%) of a uretdione group represented by the following formula (111).)

[Chemical Formula 2]

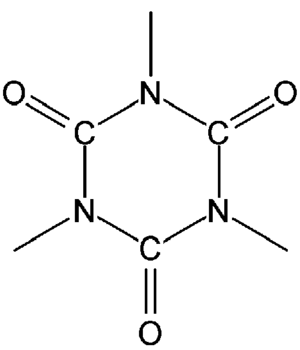

(I)

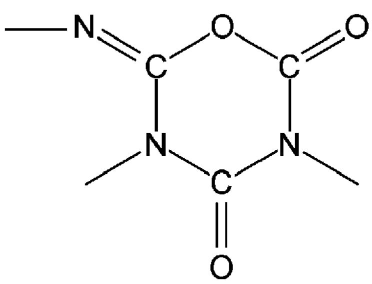

(II)

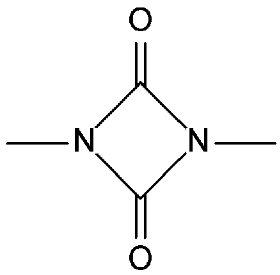

(III)

[5] The base coating composition according to [4], wherein the aforementioned polyisocyanate containing a sulfonic acid anion group in the molecule is a reaction product of an amine salt of a sulfonic acid having an active hydrogen group with a polyisocyanate, and the aforementioned amine salt of a sulfonic acid having an active hydrogen group is a salt of a sulfonic acid having an active hydrogen group and the aforementioned amine compound represented by the general formula (1).

[6] The base coating composition according to any one of [1] to [5], wherein the aforementioned polyisocyanate component (A) is an aliphatic polyisocyanate.

[7] A multilayer coating film laminate including a first coating film, a second coating film, and a third coating film laminated in this order, wherein the aforementioned first coating film is formed from the base coating composition according to any one of [1] to [6], the aforementioned second coating film is formed from a coating material composition containing a hydroxyl group-containing resin component, and the aforementioned third coating film is formed from a two-component coating material composition containing a hydroxyl group-containing resin component and a polyisocyanate component.

[8] The multilayer coating film laminate according to [7], wherein the aforementioned second coating film is formed from a hydroxyl group-containing resin component and a blocked polyisocyanate component (D).

[9] The multilayer coating film laminate according to [8], wherein the aforementioned blocked polyisocyanate component (D) contains a structural unit (1) represented by the following general formula (I).

[Chemical Formula 3]

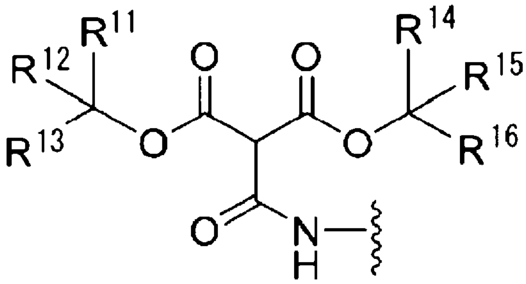

(I)

(In the general formula (1), $R^{11}$, $R^{12}$ and $R^{13}$ each independently represent an alkyl group which may contain one or more substituents selected from the group consisting of a hydroxy group and an amino group; a total number of carbon atoms of $R^{11}$, $R^{12}$ and $R^{13}$ is 4 or more and 20 or less; $R^{14}$, $R^{15}$ and $R^{16}$ each independently represent a hydrogen atom or an alkyl group which may contain one or more substituents selected from the group consisting of a hydroxy group and an amino group; and a wavy line represents a bonding site with a residue of polyisocyanate excluding an isocyanate group.)

[10] A method for forming a multilayer coating film laminate, the method including: a step of coating a first coating material composition on an object to be coated to obtain a first uncured coating film; a step of coating a second coating material composition on the aforementioned first uncured coating film to obtain a second uncured coating film; a step of further coating a third coating material composition on the aforementioned second uncured coating film to obtain a third uncured coating film; and a step of simultaneously curing the aforementioned first uncured coating film, the second uncured coating film and the third uncured coating film by heating at 40°C or higher and 140°C or lower to form a multilayer coating film laminate composed of three layers of a first coating film, a second coating film and a third coating film, wherein the aforementioned first coating material composition is the base coating composition according to [1] or [2], the aforementioned second coating material composition is a coating material composition containing a hydroxyl group-containing resin component, and the aforementioned third coating material composition is a two-component coating material composition containing a hydroxyl group-containing resin component and a polyisocyanate component.

[11] The method for forming a multilayer coating film laminate according to [10], wherein the aforementioned second coating material composition is a coating material composition containing a hydroxyl group-containing resin component and a blocked polyisocyanate component (D).

[12] The method for forming a multilayer coating film laminate according to [11], wherein a blocked polyisocyanate contained in the aforementioned blocked polyisocyanate component (D) contains a structural unit (I) represented by the following general formula (1).

[Chemical Formula 4]

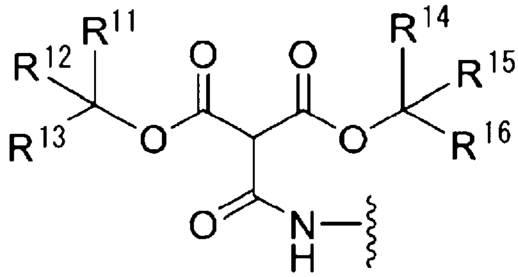

(I)

(In the general formula (I), $R^{11}$, $R^{12}$ and $R^{13}$ each independently represent an alkyl group which may contain one or more substituents selected from the group consisting of a hydroxy group and an amino group; a total number of carbon atoms of $R^{11}$, $R^{12}$ and $R^{13}$ is 4 or more and 20 or less; $R^{14}$, $R^{15}$ and $R^{16}$ each independently represent a hydrogen atom or an alkyl group which may contain one or more substituents selected from the group consisting of a hydroxy group and an amino group; and a wavy line represents a bonding site with a residue of polyisocyanate excluding an isocyanate group.)

Effects of the Invention

According to the present invention, it is possible to provide: a base coating composition capable of producing a multilayer coating film laminate having excellent hardness and water resistance even when cured at low temperatures, a multilayer coating film laminate using the aforementioned base coating composition, and a method for forming the aforementioned multilayer coating film laminate.

DETAILED DESCRIPTION OF THE INVENTION

Hereinafter, an embodiment for carrying out the present invention (hereinafter, may be simply referred to as "the present embodiment") will be described in detail. The present embodiment below is an illustration for explaining the present invention, and is not intended to limit the present invention to the following content. The present invention can be carried out with appropriate modifications within the scope of the gist thereof.

In the present specification, the term "polyisocyanate" means a polymer in which a plurality of monomers having two or more isocyanate groups (-NCO) are bonded.

In the present specification, the term "polyol" means a compound having two or more hydroxy groups (-OH).

<Base coating composition>

The present embodiment is a base coating composition for forming a multilayer coating film laminate on an object to be coated.

More specifically, the base coating composition of the present embodiment is a material for forming a first coating film which is brought into contact with an object to be coated when forming a multilayer coating film laminate on the object to be coated.

Hereinafter, a layer formed from the base coating composition will be referred to as a "base layer" or "first coating film".

By forming a base layer on an object to be coated using the base material composition of the present embodiment, and further laminating a coating film on the base layer, even when cured at a low temperature, a multilayer coating film laminate having excellent hardness and water resistance can be produced.

In the present embodiment, the multilayer coating film laminate includes a base layer and one or more coating films.

One example of the multilayer coating film laminate is a laminate in which the base layer as a first coating film and a second coating film are laminated in this order.

Another example of the multilayer coating film laminate is a laminate in which the base layer as a first coating film, a second coating film and a third coating film are laminated in this order.

In the above example of the multilayer coating film laminate, the second coating film and the third coating film will be described later.

The base coating composition of the present embodiment contains a polyisocyanate component (A) and a hydroxyl group-containing resin component.

By satisfying a specific composition, the base coating composition of the present embodiment exhibits favorable dispersion stability, and since an isocyanate group and water are less likely to react, the pot life is improved.

It should be noted that the term "dispersion stability" refers to a state in which the dispersion state is difficult to change over time, and separation by sedimentation and the like is less likely to occur over time.

The constituent components of the base coating composition of the present embodiment will be described in detail.

«Polyisocyanate component (A)»

The polyisocyanate component (A) used in the base coating composition of the present embodiment contains a polyisocyanate containing a sulfonic acid anion group within the molecule and a tertiary ammonium cation of an amine compound.

The polyisocyanate component (A) contains one or more tertiary ammonium cations of an amine compound represented by the following general formula (1). The amine compound represented by the following general formula (1) may be referred to as an "amine compound (1)".

[Chemical Formula 5]

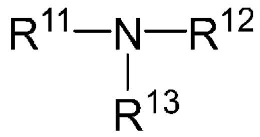

(1)

(In the general formula (1), $R^{11}$, $R^{12}$, and $R^{13}$ each independently represent a hydrocarbon group having 1 to 10 carbon atoms which may contain an ether bond. At least one selected from the group consisting of $R^{11}$, $R^{12}$, and $R^{13}$ may contain a ring structure, and two or more selected from the group consisting of $R^{11}$, $R^{12}$, and $R^{13}$ may be bonded to each other to form a ring structure. The aforementioned ring structure is an aromatic ring, a cycloalkyl group having 5 or 6 carbon atoms, a 5-membered ring or 6-membered ring in which $R^{11}$ and $R^{12}$ are bonded to each other, or a multi-membered multi-ring in which $R^{11}$, $R^{12}$, and $R^{13}$ are bonded to each other.)

When the polyisocyanate component (A) contains a polyisocyanate containing a sulfonic acid anion group within the molecule and a tertiary ammonium cation of an amine compound, the dispersibility stability of the base coating composition is improved. Further, a single layer of the first coating film formed from the base coating composition and the multilayer coating film laminate including the first coating film have excellent hardness. That is, it is possible to achieve both dispersibility stability of the base coating composition and excellent hardness.

[Polyisocyanate component (A)]

The polyisocyanate component (A) usually contains an unmodified polyisocyanate, that is, a polyisocyanate that does not contain a sulfonic acid anion group within the molecule, as an isocyanate component. In addition, unless otherwise specified, various characteristics of the base coating composition of the present embodiment, which will be described later, are characteristics in a state containing both a polyisocyanate containing a sulfonic acid anion group within the molecule and an unmodified polyisocyanate (a polyisocyanate that does not contain a sulfonic acid anion group within the molecule).

Further, in the polyisocyanate component (A), a ratio of the unreacted polyisocyanate and the polyisocyanate containing a sulfonic acid anion group within the molecule can be calculated, for example, from a ratio of isocyanate groups containing a sulfonic acid anion group within the molecule with respect to 100 moles of the isocyanate group of the raw material polyisocyanate.

[Polyisocyanate containing a sulfonic acid anion group within the molecule]

The polyisocyanate containing a sulfonic acid anion group within the molecule contained in the polyisocyanate component (A) is a reaction product obtained by reacting a sulfonic acid having an active hydrogen group or an amine salt thereof with a polyisocyanate.

(Polyisocyanate)

The polyisocyanate used for the polyisocyanate containing a sulfonic acid anion group within the molecule is not particularly limited, and examples thereof include polyisocyanates derived from at least one diisocyanate selected from the group consisting of aliphatic diisocyanates, alicyclic diisocyanates and aromatic diisocyanates. The polyisocyanate used for the polyisocyanate containing a sulfonic acid anion group within the molecule is preferably at least one selected from the group consisting of aliphatic polyisocyanates, alicyclic polyisocyanates and aromatic polyisocyanates, and more preferably an aliphatic polyisocyanate from the viewpoint of industrial availability.

Although the aliphatic diisocyanate is not particularly limited, examples thereof include 1,4-diisocyanatobutane, 1,5-diisocyanatopentane (PDI), ethyl (2,6-diisocyanato)hexanoate, 1,6-diisocyanatohexane (hereinafter also referred to as "HDI"), 1,9-diisocyanatononane, 1,12-diisocyanatododecane, and 2,2,4- or 2,4,4-trimethyl-1,6-diisocyanatohexane.

Although the alicyclic diisocyanate is not particularly limited, examples thereof include 1,3- or 1,4-bis(isocyanatomethyl)cyclohexane (hereinafter also referred to as "hydrogenated XDI"), 1,3- or 1,4-diisocyanatocyclohexane, 3,5,5-trimethyl 1-isocyanato-3-(isocyanatomethyl)cyclohexane (hereinafter also referred to as "IPDI"), 4-4'-diisocyanato-dicyclohexylmethane (hereinafter also referred to as "hydrogenated MDI"), and 2,5- or 2,6-diisocyanatomethylnorbornane.

Although the aromatic diisocyanate is not particularly limited, examples thereof include xylylene diisocyanate, tolylene diisocyanate, and diphenylmethane diisocyanate.

Among these, as the diisocyanate, PD1, HD1, 1PD1, hydrogenated XD1, or hydrogenated MDI is preferred,

and PDI and HDI are particularly preferred.

Although the polyisocyanate derived from the above diisocyanate is not particularly limited, examples thereof include the polyisocyanates shown in the following (a) to (i).

(a) a polyisocyanate having a uretdione group obtained by cyclodimerization of two isocyanate groups;
(b) a polyisocyanate having an isocyanurate group or an iminooxadiazinedione group obtained by cyclotrimerization of three isocyanate groups;
(c) a polyisocyanate having a biuret group obtained by reacting three isocyanate groups with one water molecule;
(d) a polyisocyanate having an oxadiazinetrione group obtained by reacting two isocyanate groups with one molecule of carbon dioxide;
(e) a polyisocyanate having a plurality of urethane groups obtained by reacting one isocyanate group with one hydroxyl group;
(f) a polyisocyanate having an allophanate group obtained by reacting two isocyanate groups with one hydroxyl group;
(g) a polyisocyanate having an acylurea group obtained by reacting one isocyanate group with one carboxyl group;
(h) a polyisocyanate having a urea group obtained by reacting one isocyanate group with one primary or secondary amine;
(i) a polyisocyanate having an iminooxadiazinedione group.

The polyisocyanate component (A) preferably contains a uretdione dimer of the above diisocyanate and an isocyanurate trimer of the above diisocyanate. That is, the polyisocyanate component (A) preferably contains the above (a) and the above (b).

By having an isocyanurate group, the polyisocyanate component (A) exhibits excellent hardness, water resistance, drying properties, and weather resistance when formed into a coating film.

Further, in the polyisocyanate component (A), the uretdione group and the isocyanurate group may be contained within the same polyisocyanate molecule or may be contained within different polyisocyanate molecules, but are preferably contained within different polyisocyanate molecules.

In the present embodiment, the content of the uretdione dimer is preferably 1.0% by mass or more and 20.0% by mass or less with respect to the total mass of the polyisocyanate component (A), and the content of a uretdione dimer containing a sulfonic acid anion group within the molecule is more preferably 0.15% by mass or less with respect to the total mass of the aforementioned polyisocyanate containing a sulfonic acid anion group within the molecule, the aforementioned uretdione dimer and the aforementioned isocyanurate trimer.

When the content of the uretdione dimer is within the above range, a multilayer coating film laminate with favorable coating film hardness can be obtained.

Further, when the content of the uretdione dimer containing a sulfonic acid anion group within the molecule is within the above range, a multilayer coating film laminate achieving both excellent water resistance and stain resistance can be obtained.

It should be noted that the expressions "uretdione dimer of diisocyanate monomer" and "isocyanurate trimer of diisocyanate monomer" as used herein refer to those that do not contain a sulfonic acid anion group within the molecule (unmodified uretdione dimers and isocyanurate trimers). In addition, the expression "polyisocyanate containing a sulfonic acid anion group within the molecule" includes a uretdione dimer containing a sulfonic acid anion group within the molecule and an isocyanurate trimer containing a sulfonic acid anion group within the molecule.

It is preferable that the polyisocyanate component (A) contains an iminooxadiazinedione group in addition to a uretdione group and an isocyanurate group.

Further, it is preferable that the specific molar ratio represented by the following formula (2) is 0.05 or more and 0.60 or less.

$$\text{Specific molar ratio} = (B + C) / (A + B + C) \qquad (2)$$

(In the formula (2), A represents a content ratio (mol%) of an isocyanurate group represented by the following formula (I), B represents a content ratio (mol%) of an iminooxadiazinedione group represented by the following formula (II), and C represents a content ratio (mol%) of a uretdione group represented by the following formula (111).)

[Chemical Formula 6]

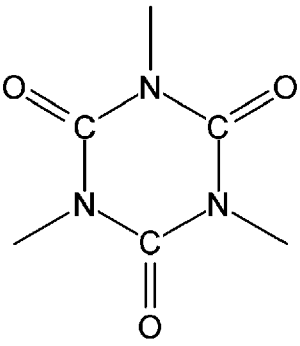 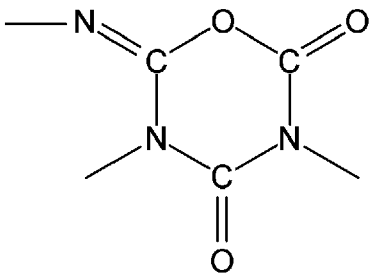 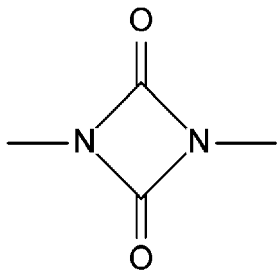

(I) (II) (III)

The lower limit value of the specific molar ratio represented by the formula (2) is preferably 0.08, more preferably 0.12, still more preferably 0.15, still more preferably 0.18, and still more preferably 0.20. The upper limit value of the specific molar ratio is preferably 0.50, more preferably 0.45, still more preferably 0.40, still more preferably 0.37, and still more preferably 0.35.

When the specific molar ratio is equal to or more than the above lower limit value, excellent compatibility with the hydroxyl group-containing resin component can be exhibited. Further, when the specific molar ratio is equal to or less than the above upper limit value, performance such as hardness of the multilayer coating film laminate is unlikely to deteriorate even when cured at a low temperature.

Examples of the method for obtaining the polyisocyanate component (A) having the specific molar ratio represented by the formula (2) of 0.05 or more and 0.60 or less include a method for forming an iminooxadiazinedione group, a uretdione group and an allophanate group by an iminooxadiazinedione-forming reaction, a uretdione-forming reaction and an allophanate-forming reaction, which will be described later, and adjusting the specific molar ratio.

The molar ratio of the iminooxadiazinedione groups is preferably 0.05 or more and 0.60 or less as a molar ratio of B/ (A + B + C) (A to C are the same as A to C represented by the above formula (2)). The lower limit value of the above molar ratio is more preferably 0.08, still more preferably 0.12, still more preferably 0.15, and still more preferably 0.18. The upper limit value of the above molar ratio is more preferably 0.50, still more preferably 0.45, still more preferably 0.40, and still more preferably 0.37.

When the above molar ratio is 0.05 or more, it tends to be possible to exhibit better compatibility with the hydroxyl group-containing resin component, and when the above molar ratio is 0.60 or less, it tends to be possible to suppress deterioration in coating film performance during low-temperature curing.

From the viewpoint of obtaining a multilayer coating film laminate with high hardness, the above molar ratio is more preferably 0.50 or less. Examples of the method for obtaining the polyisocyanate component (A) having the above molar ratio of 0.05 or more and 0.60 or less include a method for forming an iminooxadiazinedione group by an iminooxadiazinedione-forming reaction, which will be described later, and adjusting the above molar ratio.

The polyisocyanate component (A) may contain a reaction product with an alcohol from the viewpoints of improving acid resistance, alkali resistance and salt spray resistance, and suppressing viscosity reduction and dilution turbidity. That is, it is preferable that the polyisocyanate component (A) contains either one or both of the above (e) and the above (f).

The above alcohol preferably has an average number of hydroxyl groups per molecule of 2.0 or more and 3.5 or less, and a number average molecular weight of 450 or less.

The lower limit value of the average number of hydroxyl groups in the alcohol used in the present embodiment is preferably 2.0 or more and 3.0 or less, and more preferably 2.0 or more and 2.5 or less from the viewpoints of suppressing viscosity reduction and dilution turbidity and achieving a good balance between improvements in acid resistance, alkali resistance and salt spray resistance. In addition, the number average molecular weight is preferably 400 or less, and more preferably 350 or less, from the viewpoint of suppressing viscosity reduction, and in view of dispersibility and coating film hardness.

Examples of the alcohol that satisfies the average number of hydroxyl groups and the number average molecular weight described above include diols, triols, and tetraols. Examples of the diols include ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 1,2-pentanediol, 1,3-pentanediol, 1,4-pentanediol, neopentyl glycol, 2-methyl-2,3-butanediol, 1,6-hexanediol, 1,2-hexanediol, 2,5-hexanediol, 2-methyl-2,4-pentanediol, 2,3-dimethyl-2,3-butanediol, 3-methyl-1,5-pentanediol, 2-ethyl-hexanediol, 1,2-octanediol, 2-methyl-1,8-octanediol, 1,9-nonanediol, 1,10-decanediol, 1,2-decanediol, 2,2,4-trimethylpentanediol, 2-butyl-2-ethyl-1,3-propanediol, and 2,2-diethyl-1,3-propanediol; examples of the triols include glycerin and trimethylolpropane; and examples of the tetraols include pentaerythritol and the like.

Examples of the polymer alcohol include polyester polyols, polyether polyols, acrylic polyols, polyolefin polyols, and polycarbonate diols.

Examples of the polyester polyol include a polyester polyol obtained by a condensation reaction of a single compound or a mixture of a dibasic acid selected from the group of carboxylic acids such as succinic acid, adipic acid, sebacic acid, dimer acid, maleic anhydride, phthalic anhydride, isophthalic acid, and terephthalic acid, with a single compound or a mixture of a polyhydric alcohol selected from the group consisting of ethylene glycol, propylene glycol, diethylene glycol, neopentyl glycol, trimethylolpropane, glycerin, and the like; and, for example, a polycaprolactone or the like obtained by ring-opening polymerization of ε-caprolactone using a polyhydric alcohol.

Examples of the polyether polyol include a polyether polyol obtained by random addition or block addition of a single compound or a mixture of an alkylene oxide, such as ethylene oxide, propylene oxide, butylene oxide, cyclohexene oxide and styrene oxide, to a single compound or a mixture of a polyvalent hydroxy compound, by using a strongly basic catalyst such as a hydroxide, an alcoholate and an alkylamine of, for example, lithium, sodium, potassium or the like, a composite metal cyanide complex such as a metalloporphyrin and a zinc hexacyanocobaltate complex, or the like; a polyether polyol obtained by reacting an alkylene oxide with a polyamine compound such as ethylenediamines; and a so-called polymer polyol obtained by polymerizing an acrylamide or the like using these polyethers as a medium.

A polycarbonate diol repeatedly has a structural unit, which is obtained by dehydration condensation of two alcohol groups and one carbonate group. In addition, examples of the polycarbonate diol include those obtained by copolymerization of a first diol having 2 or more and 20 or less carbon atoms, a second diol having 2 or more and 20 or less carbon atoms (hereinafter also simply referred to as "two types of diols") and a carbonate compound.

Any one of these alcohols may be used alone, or a plurality of these alcohols may be used in combination.

The mass fraction of the alcohol with respect to the total mass of the polyisocyanate components of the present embodiment is preferably 0.01% by mass or more and 4.5% by mass or less. Further, it is more preferably 0.1% by mass or more and 2.5% by mass or less from the viewpoint of achieving a good balance among the dilution turbidity and the chromaticity, acid resistance and salt spray resistance of the polyisocyanate component.

In addition, the polyisocyanate used for the polyisocyanate containing a sulfonic acid anion group within the molecule may contain an aliphatic triisocyanate. Examples of the aliphatic triisocyanate include 1,3,6-triisocyanatohexane, 1,8-diisocyanato-4-isocyanatomethyloctane and 2-isocyanatoethyl-2,6-diisocyanato-hexanoate.

Further, these polyisocyanates may be modified with nonionic hydrophilic groups such as alkoxypolyalkylene glycols, or vinyl polymers having hydroxyl groups and nonionic hydrophilic groups.

In addition, any one of these polyisocyanates can be used alone, or two or more types thereof can also be used in combination.

When a polyisocyanate modified with a nonionic hydrophilic group is contained in the polyisocyanate component (A), the content of the polyisocyanate modified with a nonionic hydrophilic group is preferably 1% by mass or more and 60% by mass or less. The upper limit value of the content of the polyisocyanate modified with a nonionic hydrophilic group is preferably 60% by mass, more preferably 40% by mass, still more preferably 30% by mass, and particularly preferably 20% by mass. Further, the lower limit value thereof is preferably 2% by mass, more preferably 5% by mass, and still more preferably 10% by mass. When the content of the polyisocyanate modified with a nonionic hydrophilic group is within the above range, the pot life of the base coating composition dispersed in water or a main agent containing water is improved, and a multilayer coating film laminate having excellent water resistance is easily obtained.

(Nonionic hydrophilic group)

Although the nonionic hydrophilic group is not particularly limited, examples thereof include polyalkylene glycol alkyl ethers. The number of hydroxyl groups included in a polyalkylene glycol alkyl ether is preferably one from the viewpoint of lowering the viscosity of the base coating composition.

A preferred polyalkylene glycol alkyl ether has a structure represented by the following general formula (20).

[Chemical Formula 7]

$$HO-\left(R^{21}O\right)_{n11}-R^{22} \quad \cdots (20)$$

In the general formula (20), $R^{21}$ is an alkylene group having 1 to 4 carbon atoms, $R^{22}$ is an alkyl group having 1 to 4 carbon atoms, and n11 is 4.0 or more and 20 or less.

The polyalkylene glycol alkyl ethers are not a single component, but a group of materials with different numbers of n indicating the degree of polymerization (hereinafter sometimes referred to as "degree of polymerization n" or simply as "n"). Therefore, the degree of polymerization n is expressed by an average value thereof. In the formula (20), the degree of polymerization n is described as n11.

When blending a polyisocyanate into an aqueous main agent, an increase in viscosity (thickening) when mixed with the main agent is often a problem. If the viscosity is greatly increased, the polyisocyanate cannot be uniformly dispersed in the main agent, which tends to lead to deterioration of the physical properties of the coating film.

Therefore, n11 is 4.0 or more and 20 or less, preferably 4.0 or more and 16 or less, and more preferably 4.0 or more and 12 or less, from the viewpoint of water dispersibility and dispersibility in the main agent. When n11 is equal to or more than the above lower limit value, the dispersibility tends to improve due to an increase in the emulsifying capacity. On the other hand, when n11 is equal to or less than the above upper limit value, dispersion tends to be facilitated because an increase in the viscosity is prevented.

It is also possible to use two or more types of polyalkylene glycol alkyl ethers with different degrees of polymerization n in combination. The degree of polymerization n of a polyalkylene glycol alkyl ether can be measured by a proton nuclear magnetic resonance (NMR) method.

In the general formula (1), $R^{21}$ is an alkylene group having 1 to 4 carbon atoms from the viewpoint of imparting hydrophilicity, and is preferably an ethylene group having 2 carbon atoms from the viewpoint of imparting more hydrophilicity.

Further, $R^{22}$ is an alkyl group having 1 to 4 carbon atoms from the viewpoint of imparting hydrophilicity, and is preferably a methyl group having 1 carbon atom from the viewpoint of imparting more hydrophilicity.

Examples of the polyalkylene glycol alkyl ether include, but are not limited to, polyethylene glycol (mono)methyl ether, poly(ethylene, propylene) glycol (mono)methyl ether, and polyethylene glycol (mono)ethyl ether. Among these, polyethylene glycol (mono)methyl ether is preferred from the viewpoint of imparting hydrophilicity.

(Method for producing polyisocyanate)

(1) Method for producing polyisocyanate containing isocyanurate group

Although a method for producing a polyisocyanate containing an isocyanurate group is not particularly limited, examples thereof include a method of reacting a diisocyanate monomer using an isocyanurate-forming catalyst and an alcohol as a co-catalyst.

Examples of isocyanurate-forming catalysts used in the production of isocyanurate-type polyisocyanates include sodium salts, potassium salts and quaternary ammonium salts of fatty acids.

Examples of the fatty acids include acetic acid, propionic acid, butyric acid, valeric acid, caproic acid, heptanoic acid, caprylic acid, pelargonic acid, capric acid, lauric acid, myristic acid, palmitic acid, and stearic acid. Further, these fatty acids may be linear or branched.

Examples of the quaternary ammonium include tetramethylammonium, tetrabutylammonium, butyltrimethylammonium, benzyltrimethylammonium, dibenzyldimethylammonium and phenyltrimethylammonium.

The amount of the isocyanurate-forming catalyst used varies depending on the amount of co-catalyst and solvent used, but when HDI is used as a raw material for polyisocyanate, it is usually 0.001% by mass or more and 0.05% by mass or less with respect to the mass of HDI.

As alcohols serving as co-catalysts, for example, phenolic hydroxy compounds and alcoholic hydroxy compounds can be used. This allows the isocyanurate-forming reaction to proceed more easily.

Examples of the phenolic hydroxy compounds include phenol, cresol and trimethylphenol.

Examples of the alcoholic hydroxy compounds include linear alcohols, branched alcohols, cyclic alcohols, and polyhydric alcohols.

Examples of the linear alcohols include methanol, ethanol, propanol, n-butanol, and 1-hexanol.

Examples of the branched alcohols include isobutanol, and 2-ethylhexanol.

Examples of the cyclic alcohols include cyclohexanol and the like.

Examples of the polyhydric alcohols include ethylene glycol and the like.

The amount of alcohol used correlates with the amount of allophanate groups present in the polyisocyanate contained in the polyisocyanate component. It is preferably 500 ppm or more and 30,000 ppm or less, in mass ratio, with respect to HD1, when HD1 is used as a raw material for polyisocyanate. By setting the amount of alcohol used to be equal to or less than the above upper limit value, the abundance ratio of the isocyanurate groups in the polyisocyanate contained in the final polyisocyanate component is appropriately maintained, resulting in better weather resistance and chemical resistance. On the other hand, by setting the amount of alcohol used to be equal to or more than the above

lower limit value, the reaction rate can be kept higher, resulting in better productivity in terms of economy.

In the production of the isocyanurate-type polyisocyanate, the timing of adding the alcohol may be such that the alcohol is present in the reaction system during the isocyanurate-forming reaction. More specifically, it may be added at any timings of before the isocyanurate-forming reaction, at the same time as the isocyanurate-forming catalyst, and during the progress of the isocyanurate-forming reaction after the addition of the isocyanurate-forming catalyst. Further, it may be added at only one of the above timings, or may be added at all the timings. A method of adding alcohol may be either batch addition or continuous addition. However, from the viewpoint of controlling the reaction and heat generation, continuous addition is preferred for the addition of alcohol during the progress of the isocyanurate-forming reaction. Regarding the addition of alcohol before the isocyanurate-forming reaction, batch addition is preferred in terms of economy.

The isocyanurate-forming reaction temperature is preferably 70°C or lower, and more preferably 30°C or higher and 65°C or lower. By setting the isocyanurate-forming reaction temperature to the above upper limit value or lower, a polyisocyanate with better chromaticity can be obtained. On the other hand, by setting the isocyanurate-forming reaction temperature to the above lower limit value or higher, the reaction rate can be kept more appropriately, resulting in better productivity in terms of economy.

The reaction time varies depending on the amount of the catalyst, the amount and addition method of alcohol as a co-catalyst, the reaction temperature, and the like, but it can usually be set to 1 hour or more and 6 hours or less.

Since a decrease in the isocyanate group content (NCO%) as the isocyanurate formation progresses can be measured by titrimetric analysis, the reaction may be terminated when the predetermined content (NCO%) is reached.

The content (NCO%), viscosity, and the like of the isocyanurate-type polyisocyanate can be freely changed depending on the content (NCO%) at the time of terminating the reaction.

An acidic compound can be used as a reaction terminator. Examples of the acidic compound include hydrochloric acid, phosphoric acid, dimethyl phosphate, diethyl phosphate, dibutyl phosphate, di-2-ethylhexyl phosphate, dicyclohexyl phosphate, p-toluenesulfonic acid, benzenesulfonic acid, alkylbenzene sulfonic acid, acetyl chloride, and benzoyl chloride. Further, analogous compounds of these acidic compounds may also be used.

The amount of the reaction terminator used can be set to 0.5 to 10 times, and is preferably 1 to 8 times, the molar amount of 1 mole of the carboxylic acid content in the isocyanurate-forming catalyst. When using a reaction terminator that is soluble in a mixed solution of the raw material diisocyanate monomer and the polyisocyanate produced by the reaction, the reaction terminator can be used in an amount of about 1 times the molar amount of 1 mole of the carboxylic acid content in the isocyanurate-forming catalyst, and when an insoluble reaction terminator is used, it can be used in an amount of 2 to 8 times the molar amount of 1 mole of the carboxylic acid content in the isocyanurate-forming catalyst.

After adding the reaction terminator, heat curing may be performed to complete the termination reaction. When heat curing is performed, the temperature therefor is preferably 80°C or higher and 150°C or lower, more preferably 80°C or higher and 130°C or lower, and still more preferably 90°C or higher and 120°C or lower. When the temperature is equal to or lower than the above upper limit value, the reduction of 1-nylon bodies in the polyisocyanate component containing the obtained isocyanurate-type polyisocyanate can be further suppressed, and it is possible to further suppress the decrease in chromaticity and the increase in viscosity due to the progress of multimerization of isocyanurate-type polyisocyanates. When the temperature is equal to or higher than the above lower limit value, the growth of the salt produced by the termination reaction can be further accelerated, and especially in the case of a combination of a catalyst and a reaction terminator that form an insoluble salt, it is possible to form more salts having a filterable size, resulting in better productivity in terms of economy.

Although the optimal time for heat curing varies depending on the temperature, it can be set to 10 minutes or more and 120 minutes or less, preferably 10 minutes or more and 90 minutes or less, and more preferably 10 minutes or more and 60 minutes or less. Although depending on the temperature, when the heat curing time is equal to or shorter than the above upper limit value, it is possible to further suppress the discoloration and the increase in viscosity due to further increase in the amount of polyisocyanate. On the other hand, when the heat curing time is equal to or longer than the above lower limit value, the formation and growth of the salt can be made more sufficient, and in the case of an insoluble salt, separation by filtration can be made easier.

(11) Method for producing polyisocyanate containing uretdione group

Although a method for producing a polyisocyanate containing a uretdione group is not particularly limited, examples thereof include a method in which a diisocyanate is subjected to a uretdione-forming reaction using a uretdione-forming catalyst or the like.

Examples of the uretdione-forming reaction catalyst include, but are not limited to, tertiary phosphines such as trialkylphosphines, tris(dialkylamino)phosphines and cycloalkylphosphines.

Examples of the trialkylphosphine include tri-n-butylphosphine and tri-n-octylphosphine.

Examples of the tris(dialkylamino)phosphine include tris(dialkylamino)phosphines such as tris-(dimethylamino)phosphine.

Examples of the cycloalkylphosphine include cyclohexyl-di-n-hexylphosphine and the like.

Many of these compounds also promote an isocyanurate-forming reaction at the same time to produce an isocyanurate-type polyisocyanate in addition to the uretdione group-containing polyisocyanate.

When the desired yield is reached, a deactivator of the uretdione-forming reaction catalyst such as phosphoric acid or methyl p-toluenesulfonate is added to terminate the uretdione-forming reaction.

Further, a uretdione group-containing polyisocyanate can also be obtained by heating a diisocyanate monomer without using the above uretdione-forming reaction catalyst.

When the above uretdione-forming reaction catalyst is not used, the heating temperature can be set to 120°C or higher, preferably 150°C or higher and 170°C or lower. Further, the heating time can be set to 1 hour or more and 4 hours or less.

(III) Iminooxadiazinedione-forming reaction for forming iminooxadiazinedione group

As a catalyst of the iminooxadiazinedione-forming reaction for forming an iminooxadiazinedione group, for example, the following catalyst (1) or (2) generally known as an iminooxadiazinedione-forming reaction catalyst can be used.

(1) (Poly)hydrogen fluoride, such as tetramethylammonium fluoride hydrates and tetraethylammonium fluoride, represented by a general formula M[Fn] or a general formula M[Fn(HF)m] (in the formula, m and n are each integers that satisfy a relationship of m/n > 0, M is an n-charged cation (mixture) or one or more radicals with a total valence of n.)

(2) A compound composed of a compound represented by a general formula R1-CR'2-C(O)O- or a general formula R2=CR'-C(O)O- (in the formula, R1 and R2 optionally represent a branched, cyclic, and/or unsaturated perfluoroalkyl group having 1 to 30 carbon atoms, and R' groups are either the same as or different from each other and represent a group selected from the group consisting of a hydrogen atom, an alkyl group having 1 to 20 carbon atoms, and an aryl group, which optionally contains a hetero atom), and a quaternary ammonium cation or a quaternary phosphonium cation, such as 3,3,3-trifluorocarboxylic acid; 4,4,4,3,3-pentafluorobutanoic acid; 5,5,5,4,4,3,3-heptafluoropentanoic acid; and 3,3-difluoroprop-2-enoic acid.

The above catalyst (1) is preferred from the viewpoint of availability, and the above catalyst (2) is preferred from the viewpoint of safety.

The amount of these catalysts used is preferably 10 ppm by mass or more and 1,000 ppm by mass or less with respect to the mass of the charged diisocyanate. The lower limit value thereof is more preferably 20 ppm by mass, still more preferably 40 ppm by mass, and even more preferably 80 ppm by mass. The upper limit value thereof is more preferably 800 ppm by mass, still more preferably 600 ppm by mass, and even more preferably 500 ppm by mass or less.

Further, the reaction temperature is preferably from 40 to 120°C. The lower limit value of the reaction temperature is more preferably 50°C, and still more preferably 55°C. Further, the upper limit value of the reaction temperature is more preferably 100°C, still more preferably 90°C, and even more preferably 80°C. When the reaction temperature is 40°C or higher, it tends to be possible to maintain a high reaction rate, and when the reaction temperature is 120°C or lower, it tends to be possible to suppress coloration of the polyisocyanate.

(IV) Method for producing polyisocyanate having allophanate group

A polyisocyanate having an allophanate group (allophanate group-containing polyisocyanate) can be obtained by using an alcohol compound or the like in combination with a diisocyanate and using an allophanate-forming reaction catalyst.

The alcohol compound used in the production of the allophanate group-containing polyisocyanate is not limited to the following, but alcohols formed only from carbon, hydrogen, and oxygen are preferred. Further, the alcohol compound preferably has a molecular weight of 200 or less.

Examples of the alcohol compound include a monoalcohol and a dialcohol.

Examples of the monoalcohol include methanol, ethanol, propanol, butanol, pentanol, hexanol, heptanol, octanol, and nonanol.

Examples of the dialcohol include ethylene glycol, 1,3-butanediol, neopentyl glycol and 2-ethylhexanediol.

Any one of these alcohol compounds may be used alone, or two or more types thereof may be used in combination.

Among these, a monoalcohol is preferred as the alcohol compound.

The amount of the alcohol compound to be used is not limited to the following, but the molar ratio between the

isocyanate group of HD1 and the hydroxyl group of the alcohol compound is preferably 1011 or more and 1,000/1 or less, and more preferably 100/1 or more and 1,000/1 or less. When the molar ratio is equal to or more than the above lower limit value, it is possible to secure a more appropriate average number of isocyanate groups in the obtained polyisocyanate.

Examples of the allophanate-forming reaction catalyst include, but are not limited to, an alkyl carboxylic acid salt of tin, lead, zinc, bismuth, zirconium, zirconyl and the like.

Examples of the alkyl carboxylic acid salt of tin (organic tin compound) include tin 2-ethylhexanoate and dibutyltin dilaurate.

Examples of the alkyl carboxylic acid salt of lead (organic lead compound) include lead 2-ethylhexanoate and the like.

Examples of the alkyl carboxylic acid salt of zinc (organic zinc compound) include zinc 2-ethylhexanoate and the like.

Examples of the alkyl carboxylic acid salt of bismuth include bismuth 2-ethylhexanoate and the like.

Examples of the alkyl carboxylic acid salt of zirconium include zirconium 2-ethylhexanoate and the like.

Examples of the alkyl carboxylic acid salt of zirconyl include zirconyl 2-ethylhexanoate and the like.

When the desired yield is reached, the allophanate-forming reaction can be terminated by adding a deactivator of the allophanate-forming reaction catalyst such as phosphoric acid or methyl p-toluenesulfonate.

The amount of the above allophanate-forming reaction catalyst to be used is preferably 10 ppm or more and 10,000 ppm or less, more preferably 10 ppm or more and 1,000 ppm or less, and still more preferably 10 ppm or more and 500 ppm or less, in mass ratio, with respect to the diisocyanate as a raw material.

The lower limit value of the allophanate-forming reaction temperature is preferably 60°C, more preferably 70°C, still more preferably 80°C, and particularly preferably 90°C. On the other hand, the upper limit value of the allophanate-forming reaction temperature is preferably 160°C, more preferably 155°C, still more preferably 150°C, and particularly preferably 145°C.

That is, the allophanate-forming reaction temperature is preferably 60°C or higher and 160°C or lower, more preferably 70°C or higher and 155°C or lower, still more preferably 80°C or higher and 150°C or lower, and particularly preferably 90°C or higher and 145°C or lower.

When the allophanate-forming reaction temperature is equal to or less than the above upper limit value, changes in properties such as coloration of the obtained polyisocyanate can be prevented more effectively.

The lower limit value of the reaction time is preferably 0.2 hours, more preferably 0.4 hours, still more preferably 0.6 hours, particularly preferably 0.8 hours, and most preferably 1.0 hours. On the other hand, the upper limit value of the reaction time is preferably 8 hours or less, more preferably 6 hours, still more preferably 4 hours, particularly preferably 3 hours, and most preferably 2 hours.

That is, the allophanate-forming reaction time is preferably 0.2 hours or more and 8 hours or less, more preferably 0.4 hours or more and 6 hours or less, still more preferably 0.6 hours or more and 4 hours or less, particularly preferably 0.8 hours or more and 3 hours or less, and most preferably 1.0 hours or more and 2 hours or less.

When the allophanate-forming reaction time is equal to or more than the above lower limit value, the viscosity can be further reduced, and when the allophanate-forming reaction time is equal to or less than the above upper limit value, the coloration of the polyisocyanate itself can be further suppressed.

Further, the above isocyanurate-forming reaction catalyst can be used as an allophanate-forming reaction catalyst. When the allophanate-forming reaction is carried out using the isocyanurate-forming reaction catalyst described above, an isocyanurate-type polyisocyanate is also generated at the same time. Among them, from the viewpoint of improving productivity from an economic perspective, it is preferable to carry out the allophanate-forming reaction and the isocyanurate-forming reaction by using the above isocyanurate-forming reaction catalyst as the allophanate-forming reaction catalyst.

Each of the above isocyanurate-forming reaction and the above uretdione-forming reaction can be carried out sequentially or in parallel.

Further, when an allophanate-forming reaction is involved, it is preferable to carry out the isocyanurate-forming reaction and the allophanate-forming reaction in parallel in advance, and then carry out the uretdione-forming reaction, since the production process can be simplified.

The allophanate-forming reaction can be terminated when the desired allophanate group content is reached.

The allophanate-forming reaction can be terminated by adding an acidic compound such as, but not limited to, phosphoric acid, an acidic phosphoric acid ester, sulfuric acid, hydrochloric acid, or a sulfonic acid compound to the reaction solution. As a result, the allophanate-forming reaction catalyst can be deactivated by neutralization, thermal decomposition, chemical decomposition, or the like. After terminating the reaction, filtration is performed if necessary.

(V) Thin film distillation step and heat treatment step

Since the reaction solution immediately after terminating the reaction usually contains unreacted diisocyanate monomers such as HDI, it is preferable to remove them by a thin film evaporator, extraction, or the like.
A thin film distillation step is a step for increasing the efficiency of separating low-boiling components from high-boiling components. Specific examples of countermeasures include reducing the flow rate and extending the residence time, raising the temperature during distillation, increasing the number of wiper revolutions, and increasing the number of times of distillation, and any one of these methods may be selected. Among them, the method of increasing the number of times of distillation is preferred for the purpose of reducing the thermal history and increasing the separation efficiency. The number of times of distillation is preferably 1 or more and 5 or less.
It should be noted that the content of the diisocyanate monomer remaining in the polyisocyanate component is preferably 0.50% by mass or less, more preferably 0.40% by mass or less, still more preferably 0.30% by mass or less, particularly preferably 0.20% by mass or less, and most preferably 0.10% by mass or less.
By setting the content of the diisocyanate monomer remaining in the polyisocyanate component to the above upper limit value or less, the toxicity of the polyisocyanate component can be further reduced and the safety can be further improved. Further, when the content is 0.10% by mass or less, a multilayer coating film having a particularly excellent finished appearance can be obtained.

(Sulfonic acid having active hydrogen group)

In the sulfonic acid having an active hydrogen group used for a polyisocyanate containing a sulfonic acid anion group in the molecule, examples of the active hydrogen group include an amino group, a carboxy group, and a hydroxyl group. Among them, the active hydrogen group is preferably at least one selected from the group consisting of an amino group and a hydroxyl group, and more preferably at least one selected from the group consisting of a hydroxyl group.

(Sulfonic acid (4))

In the case where the active hydrogen group is a hydroxyl group, examples of the sulfonic acid having a hydroxyl group include a compound represented by the following general formula (4) (hereinafter abbreviated as "sulfonic acid (4)"), and the like.

[Chemical Formula 8]

$$HO-R^{41}-SO_3H \quad (4)$$

In the above general formula (4), $R^{41}$ is a hydrocarbon group having 1 to 10 carbon atoms which may contain at least one selected from the group consisting of a hydroxyl group, an ether bond, an ester bond, a carbonyl group, and an imino group. $R^{41}$ may contain a ring structure. The ring structure is an aromatic ring, a 5-membered or 6-membered ring containing two nitrogen atoms, or a 5-membered or 6-membered ring containing a nitrogen atom and an oxygen atom.
**[0147]** - $R^{41}$ In the general formula (4), $R^{41}$ is a hydrocarbon group having 1 to 10 carbon atoms which may contain at least one selected from the group consisting of a hydroxyl group, an ester bond (-COO-), an ether bond (-O-), a carbonyl group (-C(=O)-), an imino group (-NR-), and a ring structure.
The hydrocarbon group having 1 to 10 carbon atoms may be a divalent aliphatic hydrocarbon group having 1 to 10 carbon atoms, or a divalent aromatic hydrocarbon group having 6 to 10 carbon atoms. The divalent aliphatic hydrocarbon group having 1 to 10 carbon atoms is preferably a chain alkylene group having 1 to 6 carbon atoms. In the case of a chain alkylene group having 1 to 6 carbon atoms, it may be a group containing a ring structure as a portion of this chain alkylene group. The alkylene group having 1 to 6 carbon atoms may be linear or branched.
Among them, $R^{41}$ is preferably a chain alkylene group having 1 to 6 carbon atoms, a divalent aromatic hydrocarbon group having 6 to 10 carbon atoms (arylene group), a divalent alkylene group having 1 to 6 carbon atoms and containing an aromatic ring, a divalent alkylene group having 1 to 6 carbon atoms and containing a 5-membered or 6-membered ring containing two nitrogen atoms, or a divalent alkylene group having 1 to 6 carbon atoms and containing a 5-membered or 6-membered ring containing a nitrogen atom and an oxygen atom.
Preferred examples of the sulfonic acid (4) include 2-hydroxyethanesulfonic acid, 3-hydroxypropanesulfonic acid, 4-hydroxybutanesulfonic acid, 5-hydroxypentanesulfonic acid, 6-hydroxyhexanesulfonic acid, hydroxybenzenesulfonic acid, hydroxy(methyl)benzenesulfonic acid, 4-(2-hydroxyethyl)-1-piperazineethanesulfonic acid, 4-(2-hydroxyethyl)-1-piperazinepropanesulfonic acid, and 2-hydroxy-3-morpholinopropanesulfonic acid.

It should be noted that these compounds are merely a part of the preferred sulfonic acids (4), and the preferred sulfonic acids (4) are not limited to these.

In addition, any one of these sulfonic acids (4) may be used alone, or two or more types thereof may be used in combination.

Among them, the sulfonic acid having a hydroxyl group is preferably at least one selected from the group consisting of 2-hydroxyethanesulfonic acid, 3-hydroxypropanesulfonic acid, hydroxybenzenesulfonic acid and hydroxy(methyl)benzenesulfonic acid.

It should be noted that in the case where the base coating composition of the present embodiment contains two or more amine salts of sulfonic acids, the sulfonic acids (4) may be the same as or different from each other.

Further, the sulfonic acid used for the polyisocyanate containing a sulfonic acid anion group in the molecule may form a salt with an amine compound described later.

(Sulfonic acid (5))

In the case where the active hydrogen group is an amino group, examples of the sulfonic acid having an amino group include a compound represented by the following general formula (5) (hereinafter abbreviated as "sulfonic acid (5)") , and the like.

[Chemical Formula 9]

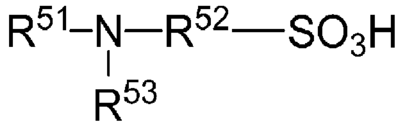

(5)

In the above general formula (5), $R^{51}$ and $R^{53}$ each independently represent a hydrogen atom or a hydrocarbon group having 1 to 12 carbon atoms which may contain a hydroxyl group. At least one of $R^{51}$ and $R^{53}$ is a hydrogen atom. $R^{52}$ is a hydrocarbon group having 1 to 12 carbon atoms which may contain a hydroxyl group.

- $R^{51}$ and $R^{53}$

In the general formula (5), $R^{51}$ and $R^{53}$ each independently represent a hydrogen atom or a hydrocarbon group having 1 to 12 carbon atoms which may contain a hydroxyl group. $R^{51}$ and $R^{53}$ may be the same as or different from each other. At least one of $R^{51}$ and $R^{53}$ is a hydrogen atom. That is, in the case where $R^{51}$ is a hydrocarbon group having 1 to 12 carbon atoms which may contain a hydroxyl group, $R^{53}$ is a hydrogen atom. Further, in the case where $R^{53}$ is a hydrocarbon group having 1 to 12 carbon atoms which may contain a hydroxyl group, $R^{51}$ is a hydrogen atom. In addition, both $R^{51}$ and $R^{53}$ may be hydrogen atoms.

The hydrocarbon group having 1 to 12 carbon atoms may be a monovalent aliphatic hydrocarbon group having 1 to 12 carbon atoms, or a monovalent aromatic hydrocarbon group having 6 to 12 carbon atoms. The monovalent aliphatic hydrocarbon group having 1 to 12 carbon atoms is preferably a chain alkyl group having 1 to 6 carbon atoms or a cyclic alkyl group having 3 to 6 carbon atoms. The chain alkyl group having 1 to 6 carbon atoms may be linear or branched.

Among these, each of $R^{51}$ and $R^{53}$ is preferably a hydrogen atom, a chain alkyl group having 1 to 6 carbon atoms, or a cyclic alkyl group having 3 to 6 carbon atoms.

- $R^{52}$

$R^{52}$ is a hydrocarbon group having 1 to 12 carbon atoms which may contain a hydroxyl group.

The hydrocarbon group having 1 to 12 carbon atoms may be a divalent aliphatic hydrocarbon group having 1 to 12 carbon atoms, or a divalent aromatic hydrocarbon group having 6 to 12 carbon atoms. The divalent aliphatic hydrocarbon group having 1 to 12 carbon atoms is preferably a chain alkylene group having 1 to 12 carbon atoms. The chain alkyl group having 1 to 12 carbon atoms may be linear or branched.

Among these, $R^{52}$ is preferably a divalent chain alkylene group having 1 to 6 carbon atoms or a divalent aromatic

hydrocarbon group (arylene group) having 6 to 10 carbon atoms.

Preferred examples of the sulfonic acid (5) include 2-aminoethanesulfonic acid, 3-aminopropanesulfonic acid, 2-methylaminoethanesulfonic acid, 3-methylaminopropanesulfonic acid, 2-cyclohexylaminoethanesulfonic acid, 3-cyclohexylaminopropanesulfonic acid, 3-cyclohexylaminoisobutylsulfonic acid, 4-cyclohexylaminobutanesulfonic acid, 2-cyclohexylmethylaminoethanesulfonic acid, 3-cyclohexylmethylaminopropanesulfonic acid, 3-cyclohexylmethylaminoisobutylsulfonic acid, 4-cyclohexylmethylaminobutanesulfonic acid, 2-methylcyclohexylaminoethanesulfonic acid, 3-methylcyclohexylaminopropanesulfonic acid, 3-methylcyclohexylaminoisobutylsulfonic acid, 4-methylcyclohexylaminobutanesulfonic acid, 2-dimethylcyclohexylaminoethanesulfonic acid, 3-dimethylcyclohexylaminopropanesulfonic acid, 3-dimethylcyclohexylaminoisobutylsulfonic acid, 4-dimethylcyclohexylaminobutanesulfonic acid, 2-trimethylcyclohexylaminoethanesulfonic acid, 3-trimethylcyclohexylaminopropanesulfonic acid, 3-trimethylcyclohexylaminoisobutylsulfonic acid, 4-trimethylcyclohexylaminobutanesulfonic acid, 2-aminobenzenesulfonic acid, 3-aminobenzenesulfonic acid, 4-aminobenzenesulfonic acid, 2-(methylamino)benzenesulfonic acid, 3-(methylamino)benzenesulfonic acid, 4-(methylamino)benzenesulfonic acid, amino-methylbenzenesulfonic acid, amino-dimethylbenzenesulfonic acid, and aminonaphthalenesulfonic acid.

It should be noted that these compounds are merely a part of the preferred sulfonic acids (5), and the preferred sulfonic acids (5) are not limited to these.

In addition, any one of these sulfonic acids (5) may be used alone, or two or more types thereof may be used in combination.

Among them, the sulfonic acid having an amino group is preferably at least one selected from the group consisting of 2-cyclohexylaminoethanesulfonic acid, 3-cyclohexylaminopropanesulfonic acid, 4-cyclohexylaminobutanesulfonic acid, 3-cyclohexylmethylaminopropanesulfonic acid, 3-(p-methylcyclohexylamino)propanesulfonic acid, 3-(3,3,5-trimethylcyclohexylamino)propanesulfonic acid, 4-(p-methylcyclohexylamino)butanesulfonic acid, 2-aminobenzenesulfonic acid, 2-amino-5-methylbenzenesulfonic acid, 2-amino-3,5-dimethylbenzenesulfonic acid, 5-amino-2-methylbenzenesulfonic acid (4-aminotoluene-2-sulfonic acid), 4-amino-2-methylbenzenesulfonic acid (5-aminotoluene-2-sulfonic acid), and 2-aminonaphthalene-4-sulfonic acid.

It should be noted that in the case where the base coating composition of the present embodiment contains two or more amine salts of sulfonic acids, the sulfonic acids (5) may be the same as or different from each other.

[Amine compound]

The polyisocyanate component (A) contains one or more tertiary ammonium cations of an amine compound represented by the following general formula (1).

It should be noted that the term "tertiary ammonium cation of an amine compound" as used herein refers to a cation protonated by coordination of a proton (H+) to "N" in the amine compound represented by the following general formula (1).

Further, in the polyisocyanate component (A), the amine compound may form a salt with the above sulfonic acid.

[Chemical Formula 10]

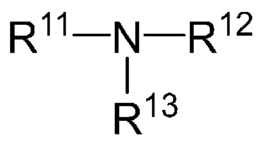

(1)

In the above general formula (1), $R^{11}$, $R^{12}$, and $R^{13}$ each independently represent a hydrocarbon group having 1 to 10 carbon atoms which may contain an ether bond. At least one selected from the group consisting of $R^{11}$, $R^{12}$, and $R^{13}$ may contain a ring structure, and two or more selected from the group consisting of $R^{11}$, $R^{12}$, and $R^{13}$ may be bonded to each other to form a ring structure. The above ring structure is an aromatic ring, a cycloalkyl group having 5 or 6 carbon atoms, a 5-membered ring or 6-membered ring in which $R^{11}$ and $R^{12}$ are bonded to each other, or a multi-membered multi-ring in which $R^{11}$, $R^{12}$, and $R^{13}$ are bonded to each other.

- $R^{11}$, $R^{12}$ and $R^{13}$

$R^{11}$, $R^{12}$, and $R^{13}$ each independently represent a hydrocarbon group having 1 to 10 carbon atoms which may contain an ether bond.

The hydrocarbon group having 1 to 10 carbon atoms may be a monovalent aliphatic hydrocarbon group having 1 to 10 carbon atoms, a monovalent aromatic hydrocarbon group having 6 to 10 carbon atoms, or the like. The monovalent

aliphatic hydrocarbon group having 1 to 10 carbon atoms is preferably a chain alkyl group having 1 to 10 carbon atoms or a cyclic alkyl group having 3 to 10 carbon atoms. In the case of a chain alkyl group having 1 to 10 carbon atoms, it may be a group containing an aromatic hydrocarbon as a portion of this alkyl group. The chain alkyl group having 1 to 10 carbon atoms may be linear or branched.

Examples of preferred amine compounds include N,N-dimethylethylamine, N,N-dimethylpropylamine, N,N-dimethylisopropylamine, N,N-dimethylbutylamine, N,N-dimethylisobutylamine, N,N-dimethyloctylamine, N,N-dimethyl-2-ethylhexylamine, N,N-dimethyllaurylamine, N,N-diethylmethylamine, N,N-diethylbutylamine, N,N-diethylhexylamine, N,N-diethyloctylamine, N,N-diethyl-2-ethylhexylamine, N,N-diethyllaurylamine, N,N-diisopropylmethylamine, N,N-diisopropylethylamine, N,N-diisopropylbutylamine, N,N-diisopropyl-2-ethylhexylamine, N-methyl-dioctylamine, N,N-dimethylallylamine, N-methyldiallylamine, tripropylamine, tripropylamine, tributylamine, N,N-diethylpropylamine, N,N-dibutylpropylamine, N,N-dipropyloctylamine, N,N-dimethylbenzylamine, N,N-diethylbenzylamine, N,N-dibenzylmethylamine, tribenzylamine, N,N-dimethyl-4-methylbenzylamine, N,N-dimethylcyclohexylamine, N,N-diethylcyclohexylamine, N,N-dicyclohexylmethylamine, N,N-dicyclohexylethylamine, tricyclohexylamine, N-methylpyrrolidine, N-ethylpyrrolidine, N-propylpyrrolidine, N-butylpyrrolidine, N-methylpiperidine, N-ethylpiperidine, N-propylpiperidine, N-butylpiperidine, N-methylmorpholine, N-ethylmorpholine, N-propylmorpholine, N-butylmorpholine, N-sec-butylmorpholine, N-tert-butylmorpholine, N-isobutylmorpholine, and quinuclidine. It should be noted that these compounds are merely a part of the preferred amine compounds, and the preferred amine compounds are not limited to these. In addition, any one of these amine compounds may be used alone, or two or more types thereof may be used in combination.

Among them, N,N-dimethylpropylamine, N,N-dimethylbutylamine, N,N-dimethyl-2-ethylhexylamine, N,N-diethylmethylamine, N,N-diisopropylethylamine, N,N-diisopropyl-2-ethylhexylamine, N,N-dimethylallylamine, tripropylamine, tributylamine, N,N-diethylpropylamine, N,N-dibutylpropylamine, N,N-dipropyloctylamine, N,N-dimethylcyclohexylamine, N,N-dicyclohexylmethylamine, N-methylpyrrolidine, N-methylpiperidine, N-ethylpiperidine, N-methylmorpholine, N-ethylmorpholine or N-isobutylmorpholine is preferred.

Further, N,N-dimethylpropylamine, N,N-dimethylbutylamine, N,N-diethylmethylamine, N,N-diisopropylethylamine, tripropylamine, tributylamine, N,N-dipropyloctylamine, N-dimethylcyclohexylamine or N-methylpiperidine is more preferred, and N,N-dimethylpropylamine, N,N-dimethylbutylamine, N,N-diethylmethylamine, N,N-diisopropylethylamine, tripropylamine, tributylamine, or N,N-dipropyloctylamine is most preferred.

[Other amine compounds]

In addition to the tertiary ammonium cations of the above amine compound, the polyisocyanate component (A) may contain tertiary ammonium cations of other amine compounds.

Other amine compounds only need to be those other than the above-mentioned amine compounds, and are not particularly limited. Specific examples of other amine compounds include those shown in (a) to (b) below. In addition, any one of these other amine compounds may be used alone, or two or more types thereof may be used in combination.

(a) Tertiary amines having a chain aliphatic hydrocarbon group such as trimethylamine, N,N-dimethylpentylamine, N,N-dimethylhexylamine, N,N-diethylisopropylamine, N,N-diethylisobutylamine, N,N-dimethylheptylamine, N,N-dimethylnonylamine, N,N-dimethyldecylamine, N,N-dimethylundecylamine, N,N-dimethyldodecylamine, N,N-dimethyltridecylamine, N,N-dimethylstearylamine, N,N-diethylpentylamine, N,N-diethylheptylamine, N,N-diethylnonylamine, N,N-diethyldecylamine, N,N-diethylundecylamine, N,N-diethyldodecylamine, N,N-diethyltridecylamine, N,N-diethylstearylamine, N,N-dibutylmethylamine, N,N-dibutylethylamine, N,N-dibutylpentylamine, N,N-dibutylhexylamine, N,N-dibutylheptylamine, N,N-dibutyloctylamine, N,N-dibutyl-2-ethylhexylamine, N,N-dibutylnonylamine, N,N-dibutyldecylamine, N,N-dibutylundecylamine, N,N-dibutyldodecylamine, N,N-dibutyltridecylamine, N,N-dibutylstearylamine, triamylamine, and trihexylamine can be mentioned.

(b) Tertiary amines having an aromatic hydrocarbon group such as N,N-dimethylphenylamine, N,N-diethylphenylamine, and N,N-diphenylmethylamine can be mentioned.

[Method for producing amine salt of sulfonic acid]

When the above sulfonic acid forms a salt with the above amine compound, that is, in the case of an amine salt of sulfonic acid, it can be obtained, for example, by mixing a sulfonic acid having a hydroxyl group with an amine compound and causing a neutralization reaction.

This neutralization reaction may be performed in advance before reacting with the polyisocyanate. Alternatively, this reaction may be conducted at the same time when reacting with the polyisocyanate. Alternatively, this reaction may be carried out by adding the amine compound after reacting the polyisocyanate with the sulfonic acid having a hydroxyl group.

This neutralization reaction is preferably carried out in advance before reacting with the polyisocyanate.

In this neutralization reaction, a ratio of mixing the sulfonic acid having a hydroxyl group and the amine compound is preferably such that the molar ratio of (sulfonic acid having a hydroxyl group)/(amine compound) is 0.5 or more and 2 or less, and more preferably 0.8 or more and 1.5 or less.
When this neutralization reaction is carried out in advance, the temperature and time can be determined as appropriate depending on the progress of the reaction, but the temperature is usually preferably about 0°C or more and 100°C or less, and the mixing time is preferably about 10 minutes or more and 24 hours or less.
The solvent used in the preparation of the above amine salt of the sulfonic acid having a hydroxyl group is preferably water or a hydrophilic solvent. Examples of the hydrophilic solvent include, but are not particularly limited to, alcohols, ether alcohols, ketones and amide-based solvents. These solvents can be used alone or as a mixture.
Examples of the alcohols include methanol, ethanol, propanol, butanol, and isopropanol.
Examples of the ether alcohols include ethylene glycol monomethyl ether, ethylene glycol monoethyl ether, ethylene glycol monobutyl ether, diethylene glycol monoethyl ether, diethylene glycol monobutyl ether, propylene glycol monomethyl ether, propylene glycol monoethyl ether, and dipropylene glycol monomethyl ether.
Examples of the ketones include acetone, methyl ethyl ketone, and methyl isobutyl ketone.
Examples of the amide-based solvent include N,N-dimethylformamide and N,N-dimethylacetamide.
After the neutralization reaction, it is preferable to remove water or the hydrophilic solvent.

[Characteristics of polyisocyanate component (A)]

In the polyisocyanate component (A), from the viewpoint of emulsifiability and physical properties of the coating film, it is preferable that the isocyanate group is modified by the sulfonic acid having a hydroxyl group in a proportion of 0.25 moles or more and 50 moles or less with respect to 100 moles of isocyanate groups of the raw material polyisocyanate, it is more preferable that the isocyanate group is modified in a proportion of 0.5 moles or more and 20 moles or less, and it is still more preferable that the isocyanate group is modified in a proportion of 1 mole or more and 10 moles or less.
Further, from the viewpoint of solvent resistance of the coating film, the isocyanate group content of the polyisocyanate component (A) is preferably 10% by mass or more and 25% by mass or less, and more preferably 15% by mass or more and 24% by mass or less, when the nonvolatile content is 100% by mass. Although a method for controlling this isocyanate group content within the above range is not particularly limited, examples thereof include a method of adjusting the blending ratio of sulfonic acid and polyisocyanate.
Further, the number average molecular weight of the polyisocyanate (including polyisocyanate containing a sulfonic acid anion group within the molecule and unreacted polyisocyanate) used in the polyisocyanate component (A) is preferably 450 or more and 2,000 or less, more preferably 500 or more and 1,800 or less, and still more preferably 550 or more and 1,550 or less from the viewpoint of solvent resistance of the coating film. Although a method for controlling this number average molecular weight within the above range is not particularly limited, examples thereof include a method of adjusting the blending ratio of sulfonic acid, amine compound, and polyisocyanate.
The number average molecular weight can be measured by gel permeation chromatography (GPC), for example.
Further, the average number of functional groups of the polyisocyanate (including modified polyisocyanate and unreacted polyisocyanate) used in the polyisocyanate component (A) is preferably 1.8 or more and 6.2 or less, more preferably 2.0 or more and 5.6 or less, and still more preferably 2.5 or more and 4.6 or less from the viewpoint of solvent resistance of the coating film and the viewpoint of isocyanate group retention rate. Although a method for controlling this average number of functional groups within the above range is not particularly limited, examples thereof include a method of adjusting the blending ratio of sulfonic acid, amine compound, and polyisocyanate.
It should be noted that the isocyanate group content, the nonvolatile content, and the average number of functional groups can be measured by a method described in Examples below.

(Other components)

The polyisocyanate component (A) is a composition containing the above-mentioned polyisocyanate containing a sulfonic acid anion group within the molecule, unreacted polyisocyanate, and the tertiary ammonium cation of the amine compound (1). The base coating composition of the present embodiment may contain other components in addition to the above-mentioned polyisocyanate containing a sulfonic acid anion group within the molecule, unreacted polyisocyanate, and the tertiary ammonium cation of the amine compound (1).
Although other components are not particularly limited, examples thereof include a solvent, an antioxidant, a light stabilizer, a polymerization inhibitor, and a surfactant.
The solvent used for the polyisocyanate component (A) may be a hydrophilic solvent or a hydrophobic solvent. These solvents can be used alone or as a mixture.
Although the hydrophobic solvent is not particularly limited, examples thereof include mineral spirits, solvent naphtha, LAWS (Low Aromatic White Spirit), HAWS (High Aromatic White Spirit), toluene, xylene, cyclohexane, esters,

ketones and amides.

Examples of the esters include ethyl acetate and butyl acetate.

Examples of the ketones include acetone, methyl ethyl ketone, methyl isobutyl ketone, and cyclohexanone.

Examples of the amides include N,N-dimethylformamide and N,N-dimethylacetamide.

Although the hydrophilic solvent is not particularly limited, examples thereof include alcohols, ethers, and esters of ether alcohols.

Examples of the alcohols include methanol, ethanol, propanol, isopropanol, and 2-ethylhexanol.

Examples of the ethers include diethylene glycol dimethyl ether, diethylene glycol diethyl ether, diethylene glycol dibutyl ether, and dipropylene glycol dimethyl ether.

Examples of the esters of ether alcohols include ethylene glycol monomethyl ether acetate, ethylene glycol monoethyl ether acetate, ethylene glycol monobutyl ether acetate, diethylene glycol monoethyl ether acetate, diethylene glycol monobutyl ether acetate, propylene glycol monoethyl ether acetate, and propylene glycol monomethyl ether acetate and dipropylene glycol monomethyl ether acetate.

In the polyisocyanate component (A), the content of the solvent is preferably 0% by mass or more and 90% by mass or less, more preferably 0% by mass or more and 50% by mass or less, and still more preferably 0% by mass or more and 30% by mass or less with respect to the total mass of the base coating composition.

Further, from the viewpoint of global environmental protection, the content of the solvent in the polyisocyanate component (A) is preferably 0% by mass.

Examples of the antioxidant and the light stabilizer include those shown in the following (a) to (e), and the like. Any one of these may be contained alone, or two or more of them may be contained.

(a) Aliphatic, aromatic or alkyl group-substituted aromatic esters of phosphoric acid or phosphorous acid and hypophosphorous acid derivatives.

(b) Phosphorus compounds such as phenylphosphonic acid, phenylphosphinic acid, diphenylphosphonic acid, polyphosphonate, dialkyl pentaerythritol diphosphite, and dialkyl bisphenol A diphosphite.

(c) Phenol derivatives (especially hindered phenol compounds).

(d) Compounds containing sulfur such as thioether-based compounds, dithioic acid salt-based compounds, mercaptobenzimidazole-based compounds, thiocarbanilidebased compounds, and thiodipropionic acid esters.

(e) Tin-based compounds such as tin malate and dibutyltin monoxide.

Examples of the polymerization inhibitor include hydroquinones, phenols, cresols, catechols, and benzoquinones. Specific examples of the polymerization inhibitor include benzoquinone, p-benzoquinone, p-toluquinone, p-xyloquinone, naphthoquinone, 2,6-dichloroquinone, hydroquinone, trimethylhydroquinone, catechol, p-t-butylcatechol, 2,5-di-t-butylhydroquinone, monomethylhydroquinone, p-methoxyphenol, 2,6-di-t-butyl-p-cresol, and hydroquinone monomethyl ether. Any one of these may be contained alone, or two or more of them may be contained.

Examples of the surfactant include known anionic surfactants, cationic surfactants, and amphoteric surfactants.

In the polyisocyanate component (A), the total content of the antioxidant, the light stabilizer, the polymerization inhibitor, and the surfactant is preferably 0% by mass or more and 10% by mass or less, more preferably 0% by mass or more and 5% by mass or less, and still more preferably 0% by mass or more and 2% by mass or less with respect to the total mass of the base coating composition.

«Method for producing polyisocyanate component (A)»

A method for producing the base coating composition of the present embodiment preferably includes, for example, the following step (1) or (2).

(1) A step of mixing and reacting an amine salt of a sulfonic acid having an active hydrogen group with a polyisocyanate.

(2) A step of mixing and reacting a sulfonic acid having an active hydrogen group, a polyisocyanate, and the above amine compound.

In the step (1), the amine salt of sulfonic acid is preferably prepared in advance and then added to the polyisocyanate.

Further, in the step (2), the sulfonic acid having an active hydrogen group and the amine compound may be added to the polyisocyanate simultaneously or sequentially.

Among these, the step (1) is preferred, and it is more preferable that the amine salt of sulfonic acid is prepared in advance and then added to the polyisocyanate.

In this reaction step, from the viewpoints of emulsifiability and coating film physical properties, the mixing ratio

of the sulfonic acid having an active hydrogen group or the amine salt thereof and the polyisocyanate is, in a molar ratio of isocyanate group/hydroxyl group or amino group, preferably in the range of 2 or more and 400 or less, more preferably in the range of 5 or more and 200 or less, and still more preferably in the range of 10 or more and 100 or less.

In this reaction step, although the reaction temperature and the reaction time can be appropriately determined in accordance with the progress of the reaction, the reaction temperature is preferably 0°C or higher and 150°C or lower, and the reaction time is preferably 30 minutes or more and 48 hours or less.

In addition, in this reaction step, a known ordinary catalyst may be used depending on the case. Although the catalyst is not particularly limited, examples thereof include those shown in the following (a) to (f). These may be used alone or as a mixture.

(a) Organotin compounds such as tin octanoate, tin 2-ethyl-1-hexanoate, tin ethyl caproate, tin laurate, tin palmitate, dibutyltin oxide, dibutyltin dichloride, dibutyltin diacetate, dibutyltin dimaleate, dibutyltin dilaurate, dioctyltin diacetate, and dioctyltin dilaurate.
(b) Organozinc compounds such as zinc chloride, zinc octanoate, zinc 2-ethyl-1-hexanoate, zinc 2-ethylcaproate, zinc stearate, zinc naphthenate, and zinc acetylacetonate.
(c) Organotitanium compounds.
(d) Organozirconium compounds.
(e) Tertiary amines such as triethylamine, tributylamine, N,N-diisopropylethylamine, and N,N-dimethylethanolamine.
(f) Diamines such as triethylenediamine, tetramethylethylenediamine, and 1,4-diazabicyclo [2.2.2] octane.

In the method for producing the polyisocyanate component (A), a solvent may or may not be used. The solvent used in the method for producing the polyisocyanate component (A) may be a hydrophilic solvent or a hydrophobic solvent. As the hydrophilic solvent and the hydrophobic solvent, the same as those exemplified above for the other components can be mentioned.

Further, in the method for producing the polyisocyanate component (A), in addition to a sulfonic acid having a hydroxyl group, a polyisocyanate, and an amine compound, at least one selected from the group consisting of an antioxidant, a light stabilizer, a polymerization inhibitor, and a surfactant may be further added. As the antioxidant, the light stabilizer, the polymerization inhibitor and the surfactant, the same as those exemplified above for the other components can be mentioned.

Examples of the production method when the above polyisocyanate component contains a reaction product with an alcohol include the following methods (4) to (6).

(4) A method of collectively reacting a polyisocyanate with an alcohol and an amine salt of a sulfonic acid having an active hydrogen group (or a sulfonic acid having an active hydrogen group and the above amine compound).
(5) A method of reacting a polyisocyanate with an alcohol and an amine salt of a sulfonic acid having an active hydrogen group (or a sulfonic acid having an active hydrogen group and the above amine compound), and then mixing another polyisocyanate.
(6) A method of separately producing a reaction product (E) of a polyisocyanate and an alcohol and a reaction product (F) of a polyisocyanate and an amine salt of a sulfonic acid having an active hydrogen group (or a sulfonic acid having an active hydrogen group and the above amine compound), and mixing the reaction product (E) and the reaction product (F) at a desired mass ratio.

Among the above methods (4) to (6), the method (4) or (5) is preferred from the viewpoints of shortening the production process and production time and obtaining a base coating composition with stable physical properties, and the method (5) is more preferred in view of further suppressing dilution turbidity and achieving alkali resistance.

Furthermore, it is more preferable to react the amine salt of a sulfonic acid having an active hydrogen group with the polyisocyanate and the alcohol because dilution turbidity and low-temperature turbidity are less likely to occur.

For the reaction between the polyisocyanate, the alcohol and the sulfonic acid having an active hydrogen group or an amine salt thereof, an organic metal salt, a tertiary amine-based compound, or an alkali metal alcoholate may be used as a catalyst. Examples of the metal constituting the organic metal salt include tin, zinc, and lead. Examples of the alkali metal include sodium and the like.

The reaction temperature between the polyisocyanate, the alcohol, and the sulfonic acid having an active hydrogen group or an amine salt thereof is preferably - 20°C or higher and 150°C or lower, and more preferably 30°C or higher and 130°C or lower. When the reaction temperature is equal to or higher than the above lower limit value, the reactivity tends to be higher. Further, when the reaction temperature is equal to or lower than the above upper limit value, side reactions tend to be suppressed more effectively.

It is preferable to completely react the alcohol and the sulfonic acid having an active hydrogen group or its amine salt with the polyisocyanate so that they do not remain in an unreacted state. When they do not remain in an

unreacted state, the water dispersibility of the polyisocyanate component (A) and the pot life of the base coating composition tend to be better.

When the sulfonic acid has a hydroxyl group, the method for producing the polyisocyanate component (A) preferably includes the above-mentioned step (1) or (2).

Among these, the step (1) is preferred, and it is more preferable that the amine salt of sulfonic acid is prepared in advance and then added to the polyisocyanate.

«Hydroxyl group-containing resin component»

Although the hydroxyl group-containing resin component in the base coating composition of the present embodiment is not particularly limited, examples thereof include acrylic resins, polyester resins, polyether resins, epoxy resins, fluororesins, polyurethane resins, polyvinylidene chloride copolymers, polyvinyl chloride copolymers, vinyl acetate copolymers, acrylonitrile butadiene copolymers, polybutadiene copolymers, and styrene butadiene copolymers.

Among them, acrylic resins, polyurethane resins or polyester resins are preferred as the resins.

Examples of the acrylic resin include water-soluble acrylic resins having a weight average molecular weight of 5,000 to 100,000, preferably 10,000 to 90,000, and more preferably 20,000 to 80,000, and acrylic resin emulsions having a weight average molecular weight of 50,000 or more, preferably 75,000 or more, and more preferably 100,000 or more, which are obtained by copolymerizing a monomer mixture composed of a hydroxyl group-containing polymerizable unsaturated monomer, a hydrophilic group-containing polymerizable unsaturated monomer such as a carboxyl group-containing polymerizable unsaturated monomer, and other polymerizable unsaturated monomers.

Examples of the hydroxyl group-containing polymerizable unsaturated monomer include hydroxyalkyl esters of acrylic acid or methacrylic acid such as 2-hydroxyethyl (meth)acrylate, 2- or 3-hydroxypropyl (meth)acrylate, and 4-hydroxybutyl (meth)acrylate; polyethylene glycol (meth)acrylate, and polypropylene glycol (meth)acrylate, and any one of these can be used alone or two or more types thereof can be used in combination.

Examples of the carboxyl group-containing polymerizable unsaturated monomer include (meth)acrylic acid, crotonic acid, maleic acid, fumaric acid, itaconic acid, and half monoalkyl esters of dicarboxylic acids among these, and examples of other hydrophilic group-containing polymerizable unsaturated monomers include polyalkylene chain-containing polymerizable unsaturated monomers such as polyethylene glycol (meth)acrylate and polypropylene glycol (meth)acrylate.

Examples of the above other polymerizable unsaturated monomers include alkyl esters or cycloalkyl esters of (meth)acrylic acids having 1 to 24 carbon atoms such as methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, 2-ethylhexyl (meth)acrylate, cyclohexyl (meth)acrylate, lauryl (meth)acrylate, and isobornyl (meth)acrylate; hydroxyalkyl esters of (meth)acrylic acids such as 2-hydroxyethyl (meth)acrylate, 2- or 3-hydroxypropyl (meth)acrylate, and 4-hydroxybutyl (meth)acrylate; glycidyl (meth)acrylate, acrylonitrile, acrylamide, styrene, vinyltoluene, vinyl acetate, vinyl chloride, and 1,6-hexanediol diacrylate, and any one of these can be used alone or two or more types thereof can be used in combination.

Copolymerization of the above monomer mixture can be carried out by a method known per se, for example, it can be carried out by a solution polymerization method or the like when a water-soluble acrylic resin is desired, and it can be carried out by an emulsion polymerization method or the like when an acrylic resin emulsion is desired.

When the acrylic resin is an acrylic resin emulsion obtained by emulsion polymerization, it may be a multilayer structured particulate emulsion obtained by multi-stage emulsion polymerization of a monomer mixture in the presence of water and an emulsifier.

The carboxyl group of the acrylic resin can be neutralized using the above-mentioned basic substance, if necessary.

It is preferable that the contained acrylic resin generally has an acid value within the range of 10 to 100 mgKOH/g, more preferably 15 to 80 mgKOH/g, and particularly preferably 20 to 60 mgKOH/g, and generally has a hydroxyl value within the range of 10 to 250 mgKOH/g, more preferably 20 to 200 mgKOH/g, and particularly preferably 30 to 150 mgKOH/g.

Polyester resins include those obtained by neutralization of polyester resins usually prepared by esterification using polyhydric alcohols and polybasic acids, and if required, monobasic acids, oil components (including fatty acids thereof), and the like. The weight average molecular weight of this polyester resin is generally in the range of about 3,000 to 100,000, preferably from 4,000 to 70,000, and more preferably from 5,000 to 30,000.

Examples of the above polyhydric alcohol include ethylene glycol, diethylene glycol, propylene glycol, butanediol, pentanediol, hexanediol, 2,2-dimethylpropanediol, glycerin, trimethylolpropane, pentaerythritol, and ethylene oxide adducts and propylene oxide adducts of bisphenol compounds, and any one of these can be used alone or two or more types thereof can be used in combination.

Examples of the polybasic acid include phthalic acid, isophthalic acid, tetrahydrophthalic acid, hexahydrophthalic

acid, maleic acid, succinic acid, adipic acid, sebacic acid, trimellitic acid, pyromellitic acid and anhydrides thereof, and any one of these can be used alone or two or more types thereof can be used in combination. Further, examples of the monobasic acid include benzoic acid and t-butylbenzoic acid, and examples of the oil component include castor oil, dehydrated castor oil, safflower oil, soybean oil, linseed oil, tall oil, coconut oil, and fatty acids thereof, and any one of these can be used alone or two or more types thereof can be used in combination.

In the above polyester resin, the introduction of carboxyl groups can be carried out by, for example, a combined use of polybasic acids such as trimellitic acid or pyromellitic acid having 3 or more carboxyl groups within one molecule as a part of the polybasic acid components, or by an addition of dicarboxylic acid by half-esterification. In addition, the introduction of hydroxyl groups can be easily performed by, for example, a combined use of polyhydric alcohols such as glycerin and trimethylolpropane having 3 or more hydroxyl groups within one molecule as a part of the polyhydric alcohol components.

The carboxyl group of the above polyester resin can be neutralized using a basic substance. The basic substance is preferably water-soluble and examples thereof include ammonia, methylamine, ethylamine, propylamine, butylamine, dimethylamine, trimethylamine, triethylamine, ethylenediamine, morpholine, methylethanolamine, dimethylethanolamine, diethanolamine, triethanolamine, diisopropanolamine, and 2-amino-2-methylpropanol, and any one of these can be used alone or two or more types thereof can be used in combination.

It is preferable that the polyester resin generally has an acid value within the range of 10 to 100 mgKOH/g, more preferably 20 to 80 mgKOH/g, and particularly preferably 20 to 50 mgKOH/g, and generally has a hydroxyl value within the range of 10 to 300 mgKOH/g, more preferably 30 to 200 mgKOH/g, and particularly preferably 50 to 200 mgKOH/g.

As the polyurethane resin, a hydrophilic polyurethane resin that can be dissolved or dispersed in water can be suitably used, and for example, an aqueous dispersion of a self-emulsifying urethane resin having an average particle size of 0.001 to 1.0 μm, particularly about 0.02 to 0.3 μm is preferred, which can be obtained by means of chain elongation and emulsification, after or during neutralization, of a urethane prepolymer obtained by reacting: (i) an aliphatic and/or alicyclic diisocyanate, (ii) a diol having a number average molecular weight of 500 to 5,000, (iii) a low molecular weight polyhydroxyl compound, and (iv) a dimethylol alkanoic acid with each other by a oneshot method or a multi-stage method in an NCO/OH equivalent ratio generally within a range of 1/0.5 to 1/0.95, particularly 1/0.6 to 1/0.9; and particularly of which a part or all of the organic solvent used in the production process has been distilled.

It is preferable that the polyurethane resin generally has an acid value within the range of 10 to 60 mgKOH/g, more preferably 20 to 50 mgKOH/g, and particularly preferably 20 to 40 mgKOH/g, and generally has a hydroxyl value within the range of 10 to 60 mgKOH/g, more preferably 20 to 50 mgKOH/g, and particularly preferably 20 to 40 mgKOH/g.

Examples of the polyether resins include those obtained using any one of the following methods (1) to (3) and the like.

(1) Polyether polyols or polytetramethylene glycols obtained by adding a single alkylene oxide or a mixture of alkylene oxides to a single polyhydric alcohol or a mixture of polyhydric alcohols.

(2) Polyether polyols obtained by reacting a polyfunctional compound with an alkylene oxide.

(3) So-called polymer polyols obtained by polymerizing acrylamide or the like using the polyether polyols obtained in (1) or (2) as a medium.

Examples of the polyhydric alcohol include glycerin and propylene glycol.

Examples of the alkylene oxide include ethylene oxide and propylene oxide.

Examples of the polyfunctional compound include ethylenediamine and ethanolamines.

Examples of the epoxy resins include epoxy resins such as novolac type epoxy resins, β-methyl epichloro type epoxy resins, cyclic oxirane type epoxy resins, glycidyl ether type epoxy resins, glycol ether type epoxy resins, epoxy type unsaturated aliphatic compounds, epoxidized fatty acid esters, ester type polycarboxylic acids, aminoglycidyl type epoxy resins, halogenated epoxy resins and resorcinol type epoxy resins, and resins obtained by modifying these epoxy resins with amino compounds, polyamide compounds and the like.

Examples of the fluorine-containing resins include copolymers of fluoroolefins, cyclohexyl vinyl ethers, hydroxyalkyl vinyl ethers, monocarboxylic acid vinyl esters and the like disclosed in Reference Document 1 (Japanese Unexamined Patent Application, First Publication No. Sho 57-34107), Reference Document 2 (Japanese Unexamined Patent Application, First Publication No. Sho 61-275311) and the like.

[Method for producing base coating composition]

The base coating composition of the present invention can be obtained by mixing the above-described polyisocyanate component (A), the hydroxyl group-containing resin component, and, if necessary, various additive components or the like using a known method.

For example, various additives are added to the hydroxyl group-containing resin component, or an aqueous dispersion or solution thereof, as necessary. Subsequently, the above polyisocyanate component (A) or an aqueous dispersion thereof is added as a curing agent, and if necessary, water or a solvent is further added thereto to adjust the viscosity. Then, a base coating composition can be obtained by forcibly stirring with a stirring device.

(NCO/OH ratio)

The isocyanate group in the polyisocyanate component is preferably contained in a ratio of 1.1 to 2.0 equivalents, more preferably contained in a ratio of 1.3 to 2.0 equivalents, and most preferably contained in a ratio of 1.5 to 1.9 equivalents, with respect to 1 equivalent of hydroxyl groups in the hydroxyl group-containing resin component, from the viewpoint of low-temperature curability.

(Other components)

If necessary, the base coating composition of the present invention can suitably contain additives for coating materials such as pigments including color pigments and extender pigments, a curing agent other than the polyisocyanate component such as a melamine resin (for example, a complete alkyl type, a methylol type alkyl, an imino group type alkyl, or the like), a curing catalyst, a thickener, an ultraviolet absorber, a light stabilizer, an antifoaming agent, a plasticizer, an organic solvent, a surface conditioner, and an antisettling agent.

The base coating composition of the present invention can be applied onto an object to be coated by a method known per se, for example, air spray coating, airless spray coating, rotary atomizing coating, curtain coating or the like, and static electricity may be applied. Among these, methods such as air spray coating and rotary atomizing coating are preferred. The coating amount is preferably such that the cured film thickness is usually from 10 to 50 $\mu$m, and preferably from 10 to 40 $\mu$m.

<Multilayer coating film laminate>

One example of the multilayer coating film laminate of the present embodiment is a multilayer coating film laminate in which a first coating film and a second coating film are laminated in this order.

Another example of the multilayer coating film laminate of the present embodiment is a multilayer coating film laminate in which a first coating film, a second coating film and a third coating film are laminated in this order.

In the multilayer coating film laminate of the present embodiment, the first coating film is formed from the base coating composition of the present embodiment described above. The second coating film is formed from a coating material composition containing a hydroxyl group-containing resin component. The third coating film is formed from a two-component coating material composition containing a hydroxyl group-containing resin component and a polyisocyanate component.

A method for forming the multilayer coating film laminate of the present embodiment preferably includes: a step of applying the above-mentioned base coating composition as a first coating material composition onto an object to be coated to obtain a first coating film; and a step of laminating one or more coating films on the obtained first coating film.

The first coating material composition (in other words, the base coating composition described above) and the coating material composition for forming the second coating film may have the same or different compositions. In the present embodiment, the first coating material composition (in other words, the base coating composition described above) and the coating material composition for forming the second coating film preferably have different compositions from the viewpoint of improving the color tone of the multilayer coating film laminate.

A method for forming the multilayer coating film laminate of the present embodiment preferably includes: a step of applying the above-mentioned base coating composition as a first coating material composition onto an object to be coated to obtain a first coating film; a step of applying a second coating material composition onto the obtained first coating film to obtain a second coating film; and a step of applying a third coating material composition onto the obtained second coating film to obtain a third coating film.

One aspect of the method for forming a multilayer coating film laminate of the present embodiment includes: a step of applying the above-mentioned base coating composition as a first coating material composition onto an object to be coated to obtain a first uncured coating film; a step of applying a second coating material composition onto the obtained first uncured coating film to obtain a second uncured coating film; and a step of applying a third coating material composition onto the obtained second uncured coating film to obtain a third uncured coating film.

In one aspect of the method for forming a multilayer coating film laminate of the present embodiment, a step of simultaneously curing the first uncured coating film, the second uncured coating film, and the third uncured coating film by heating at 40°C or higher and 140°C or lower to form a multilayer coating film laminate composed of three layers of a first coating film, a second coating film, and a third coating film is included.

By using the above-mentioned base coating composition as the first coating material composition, even when cured at a low temperature of 40°C or higher and 140°C or lower, a multilayer coating film laminate excellent in hardness, water resistance, and chipping resistance can be produced.

When a third uncured coating film is laminated on the first uncured coating film and the second uncured coating film, a portion of the components in the third coating material composition is transferred to the first uncured coating film and the second uncured coating film, and the polyisocyanate component is transferred in the first uncured coating film and the second uncured coating film from the third uncured coating film side toward the object side to be coated while forming a concentration gradient. For this reason, the adhesion between the first uncured coating film, the second uncured coating film, and the third uncured coating film is improved.

Furthermore, when the object to be coated is an uncured coating film, the first coating material composition and the second coating material composition are transferred to the uncured coating film as an object to be coated, and a precoat layer is formed on the surface of the object to be coated. The hydroxyl group-containing resin component is also present in the precoat layer. For this reason, the first uncured coating film and the second uncured coating film are cured with the precoat layer interposed therebetween in closer contact with the object to be coated. Furthermore, it is preferable that the polyisocyanate component transferred from the third uncured coating film via the first uncured coating film and the second uncured coating film is also present in the precoat layer, and by collectively curing the precoat layer, the first uncured coating film, the second uncured coating film, and the third uncured coating film in the presence of the polyisocyanate component, the adhesion between the coating films can be further enhanced.

Here, the uncured coating film as an object to be coated preferably contains a polyol as a main agent and further contains a melamine-based curing agent. Examples of the melamine-based curing agent include the same materials as those described in "Melamine-based curing agent" described below.

As a method for forming the first uncured coating film, the second uncured coating film and the third uncured coating film, for example, they can be formed by laminating the first coating material composition, the second coating material composition and the third coating material composition, respectively, on an object to be coated such as a base material or a coating film using a method such as roll coating, curtain flow coating, spray coating, bell coating, or electrostatic coating.

In the formation method of the present embodiment, after obtaining the third uncured coating film, the lower limit value of the heating temperature for simultaneously curing the first uncured coating film, the second uncured coating film, and the third uncured coating film is preferably 40°C, more preferably 60°C, and most preferably 80°C. Further, the upper limit value of the heating temperature is preferably 140°C, and more preferably 120°C.

The lower limit value of the heating time is preferably 10 minutes, and more preferably 15 minutes. Further, the upper limit value of the heating time is preferably 40 minutes, and more preferably 35 minutes.

By setting the heating temperature and heating time within the above ranges, the curability of the multilayer coating film and the yellowing resistance of the multilayer coating film are further improved.

In the formation method of the present embodiment, after obtaining the first uncured coating film and the second uncured coating film, or before applying the first uncured coating film and the second uncured coating film using an uncured coating film as a base material, a short period of preheating can be performed. This preheating is a step of low temperature/short time drying at about 70°C or higher and 80°C or lower for about 1 minute or more and 5 minutes or less, and can be performed under conditions in which the first uncured coating film and the second uncured coating film are not cured.

In one aspect of the method for forming the multilayer coating film laminate of the present embodiment, the first coating material composition, the second coating material composition, and the third coating material composition preferably have different compositions from each other.

Each of the first coating film, the second coating film, and the third coating film may be composed of only one layer, or may be composed of two or more layers.

Further, the third coating film is, for example, a polyurethane resin coating film.

For the first coating film, the second coating film, and the third coating film, the lower limit value of the film thickness after curing is preferably 10 μm, and more preferably 15 μm. On the other hand, the upper limit value of the film thickness after curing is preferably 60 μm, and more preferably 50 μm. When the film thickness after curing is within the above range, the durability of the multilayer coating film laminate can be further improved.

(Second coating material composition and third coating material composition)

The second coating material composition is, for example, a coating material composition containing a hydroxyl group-containing resin component. The hydroxyl group-containing resin component described above can be used as the hydroxyl group-containing resin component of the second coating material composition.

The second coating material composition may further contain a polyisocyanate component (C). For the polyisocyanate component (C), for example, the polyisocyanate component (A) described above or a polyisocyanate component

(B) described later can be used.

It is preferable that the second coating material composition further contains a blocked polyisocyanate component (D).

The blocked polyisocyanate component (D) can be obtained, for example, by reacting the polyisocyanate component (C) with a blocking agent.

It is presumed that by including the blocked polyisocyanate component (D) in the second coating material composition, it becomes difficult for the curing agent or the like to be transferred from the first coating material composition to the second coating material composition, and the orientation of the pigment contained in the second coating material composition is less likely to be disturbed, so that the finished appearance of the multilayer coating film is improved.

The polyisocyanate component used in the blocked polyisocyanate component (D) is preferably derived from a diisocyanate and a polyol having an average number of functional groups of 3.0 or more and 8.0 or less. This makes it possible to increase the average number of isocyanate groups in the polyisocyanate. In this polyisocyanate, a urethane group is formed by the reaction between the hydroxyl group of the polyol and the isocyanate group of the diisocyanate monomer.

The average number of isocyanate functional groups of the polyisocyanate is preferably 2 or more from the viewpoint of improving the low-temperature curability when forming a resin film, and more preferably 3 or more and 20 or less, still more preferably 3.2 or more and 10 or less, particularly preferably 3.5 or more and 8 or less, and most preferably 4.2 or more and 6 or less, from the viewpoint of achieving both the low-temperature curability and the compatibility when forming a resin film.

The average number of functional groups in the polyol used in the blocked polyisocyanate component (D) is preferably 3.0 or more and 8.0 or less, more preferably 3 or more and 6 or less, still more preferably 3 or more and 5 or less, and particularly preferably 3 or 4. It should be noted that the average number of functional groups in the polyol referred to here is the number of hydroxyl groups present in one molecule of the polyol.

The number average molecular weight of the polyol used in the blocked polyisocyanate component is preferably 100 or more and 1,000 or less, more preferably 100 or more and 900 or less, still more preferably 100 or more and 600 or less, still more preferably 100 or more and 570 or less, still more preferably 100 or more and 500 or less, still more preferably 100 or more and 400 or less, particularly preferably 100 or more and 350 or less, and most preferably 100 or more and 250 or less, from the viewpoint of improving the coating film hardness and strength.

When the number average molecular weight of the polyol is within the above range, the blocked polyisocyanate component (D) is excellent in low-temperature curability when formed into a resin film, and is particularly excellent in hardness and strength. The number average molecular weight Mn of the polyol is, for example, a number average molecular weight based on polystyrene measured by GPC.

Examples of such polyols include trimethylolpropane, glycerol, and polycaprolactone polyols derived from trihydric or higher polyhydric alcohols and ε-caprolactone.

Examples of commercially available products of the polycaprolactone polyol include "Placcel 303" (number average molecular weight: 300), "Placcel 305" (number average molecular weight: 550), "Placcel 308" (number average molecular weight: 850) and "Placcel 309" (number average molecular weight: 900) manufactured by Daicel Corporation.

Although the blocking agent used in the blocked polyisocyanate component (D) is not particularly limited, specific examples thereof include compounds having one active hydrogen within the molecule.

Examples of such blocking agents include alcohol-based compounds, alkylphenol-based compounds, phenol-based compounds, active methylene-based compounds, mercaptan-based compounds, acid amide-based compounds, acid imidebased compounds, imidazole-based compounds, urea-based compounds, oxime-based compounds, amine-based compounds, imine-based compounds, pyrazole-based compounds, and triazole-based compounds. Any one of these blocking agents may be used alone, or two or more types thereof may be used in combination.

Among these, from the viewpoint of improving the low-temperature curability, active methylene-based compounds, imidazole-based compounds, or pyrazole-based compounds are preferred, and active methylene-based compounds are more preferred.

The active methylene-based compound preferably includes a malonic acid ester having a secondary alkyl group or a malonic acid ester having a primary alkyl group, and a malonic acid ester having a tertiary alkyl group, and more preferably includes a malonic acid ester having a secondary alkyl group and a malonic acid ester having a tertiary alkyl group. The blocking agent may contain each one of a malonic acid ester having a secondary alkyl group, a malonic acid ester having a primary alkyl group and a malonic acid ester having a tertiary alkyl group, or may contain two or more types thereof in combination.

The malonic acid ester having a primary alkyl group is not particularly limited, but examples thereof include dimethyl malonate, diethyl malonate, dipropyl malonate, dibutyl malonate, dicyclohexyl malonate and diphenyl malonate. Among these, diethyl malonate is preferred as the malonic acid ester having a primary alkyl group.

The malonic acid ester having a secondary alkyl group is not particularly limited, but examples thereof include di-sec-butyl malonate, diisopropyl malonate and isopropylethyl malonate. Among these, diisopropyl malonate is preferred

as the malonic acid ester having a secondary alkyl group.

The malonic acid ester having a tertiary alkyl group is not particularly limited, but examples thereof include di-tert-butyl malonate, di(2-methyl-2-butyl) malonate, di(2-methyl-2-pentyl) malonate, (tert-butyl)ethyl malonate, (2-methyl-2-butyl)ethyl malonate, (2-methyl-2-butyl)isopropyl malonate, (2-methyl-2-pentyl)ethyl malonate, (2-methyl-2-pentyl)isopropyl malonate and (2-methyl-2-pentyl)hexylisopropyl malonate. Among them, di(2-methyl-2-butyl) malonate, di(2-methyl-2-pentyl) malonate, (2-methyl-2-butyl)isopropyl malonate, (2-methyl-2-pentyl)ethyl malonate and (2-methyl-2-pentyl)isopropyl malonate are preferred, (2-methyl-2-butyl)ethyl malonate, (2-methyl-2-butyl)isopropyl malonate, (2-methyl-2-pentyl)ethyl malonate and (2-methyl-2-pentyl)hexylisopropyl malonate are preferred, or di-tert-butyl malonate, (2-methyl-2-butyl)isopropyl malonate or (2-methyl-2-pentyl)isopropyl malonate is preferred.

A commercially available malonic acid ester having a tertiary alkyl group may be used, or a malonic acid ester having a tertiary alkyl group which is synthesized using the method of Reference Document 1 (Japanese Unexamined Patent Application, First Publication No. Hei 11-130728) may be used.

The blocking agent used in the blocked polyisocyanate component (D) may further contain other blocking agents within a range that does not impair the storage stability when formed into a resin composition and the low-temperature curability when formed into a resin film, in addition to the malonic acid ester having a primary alkyl group, the malonic acid ester having a secondary alkyl group, and the malonic acid ester having a tertiary alkyl group.

It is preferable that the blocked polyisocyanate component (D) contains a structural unit represented by a general formula (1). In the following description, the structural unit represented by the general formula (I) may be referred to as a "structural unit (I)".

It is presumed that by including the "structural unit (I)", the low-temperature curability of the second coating material composition is improved, it becomes difficult for the curing agent to be transferred from the first coating material composition to the second coating material composition, the orientation of the pigment contained in the second coating material composition is less likely to be disturbed, and the finished appearance of the multilayer coating film is improved.

[Structural unit (I)]

The blocked polyisocyanate contained in the blocked polyisocyanate component (D) contains a structural unit (I) represented by the following general formula (I) within the molecule.

[Chemical Formula 11]

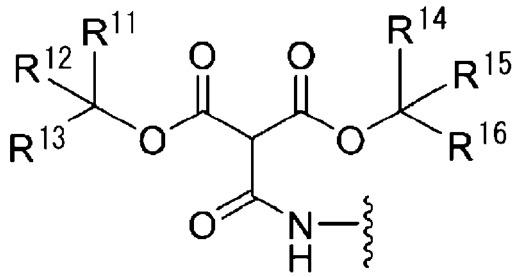

(I)

In the above general formula (1), $R^{11}$, $R^{12}$ and $R^{13}$ each independently represent an alkyl group which may contain one or more substituents selected from the group consisting of a hydroxy group and an amino group; a total number of carbon atoms of $R^{11}$, $R^{12}$ and $R^{13}$ is 4 or more and 20 or less; $R^{14}$, $R^{15}$ and $R^{16}$ each independently represent a hydrogen atom or an alkyl group which may contain one or more substituents selected from the group consisting of a hydroxy group and an amino group; and a wavy line represents a bonding site with a residue of polyisocyanate excluding an isocyanate group.

The alkyl group represented by $R^{11}$, $R^{12}$, $R^{13}$, $R^{14}$, $R^{15}$ and $R^{16}$ preferably has 1 or more and 20 or less carbon atoms, more preferably 1 or more and 8 or less carbon atoms, still more preferably 1 or more and 6 or less carbon atoms, and particularly preferably 1 or more and 4 or less carbon atoms.

Specific examples of alkyl groups having no substituents include a methyl group, an ethyl group, a propyl group, an isopropyl group, an n-butyl group, a tert-butyl group, a sec-butyl group, an isobutyl group, an n-pentyl group, an isopentyl group, a neopentyl group, a tert-pentyl group, a 1-methylbutyl group, an n-hexyl group, a 2-methylpentyl group, a 3-methylpentyl group, a 2,2-dimethylbutyl group, a 2,3-dimethylbutyl group, an n-heptyl group, a 2-methylhexyl group, a 3-methylhexyl group, a 2,2-dimethylpentyl group, a 2,3-dimethylpentyl group, a 2,4-dimethylpentyl group, a 3,3-dimethylpentyl group, a 3-ethylpentyl group, a 2,2,3-trimethylbutyl group, an n-octyl group, an isooctyl group, a 2-ethylhexyl

group, a nonyl group and a decyl group.

Further, when $R^{11}$, $R^{12}$, $R^{13}$, $R^{14}$, $R^{15}$ and $R^{16}$ are alkyl groups having a substituent, the substituent is a hydroxy group or an amino group.

Examples of the alkyl group containing a hydroxy group as a substituent include a hydroxymethyl group, a hydroxyethyl group and a hydroxypropyl group.

Examples of the alkyl group containing an amino group as a substituent include an aminomethyl group, an aminoethyl group, an aminopropyl group and an aminobutyl group.

Examples of the alkyl group containing a hydroxy group and an amino group as substituents include a hydroxyaminomethyl group, a hydroxyaminoethyl group and a hydroxyaminopropyl group.

Among them, since the storage stability when forming a coating material composition and the low-temperature curability when forming a resin film are further improved, it is preferable that each of $R^{11}$, $R^{12}$ and $R^{13}$ independently represents an unsubstituted alkyl group having 1 to 4 carbon atoms, a methyl group or an ethyl group is more preferred, and at least one is preferably an ethyl group.

The total number of carbon atoms of $R^{11}$, $R^{12}$, and $R^{13}$ is 4 or more and 20 or less, preferably 4 or more and 12 or less, still more preferably 4 or more and 9 or less, and still more preferably 4 or more and 6 or less.

When the total number of carbon atoms of $R^{11}$, $R^{12}$, and $R^{13}$ is equal to or more than the above lower limit value, the storage stability can be exhibited when forming a water-based coating material composition. On the other hand, when the total number of carbon atoms is equal to or less than the above upper limit value, the low-temperature curability can be exhibited. Further, from the viewpoint of improving the solvent resistance when formed into a coating film, the total number of carbon atoms of $R^{11}$, $R^{12}$ and $R^{13}$ is more preferably 4.

The number of carbon atoms of each of $R^{11}$, $R^{12}$, and $R^{13}$ is not limited as long as the total number of carbon atoms of $R^{11}$, $R^{12}$, and $R^{13}$ is within the above range.

Further, each of $R^{14}$, $R^{15}$ and $R^{16}$ independently represents a hydrogen atom or an alkyl group which may contain one or more substituents selected from the group consisting of a hydroxy group and an amino group, and preferably represents an unsubstituted alkyl group having 1 to 4 carbon atoms.

Among the various possibilities, it is preferable that at least one of $R^{14}$, $R^{15}$ and $R^{16}$ is a hydrogen atom, and it is more preferable that only one of them is a hydrogen atom. When at least one of $R^{14}$, $R^{15}$, and $R^{16}$ is a hydrogen atom, it is possible to further improve the storage stability when forming a water-based resin composition while maintaining the low-temperature curability. In other words, it is more preferable to include a structural unit represented by the following general formula (1-1) (hereinafter sometimes referred to as a structural unit (1-1)) as the structural unit (I).

[Chemical Formula 12]

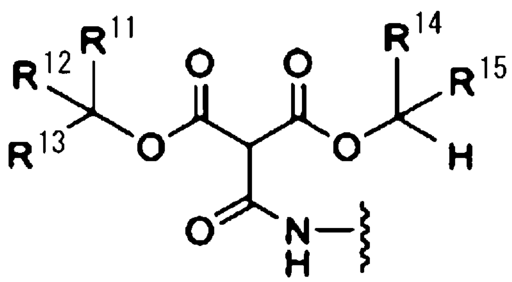

(I-1)

In the above general formula (I-1), $R^{11}$, $R^{12}$, $R^{13}$, $R^{14}$ and $R^{15}$ are as described in the above general formula (1). The wavy line represents a bonding site with a residue of polyisocyanate excluding an isocyanate group.

The molar ratio of the structural unit (I-1) in the structural unit (I) ((structural unit (I-1))/(structural unit (I))) is more preferably 10 mol% or more, still more preferably 30 mol% or more, still more preferably 50 mol% or more, still more preferably 80 mol% or more, and still more preferably 90 mol% or more.

[Structural unit (II)]

The blocked polyisocyanate component (D) preferably further contains a structural unit represented by the following general formula (II) (hereinafter sometimes referred to as a structural unit (II)) within the molecule.

[Chemical Formula 13]

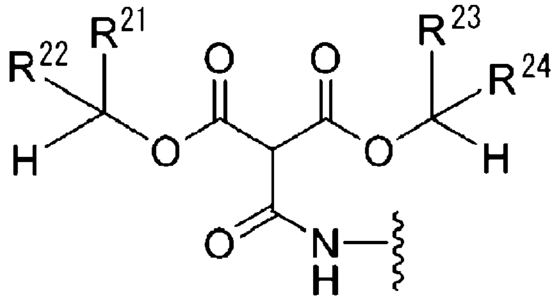

( II )

In the above general formula (II), $R^{21}$, $R^{22}$, $R^{23}$ and $R^{24}$ each independently represent a hydrogen atom or an alkyl group which may contain one or more substituents selected from the group consisting of a hydroxy group and an amino group; and a wavy line represents a bonding site with a residue of polyisocyanate excluding an isocyanate group.

As the alkyl group represented by $R^{21}$, $R^{22}$, $R^{23}$ and $R^{24}$ which may contain one or more substituents selected from the group consisting of a hydroxy group and an amino group, the same groups as those exemplified above represented by "$R^{11}$, $R^{12}$, $R^{13}$, $R^{14}$, $R^{15}$ and $R^{16}$" can be mentioned.

Among them, $R^{21}$, $R^{22}$, $R^{23}$ and $R^{24}$ are preferably a hydrogen atom or an alkyl group having 1 to 4 carbon atoms and having no substituent, and more preferably a hydrogen atom, a methyl group or an ethyl group since the storage stability is improved when forming a water-based resin composition, and still more preferably a methyl group or an ethyl group since the low-temperature curability is improved.

When $R^{21}$, $R^{22}$, $R^{23}$ and $R^{24}$ are all methyl groups, two ester moieties of the malonic acid ester of the structural unit (II) are both isopropyl groups. Further, when either one of $R^{21}$ and $R^{22}$ is a hydrogen atom and the other is a methyl group, and either one of $R^{23}$ and $R^{24}$ is a hydrogen atom and the other is a methyl group, two ester moieties of the malonic acid ester of the structural unit (II) are both ethyl groups. Among them, it is particularly preferable that all of $R^{21}$, $R^{22}$, $R^{23}$ and $R^{24}$ are methyl groups, that is, both of the two ester moieties of the malonic acid ester of the structural unit (11) are isopropyl groups.

A molar ratio of the structural unit represented by the above general formula (II) with respect to the structural unit represented by the above general formula (I) (structural unit (II) /structural unit (1)) is preferably 4/96 or more and 96/4 or less, more preferably 5/95 or more and 95/5 or less, still more preferably 7/93 or more and 93/7 or less, still more preferably 10/90 or more and 90/10 or less, still more preferably 20/80 or more and 85/15 or less, still more preferably 30/70 or more and 85/15 or less, still more preferably 35/65 or more and 85/15 or less, and still more preferably 50/50 or more and 70/30 or less. When the above molar ratio is equal to or more than the above lower limit value, the storage stability can be further improved when forming a resin composition, and when this molar ratio is equal to or less than the above upper limit value, the low-temperature curability can be further improved when forming a resin film.

The molar ratio of the structural unit (11) with respect to the structural unit (I) can be calculated, for example, by measuring a composition ratio of the structural unit (II) with respect to the structural unit (I) in the coating material composition by $^{1}H$-NMR and $^{13}C$-NMR.

When the total number of carbon atoms of $R^{11}$, $R^{12}$, and $R^{13}$ in the structural unit (1) is 4 or more and 20 or less, it is possible to effectively suppress the viscosity increase and gelation of a mixed liquid of the polyhydric hydroxy compound, the curing agent and water during storage, and to exhibit favorable storage stability, even when blended with a water-based coating material composition. At the same time, a resin film having excellent curability at a low temperature of about 85°C can be obtained.

The blocked polyisocyanate contained in the blocked polyisocyanate component (D) may be a blocked polyisocyanate in which at least a part of the isocyanate groups is blocked with a malonic acid ester having a secondary alkyl group or a malonic acid ester having a primary alkyl group, and a malonic acid ester having a tertiary alkyl group, within the molecule. Alternatively, it may be a mixture of a blocked polyisocyanate in which at least a part of the isocyanate groups in the polyisocyanate is blocked with a malonic acid ester having a secondary alkyl group, or a blocked polyisocyanate in which at least a part of the isocyanate groups in the polyisocyanate is blocked with a malonic acid ester having a primary alkyl group, and a blocked polyisocyanate in which at least a part of the isocyanate groups in the polyisocyanate is blocked with a malonic acid ester having a tertiary alkyl group.

The content of the blocked polyisocyanate component (D) in the second coating material composition is preferably 0.5% by mass or more and 20% by mass or less, more preferably 1% by mass or more and 10% by mass or less, and most preferably 1.5% by mass or more and 6% by mass or less with respect to the total mass of the second coating material composition. When the content is within the above range, the water resistance and finished appearance are

improved when forming a multilayer coating film laminate.

The third coating material composition is, for example, a two-component coating material composition containing a hydroxyl group-containing resin component and a polyisocyanate component.

For the polyisocyanate component used in the third coating material composition, for example, the polyisocyanate component (A) described above or a polyisocyanate component (B) described later can be used.

(Polyisocyanate component (B))

The polyisocyanate component (B) is used as a curing agent for collectively curing the first uncured coating film, the second uncured coating film, and the third uncured coating film.

The polyisocyanate component (B) preferably contains a polyisocyanate having an isocyanurate group derived from an aliphatic diisocyanate and an alicyclic diisocyanate (hereinafter sometimes referred to as an "isocyanurate-type polyisocyanate").

As the aliphatic diisocyanate and the alicyclic diisocyanate, the same diisocyanates as those of the polyisocyanate component (A) described above can be used.

Any one of these diisocyanates can be used alone, or two or more types thereof can also be used in combination.

Among these, HDI is preferred as the diisocyanate monomer used in the production of the isocyanurate-type polyisocyanate, from the viewpoints of industrial availability, reactivity during the polyisocyanate production, and low viscosity. Alternatively, IPDI is preferred from the viewpoints of weather resistance and industrial availability.

In the polyisocyanate component (B), the content of the isocyanurate trimer in the diisocyanate monomer is not particularly limited, but is preferably 55% by mass or more and 95% by mass or less, and more preferably 60% by mass or more and 95% by mass or less with respect to the total mass of the polyisocyanate component (B). When the content of the isocyanurate trimer in the diisocyanate monomer is equal to or more than the above lower limit value, the viscosity of the polyisocyanate component (B) can be further reduced. On the other hand, when the content of the isocyanurate trimer in the diisocyanate monomer is equal to or less than the above upper limit value, the yield of the polyisocyanate component (B) can be further increased.

The content of the isocyanurate trimer in the diisocyanate monomer can be measured by gel permeation chromatography (hereinafter sometimes abbreviated as "GPC").

It is preferable that the polyisocyanate component (B) has a uretdione group in addition to the isocyanurate group.

The content of the uretdione dimer in the diisocyanate monomer is preferably 2% by mass or more and 30% by mass or less, more preferably 4% by mass or more and 26% by mass or less, still more preferably 6% by mass or more and 23% by mass or less, and particularly preferably 8% by mass or more and 20% by mass or less with respect to the total mass of the polyisocyanate component.

When the content of the uretdione dimer in the diisocyanate monomer is within the above range, the polyisocyanate component easily permeates into the first uncured coating film and the second uncured coating film, and the finished appearance and scratch resistance of the obtained multilayer coating film laminate are improved.

The content of the uretdione dimer in the diisocyanate monomer can be measured by GPC.

Examples of methods for controlling the content of the uretdione dimer in the diisocyanate monomer within the above range include the following methods (1) and (2).

(1) A method of carrying out an isocyanurate-forming reaction of HDI and deactivating the catalyst, followed by a reaction at a temperature of about 140°C or higher and 160°C or lower (preferably 145°C or higher and 165°C or lower) for about several hours (preferably 1 hour or more and 3 hours or less).

(2) A method in which an isocyanurate-forming reaction of HDI is carried out to obtain a first polyisocyanate component; a uretdione-forming catalyst such as tertiary phosphine is separately added to HDI and reacted at a temperature of about 20°C or higher and 80°C or lower for about several hours or more and several tens of hours or less to obtain a second polyisocyanate component; and then a portion of the second polyisocyanate component is mixed with the first polyisocyanate component.

Among these, as a method for controlling the content of the uretdione dimer within the above range, the method shown in the above (1) is preferred from the viewpoint of easy availability.

In addition, the polyisocyanate component (B) may further have at least one selected from the group consisting of an iminooxadiazinedione group and an allophanate group as another functional group.

In general, an "allophanate group" is a functional group formed from a hydroxyl group of an alcohol and an isocyanate group, and is a group represented by the following formula (IV).

[Chemical Formula 14]

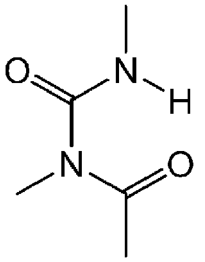

(IV)

Further, the polyisocyanate component (B) may further have a urethane group, a urea group, a biuret group, a carbodiimide group, or the like in addition to the above functional groups.

In addition, in the polyisocyanate component (B), the lower limit value of the content of components having a number average molecular weight of 700 or less is preferably 70% by mass, more preferably 72% by mass, still more preferably 74% by mass, and particularly preferably 76% by mass with respect to the total mass of the polyisocyanate component (B). On the other hand, the upper limit value of the content of components having a number average molecular weight of 700 or less is preferably 90% by mass, more preferably 86% by mass, and still more preferably 82% by mass.

That is, the content of the components having a number average molecular weight of 700 or less is preferably 70% by mass or more, more preferably 72% by mass or more and 90% by mass or less, still more preferably 74% by mass or more and 86% by mass or less, and particularly preferably 76% by mass or more and 82% by mass or less with respect to the total mass of the polyisocyanate component.

When the content of the components having a number average molecular weight of 700 or less is equal to or more than the above lower limit value, the polyisocyanate component easily permeates into the first uncured coating film and the second uncured coating film, and the first uncured coating film, the second uncured coating film, and the third uncured coating film can be cured more efficiently. As a result, the finished appearance and scratch resistance of the obtained multilayer coating film laminate are improved.

The content of the components having a number average molecular weight of 700 or less can be measured by GPC.

The lower limit value of the average number of isocyanate groups is preferably 2.7, and more preferably 2.8. On the other hand, the upper limit value of the average number of isocyanate groups is preferably 4.0, more preferably 3.5, and still more preferably 3.3.

That is, the average number of isocyanate groups is preferably 2.7 or more, more preferably 2.7 or more and 4.0 or less, still more preferably 2.7 or more and 3.5 or less, particularly preferably 2.7 or more and 3.3 or less, and most preferably 2.8 or more and 3.3 or less.

When the average number of isocyanate groups is equal to or more than the above lower limit value, the cross-linking properties of the polyisocyanate component can be further improved, and a multilayer coating film laminate with better coating film hardness and chemical resistance can be obtained. On the other hand, when the average number of isocyanate groups is equal to or less than the above upper limit value, the polyisocyanate component easily permeates into the first uncured coating film and the second uncured coating film, which are the lower layers, and as a result, the hardness of the obtained multilayer coating film laminate composed of the first coating film, the second coating film, and the third coating film is likely to be further improved.

The average number of isocyanate groups (Fn) of the polyisocyanate component (B) can be calculated by the following formula. It should be noted that in the formula, Mn is the number average molecular weight of the polyisocyanate component, and the NCO content is the content (% by mass) of isocyanate groups in the polyisocyanate component.

$$Fn = (Mn \times \text{NCO content} \times 0.01)/42$$

(Method for producing polyisocyanate component (B))

A method for producing the polyisocyanate component (B) can be carried out in the same manner as the method for producing the polyisocyanate component (A).

In order to control the content of the components having a number average molecular weight of 700 or less in the polyisocyanate component (B) within the above range, the lower limit value of the yield is preferably 5% by mass, more preferably 10% by mass, and still more preferably 15% by mass. On the other hand, the upper limit value of the

yield is preferably 40% by mass, more preferably 35% by mass, and still more preferably 30% by mass.

That is, the yield is preferably 5% by mass or more and 40% by mass or less, more preferably 10% by mass or more and 35% by mass or less, and still more preferably 15% by mass or more and 30% by mass or less.

When the yield is equal to or more than the above lower limit value, the productivity can be further improved. On the other hand, when the yield is equal to or less than the above upper limit value, the content of the components having a number average molecular weight of 700 or less can be further increased.

Further, in order to control the content of the components having a number average molecular weight of 700 or less within the above range, the polyisocyanate component preferably contains a polyisocyanate having a uretdione group and an allophanate group.

(Physical properties of polyisocyanate component (B))

1: Viscosity

The lower limit value of the viscosity of the polyisocyanate component (B) at 25°C is preferably 100 mPa·s, more preferably 140 mPa·s, still more preferably 180 mPa·s, particularly preferably 200 mPa·s, and most preferably 220 mPa·s. On the other hand, the upper limit value of viscosity is preferably 1,500 mPa·s, more preferably 1,000 mPa·s, still more preferably 800 mPa·s, particularly preferably 700 mPa·s, and most preferably 600 mPa·s.

That is, the viscosity of the polyisocyanate component (B) at 25°C is preferably 100 mPa·s or more and 1,500 mPa·s or less, more preferably 140 mPa·s or more and 1,000 mPa·s or less, still more preferably 180 mPa·s or more and 800 mPa·s or less, particularly preferably 200 mPa·s or more and 700 mPa·s or less, and most preferably 220 mPa·s or more and 600 mPa·s or less.

When the viscosity is equal to or more than the above lower limit value, the cross-linking properties of the polyisocyanate component (B) can be further improved. On the other hand, when the viscosity is equal to or less than the above upper limit value, the solid content concentration of the coating material composition using the polyisocyanate component can be further increased.

The viscosity for the polyisocyanate component (B) refined to have a nonvolatile component (solid content) of 99.5% by mass or more can be measured by using an E-type viscometer (manufactured by Tokimec Inc.). More specifically, it can be measured by the method described in Examples below.

2. Isocyanate group content

The lower limit value of the isocyanate group content (NCO content) of the polyisocyanate component (B) is preferably 21.0% by mass, more preferably 21.5% by mass, and still more preferably 22.0% by mass. On the other hand, the upper limit value of the NCO content is preferably 25.0% by mass, more preferably 24.0% by mass, and still more preferably 23.7% by mass.

That is, the NCO content of the polyisocyanate component (B) is preferably 21.0% by mass or more and 25.0% by mass or less, more preferably 21.5% by mass or more and 24.0% by mass or less, and still more preferably 22.0% by mass or more and 23.7% by mass or less.

When the NCO content is equal to or more than the above lower limit value, it is possible to further improve the physical properties of the coating film, such as hardness, of the obtained multilayer coating film laminate. On the other hand, when the NCO content is equal to or less than the above upper limit value, the yield of the polyisocyanate component (B) can be further increased.

The NCO content can be determined by neutralizing the isocyanate groups in the polyisocyanate component (B) with excess 2N amine, and then performing back titration with 1N hydrochloric acid.

It should be noted that the NCO content is a value with respect to the solid content of the polyisocyanate component (B). Further, the solid content of the polyisocyanate component (B) can be obtained from the residual amount when the polyisocyanate component (B) is heated at 105°C for 3 hours.

3. Number average molecular weight

The lower limit value of the number average molecular weight of the solid content in the polyisocyanate component (B) is preferably 400, more preferably 430, still more preferably 460, and particularly preferably 480. On the other hand, the upper limit value of the number average molecular weight is preferably 1,000, more preferably 800, still more preferably 700, and particularly preferably 600.

That is, the number average molecular weight of the solid content in the polyisocyanate component (B) is preferably 400 or more and 1,000 or less, more preferably 430 or more and 800 or less, still more preferably 460 or more and 700 or less, and particularly preferably 480 or more and 600 or less.

When the number average molecular weight is equal to or more than the above lower limit value, the yield of the polyisocyanate component (B) tends to be further improved. On the other hand, when the number average molecular weight is equal to or less than the above upper limit value, the polyisocyanate component (B) easily permeates into the first uncured coating film and the second uncured coating film, which are the lower layers, and as a result, the hardness of the obtained multilayer coating film laminate composed of the first coating film, the second coating film, and the third coating film is likely to be further improved.

A triisocyanate compound can be used for the polyisocyanate component (B).

Specific examples of the triisocyanate include 4-isocyanate methyl-1,8-octamethylene diisocyanate (hereinafter sometimes referred to as "NTI") disclosed in International Patent Publication No. 1996/17881 (Reference Document 1) (molecular weight: 251), 1,3,6-hexamethylene triisocyanate (hereinafter sometimes referred to as "HTI") disclosed in Japanese Unexamined Patent Application, First Publication No. Sho 57-198760 (Reference Document 2) (molecular weight: 209), bis(2-isocyanatoethyl) 2-isocyanatoglutarate (hereinafter sometimes referred to as "GT1") disclosed in Japanese Examined Patent Application, Second Publication No. Hei 4-1033 (Reference Document 3) (molecular weight: 311), and lysine triisocyanate (hereinafter sometimes referred to as "LT1") disclosed in Japanese Unexamined Patent Application, First Publication No. Sho 53-135931 (Reference Document 4) (molecular weight: 267).

Among them, NTI, GTI or LTI is preferred, and GTI or LTI is more preferred. By containing these triisocyanates, a multilayer coating film laminate can be obtained.

When a triisocyanate is used, it may be used alone, or may be used by mixing with a polyisocyanate derived from an aliphatic diisocyanate and an alicyclic diisocyanate.

(NCO/OH)

When the second coating material composition contains the polyisocyanate component (B), the NCO/OH ratio in the second coating material composition is preferably 1.0 or less, and more preferably less than 1.0. When the NCO/OH ratio is equal to or less than the above upper limit value, the polyisocyanate component of the third coating material composition easily permeates into the first coating material composition and the second coating material composition (the first uncured coating film and the second uncured coating film) in a more favorable manner, and the first coating material composition and the second coating material composition can be more efficiently cured. It should be noted that when the NCO/OH ratio in the first coating material composition and the second coating material composition is 1.0, the NCO/OH ratio in the third coating material composition is more than 1.0.

The NCO/OH ratio in the third coating material composition is preferably from 1.0 to 2.5, more preferably from 1.2 to 2.0, and most preferably from 1.4 to 1.8.

When the NCO/OH ratio is within the above range, the hardness of the multilayer coating film laminate is improved.

[Other components]

The second coating material composition and the third coating material composition may further contain other components in addition to the above polyisocyanate component and the above hydroxyl group-containing resin component.

Examples of other components include unsaturated bond-containing compounds, inactive compounds, metal atoms, basic amino compounds, carbon dioxide, and halogen atoms. Any one of these components may be contained alone, or two or more types thereof may be contained in combination.

In the second coating material composition and the third coating material composition, the lower limit value of the content of other components can be set to 1.0 ppm by mass, 3.0 ppm by mass, 5.0 ppm by mass, or 10 ppm by mass, based on the content of the polyisocyanate component.

On the other hand, the upper limit value of the content of other components can be set to 1.0 × 104 ppm by mass, 5.0 × 103 ppm by mass, 3.0 × 103 ppm by mass, or 1.0 × 103 ppm by mass, based on the content of the polyisocyanate component.

That is, in the second coating material composition and the third coating material composition, the content of other components can be set to 1.0 ppm by mass or more and $1.0 \times 10^4$ ppm by mass or less, 3.0 ppm by mass or more and $5.0 \times 10^3$ ppm by mass or less, 5.0 ppm by mass or more and $3.0 \times 10^3$ ppm by mass or less, or 10 ppm by mass or more and $1.0 \times 10^3$ ppm by mass or less, based on the content of the polyisocyanate component from the viewpoint of preventing coloration during long-term storage and improving long-term storage stability.

(Unsaturated bond-containing compound)

The unsaturated bond-containing compound may be a compound in which the unsaturated bond thereof is a

carbon-carbon unsaturated bond, a carbon-nitrogen unsaturated bond, or a carbon-oxygen unsaturated bond. From the viewpoint of compound stability, a compound in which the unsaturated bond is a double bond is preferred, and a carbon-carbon double bond (C=C) or a carbon-oxygen double bond (C=O) is more preferred. Further, the carbon atom that constitutes this compound can be a carbon atom bonded to three or more atoms.

In general, the carbon-carbon double bond may be a carbon-carbon double bond constituting an aromatic ring, but the unsaturated bond contained in the unsaturated bond-containing compound in the coating material composition does not include a carbon-carbon double bond that constitutes an aromatic ring.

Examples of compounds having a carbon-oxygen double bond include carbonic acid derivatives. Examples of the carbonic acid derivatives include urea compounds, carbonic acid esters, N-unsubstituted carbamic acid esters, and N-substituted carbamic acid esters.

(Inactive compound)

Inactive compounds are classified, for example, into the following compounds A to G.

More specifically, hydrocarbon compounds are classified as either a compound A or a compound B, ether compounds and sulfide compounds are classified as compounds C to E described below, halogenated hydrocarbon compounds are classified as a compound F described below, and silicon-containing hydrocarbons, silicon-containing ether compounds and silicon-containing sulfide compounds are classified as a compound G described below, respectively. It should be noted that the compounds A to G listed here do not contain any unsaturated bonds other than aromatic rings, and do not include the compounds having an unsaturated bond described above.

Compound A: a linear, branched, or cyclic aliphatic hydrocarbon compound.

Compound B: an aromatic hydrocarbon compound which may be substituted with an aliphatic hydrocarbon group.

Compound C: a compound having an ether structure or sulfide group and an aliphatic hydrocarbon group, in which aliphatic hydrocarbon compounds of the same type or different types are bonded via the ether structure or sulfide group.

Compound D: a compound having an ether structure or sulfide group and an aromatic hydrocarbon group, in which aromatic hydrocarbon compounds of the same type or different types are bonded via the ether structure or sulfide group.

Compound E: a compound having an ether structure or sulfide group, an aliphatic hydrocarbon group, and an aromatic hydrocarbon group.

Compound F: a halide in which at least one hydrogen atom constituting an aliphatic hydrocarbon compound or at least one hydrogen atom constituting an aromatic hydrocarbon compound is substituted with a halogen atom.

Compound G: a compound in which some or all of the carbon atoms of the above compounds A to E are substituted with silicon atoms.

(Metal atom)

The metal atom may exist as a metal ion or as a simple metal atom. It may be of a single type of metal atom, or a combination of a plurality of types of metal atoms. The metal atom is preferably a metal atom that can have a valence of 2 or more and 4 or less, and more preferably one or more metals selected from among iron, cobalt, nickel, zinc, tin, copper and titanium.

(Basic amino compound)

The basic amino compounds are derivatives of ammonia, and examples thereof include compounds in which one hydrogen atom thereof is substituted with an alkyl group or aryl group (primary compound), compounds in which two hydrogen atoms are substituted (secondary compound), and compounds in which all three hydrogen atoms are substituted (tertiary compound). Among these, as the basic amino compound, a secondary or tertiary amino compound is preferred, and an aliphatic amine, an aromatic amine, a heterocyclic amine, or a basic amino acid is more preferred.

(Carbon dioxide)

The carbon dioxide may be a fraction dissolved in isocyanate at normal pressure, or may be placed in a pressure vessel and dissolved in a pressurized state. Since the use of carbon dioxide containing moisture may cause hydrolysis of isocyanate, it is preferable to control the amount of moisture contained in the carbon dioxide, as necessary.

(Halogen atom)

The halogen atom content contained in the first coating material composition and the second coating material composition is preferably 1.0 $\times$ $10^2$ ppm by mass or less from the viewpoint of preventing coloration. Although the halogen atom is not particularly limited, at least one of a chlorine atom and a bromine atom is preferred, and at least one type of ion or compound selected from the group consisting of chlorine ions, bromine ions, hydrolyzable chlorine and hydrolyzable bromine is more preferred. Examples of the hydrolyzable chlorine include carbamoyl chloride compounds in which hydrogen chloride is added to an isocyanate group, and examples of the hydrolyzable bromine include carbamoyl bromide compounds in which hydrogen bromide is added to an isocyanate group.

[Melamine-based curing agent]

In addition to the above polyisocyanate component and the above hydroxyl group-containing resin component, the second coating material composition and the third coating material composition may further contain a melamine-based curing agent, if necessary. Examples of the melamine-based curing agent include complete alkyl type, methylol type alkyl, and imino group type alkyl melamine-based curing agents, and the like.

[Organic solvent]

Further, the above polyisocyanate component (B), the above hydroxyl group-containing resin component, the second coating material composition and the third coating material composition can all be used by being mixed with an organic solvent. The organic solvent preferably has no functional group that reacts with a hydroxyl group or an isocyanate group. Further, the organic solvent is preferably compatible with the polyisocyanate component. As such an organic solvent, those generally used as coating material solvents can be used, and specific examples thereof include ester compounds, ether compounds, ketone compounds, aromatic compounds, ethylene glycol dialkyl ether-based compounds, polyethylene glycol dicarboxylate-based compounds, hydrocarbon-based solvents and aromatic solvents.

[Other additives]

In addition to the above polyisocyanate component and the above hydroxyl group-containing resin component, the second coating material composition and the third coating material composition may further contain various additives used in the relevant technical field, in accordance with the intended purpose or application within a range that does not impair the effects of the present embodiment, such as catalysts, pigments, leveling agents, antioxidants, ultraviolet absorbers, light stabilizers, plasticizers and surfactants, for example, for accelerating curing.

Examples of the catalyst for accelerating curing include metal salts and tertiary amines.

Examples of the metal salt include dibutyltin dilaurate, tin 2-ethylhexanoate, zinc 2-ethylhexanoate, and cobalt salts.

Examples of the tertiary amines include triethylamine, pyridine, methylpyridine, benzyldimethylamine, N,N-dimethylcyclohexylamine, N-methylpiperidine, pentamethyldiethylenetriamine, N,N'-endoethylenepiperazine and N,N'-dimethylpiperazine.

[Method for producing coating material composition]

The second coating material composition can be obtained by mixing the above hydroxyl group-containing resin component and, if necessary, the above polyisocyanate component (C) and various additive components or the like, using a known method.

The third coating material composition can be obtained by mixing the above polyisocyanate component (B), the hydroxyl group-containing resin component, and, if necessary, various additive components or the like using a known method.

For example, when producing a water-based coating material composition, various additives are added to the hydroxyl group-containing resin component or an aqueous dispersion or solution thereof, as necessary. Subsequently, the above polyisocyanate component or an aqueous dispersion thereof is added as a curing agent, and if necessary, water or a solvent is further added thereto to adjust the viscosity. Then, a water-based coating material composition can be obtained by forcibly stirring with a stirring device.

When producing a solvent-based coating material composition, first, various additives are added to the hydroxyl group-containing resin component or a solventdiluted product thereof, as necessary. Subsequently, the above polyisocyanate component is added as a curing agent, and if necessary, a solvent is further added to adjust the viscosity. Then, a solvent-based coating material composition can be obtained by stirring manually or by stirring using a stirring device

such as a Mazelar or the like.

In the present embodiment, from the viewpoint of global environmental protection, a method of producing a water-based coating material composition is preferred.

(Object to be coated)

An object to be coated is not particularly limited, and examples thereof include molded articles obtained by molding a material such as metals (steel plates, surface-treated steel plates, and the like), plastic, wood, and inorganic materials. Further, the shape of these molded articles is not particularly limited, and may be, for example, those having a small thickness such as films, sheets, and boards, or those having a large thickness such as cylinders and three-dimensional structures. Alternatively, it may be those that are hollow such as tubes and the like.

Further, the object to be coated may be a coating film. Examples of the coating film include those obtained by coating and curing a main agent such as a polyol and a curing agent such as a (blocked) polyisocyanate or melamine, as well as uncured coating films before curing. In the method for forming a multilayer coating film laminate described below, the object to be coated is preferably an uncured coating film, and the uncured coating film as the object to be coated can be formed into a cured coating film by curing it, by heating, together with the first uncured coating film, the second uncured coating film and the third uncured coating film.

(Application)

The multilayer coating film laminate of the present embodiment is useful, for example, as a primer layer (undercoat layer), an intermediate coat layer and a top coat layer for a material such as metals (steel plates, surface-treated steel plates, and the like), plastic, wood, and inorganic materials. In addition, it is also useful as a laminate for imparting decorativeness, weather resistance, acid resistance, rust prevention properties, chipping resistance, and the like to precoated metals including rust-proof steel plates, automobile painting, or the like.

EXAMPLES

Hereinafter, the present embodiment will be described in more detail with reference to specific Examples and Comparative Examples, but the present embodiment is in no way limited by the following Examples and Comparative Examples as long as it does not exceed the scope thereof. The physical properties of polyisocyanate components and the evaluations of coating films in Examples and Comparative Examples were measured and evaluated as follows. It should be noted that the terms "parts" and "%" refer to "parts by mass" and "% by mass", respectively, unless otherwise specified.

<Measurement method>

(Physical property) isocyanate group content (NCO group content)

Using the base coating compositions obtained in Examples and Comparative Examples as samples, the isocyanate group content was measured using the method shown below.

(1) 1 g of a sample was collected in a 200 mL Erlenmeyer flask, and 20 mL of toluene was added to the flask to dissolve the sample.
(2) After that, 20 mL of a 2.0 N di-n-butylamine/toluene solution was added to the flask, and the resulting mixture was allowed to stand for 15 minutes.
(3) 70 mL of 2-propanol was added to the flask and dissolved to obtain a solution.
(4) The solution obtained in the above (3) was titrated with 1 mol/L hydrochloric acid to determine a sample titer.
(5) Even when no sample was added, the measurement was carried out in the same manner as in the above (1) to (3) to determine a blank titer.

From the sample titer and blank titer determined above, the isocyanate group content was calculated using a formula shown below.

$$\text{Isocyanate group content [\% by mass]} = ((\text{blank titer}) - (\text{sample titer})) \times 42/[\text{sample mass (1 g)} \times 1{,}000] \times 100$$

(Physical property) Calculation method of specific molar ratio

The molar ratios of iminooxadiazinedione groups, uretdione groups, allophanate groups, and isocyanurate groups were determined by 13C NMR measurement using Biospin Avance 600 (product name, manufactured by Bruker Corporation). Specific measurement conditions were as follows.

$^{13}$C-NMR apparatus: AVANCE 600 (manufactured by Bruker Corporation)
Cryoprobe (manufactured by Bruker Corporation)
Cryo Probe
CPDUL
600S3-C/H-D-05Z
Resonance frequency: 150 MHz
Concentration: 60 wt/vol%
Shift reference: $CDCl_3$ (77 ppm)
Number of integrations: 10,000 times
Pulse program: zgpg 30 (proton complete decoupling method, waiting time: 2 sec)
The integrated value of the following signals was divided by the number of carbons being measured, and each molar ratio was determined from that value.
Molar amount of iminooxadiazinedione group (mol%, indicated by "B"): around 144.6 ppm: integrated value ÷ 1
Molar amount of isocyanurate group (mol%, indicated by "A"): around 148.6 ppm: integrated value ÷ 3
Molar amount of uretdione group (mol%, indicated by "C"): around 157.5 ppm: integrated value ÷ 2

The determined molar ratios were of the following four types, and the values for each were determined using the base coating compositions as samples.

$$\text{Molar ratio: } (B + C)/(A + B + C)$$

(Physical property) uretdione dimer content in diisocyanate monomer

Using the base coating composition as a sample, the area ratio of the uretdione dimer in the diisocyanate monomer with respect to the area of the entire base coating composition was determined by gel permeation chromatography measurement using the following equipment, and the obtained ratio was taken as the uretdione dimer content in the diisocyanate monomer.

(Physical property) number average molecular weight and weight average molecular weight

The number average molecular weight and weight average molecular weight are the number average molecular weight and weight average molecular weight measured by gel permeation chromatography (GPC) with reference to polystyrene standards using the following apparatus.
In order to measure the number average molecular weight of polyisocyanate, a polyisocyanate before being blocked with a blocking agent was used as a measurement sample.
Regarding the weight average molecular weight, the blocked polyisocyanate composition or the polyvalent hydroxy compound was used as it was as a measurement sample. Measurement conditions are shown below.

(Measurement conditions)

Apparatus: HLC-802A, manufactured by Tosoh Corporation
Column:

G1000HXL × 1,
G2000HXL × 1,
G3000HXL × 1, manufactured by Tosoh Corporation

Carrier: tetrahydrofuran
Detection method: differential refractometer

(Physical property) average number of isocyanate groups

The average number of isocyanate groups (average number of NCOs) in the polyisocyanate was determined by the following formula. It should be noted that in the formula, "Mn" denotes the number average molecular weight of the polyisocyanate, and "NCO content" denotes the isocyanate group content of the polyisocyanate, and the values calculated above were used.

$$\text{Average number of isocyanate groups} = (\text{Mn} \times \text{NCO content} \times 0.01)/42$$

[Evaluation]

(Water dispersibility of polyisocyanate component (A))

Using the polyisocyanate components (A) obtained in Examples and Comparative Examples as samples, the water dispersibility was evaluated using the method shown below.

(1) The mass of a 100 mL flask and Yoshino paper was measured (W0 g).
(2) The base coating composition was collected in the 100 mL flask so as to have a solid content of 16 g (W2 g), and 24 g of deionized water was added thereto.
(3) The solution in the 100 mL flask was stirred at 200 rpm for 3 minutes using a propeller blade, and then filtered with the Yoshino paper weighed in (1).
(4) The filtration residue remaining on the Yoshino paper and the residue remaining in the 100 mL flask were combined and heated in a dryer at 105°C for 1 hour, and the mass (g) was determined (W1 g).
(5) Using the following formula, the proportion of the base coating composition dispersed in water was determined. It should be noted that in the formula, Y denotes a nonvolatile content (% by mass).

$$\text{"Proportion dispersed in water (\% by mass)"}$$

$$= \{1 - (\text{W2 (g)} - \text{W0 (g)})/(\text{W2 (16 g)} \times \text{Y})\} \times 100$$

(6) Subsequently, the water dispersibility was evaluated in accordance with the following evaluation criteria.

(Evaluation criteria)

A: 95% or more
B: 90% by mass or more and less than 95% by mass
C: 80% by mass or more and less than 90% by mass
D: less than 80% by mass

[Evaluation]

(Pot life)

Changes in the concentration of isocyanate groups in each base coating composition were calculated from the intensity ratio of the isocyanate absorption peak (wave number: around 2,271 $cm^{-1}$) with respect to the isocyanurate absorption peak (wave number: around 1,686 $cm^{-1}$) in infrared absorption spectrum measurement using FT/IR 4200 type A (product name) manufactured by JASCO Corporation (detector: TGS, number of integrations: 16 times, resolution: 4 $cm^{-1}$). The time point immediately after the preparation of the base coating composition was defined as 0 hours, a ratio of (absorption peak intensity of isocyanate)/(absorption peak intensity of isocyanurate) at that time was defined as X0 (= X0), the peak intensity ratio after n hours was determined as Xn (= Xn), and the "isocyanate group retention rate" was calculated as Xn/X0 (= Xn/X0). The time during which the isocyanate group retention rate was maintained at 80% or more was measured, and the pot life was evaluated in accordance with the following evaluation criteria.

(Evaluation criteria)

A: 4 hours or more
B: 2 hours or more and less than 4 hours
C: less than 2 hours

(Coating film hardness: König)

Each base coating composition was coated on a glass plate so as to achieve a dry film thickness of 40 μm, and then dried by heating at 80°C for 30 minutes to obtain a resin film. The König hardness (times) of the coated sample plates obtained in each of the Examples and Comparative Examples was measured using a pendulum hardness tester manufactured by Erichsen GmbH & Co. KG. The coating film hardness (König) was evaluated in accordance with the following evaluation criteria.

(Evaluation criteria)

A: 100 times or more
B: 95 times or more and less than 100 times
C: less than 95 times

(Curability)

Each base coating composition was coated on a polypropylene (PP) plate so as to achieve a dry film thickness of 40 μm, and then dried by heating at 80°C for 30 minutes to obtain a resin film. The gel fraction of the obtained resin film was measured. The gel fraction was determined as a percentage (% by mass) of a value obtained by dividing the mass of an undissolved portion when immersing the resin film in acetone at 23°C for 24 hours with the mass before immersion. The curability was evaluated in accordance with the following evaluation criteria.

(Evaluation criteria)

A: 90% or more
B: 85% or more and less than 90%
C: less than 85%

<Synthesis of amine sulfonate>

[Synthesis Example 1]

(Synthesis of HES/TBA)

10 parts by mass of 1-propanol was added to 20 parts by mass of a 70% by mass aqueous solution of 2-hydroxyethanesulfonic acid (hereinafter sometimes abbreviated as "HES") at room temperature (about 23°C) and stirred to obtain a solution. Furthermore, tributylamine (hereinafter sometimes abbreviated as "TBA") was weighed so that the molar equivalent ratio with respect to HES was 1, and a liquid obtained by dilution with the same parts by mass of 1-propanol was added dropwise to the above solution while stirring. After 1 hour from the start of the dropwise addition, stirring was stopped, and dehydration and solvent removal were carried out using an evaporator to obtain a tributylamine salt of 2-hydroxyethanesulfonic acid (hereinafter sometimes abbreviated as "HES/TBA") having a solid content of 99.8% by mass.

<Synthesis of polyisocyanate>

[Synthesis Example 2]

(Synthesis of polyisocyanate P-1)

A nitrogen atmosphere was established in a four-necked flask equipped with a stirrer, a thermometer, a reflux condenser tube, a nitrogen blowing tube and a dropping funnel, 1,000 g of HDI and 4.0 g of isobutanol were charged thereinto, and the temperature in the reactor was maintained at 70°C while stirring. Tetramethylammonium caprylate was added thereto, and when the NCO content of the reaction solution reached 36.0% by mass, phosphoric acid was added thereto to terminate the reaction. Then, the temperature was raised to 160°C and held for 1 hour. After filtering the reaction solution, unreacted HDI was removed using a thin film evaporator to obtain a polyisocyanate P-1. The obtained polyisocyanate P-1 had a viscosity of 900 mPa·s at 25°C and an isocyanate group content of 22.3%.

[Synthesis Example 3]

(Synthesis of polyisocyanate P-2)

A nitrogen atmosphere was established in a four-necked flask equipped with a stirrer, a thermometer, a reflux condenser tube, a nitrogen blowing tube and a dropping funnel, 1,000 g of HDI and 4.0 g of isobutanol were charged thereinto, and the temperature in the reactor was maintained at 70°C while stirring. Tetramethylammonium caprylate was added thereto, and when the NCO content of the reaction solution reached 34.7% by mass, phosphoric acid was added thereto to terminate the reaction. Then, the temperature was raised to 160°C and held for 1 hour. After filtering the reaction solution, unreacted HDI was removed using a thin film evaporator to obtain a polyisocyanate P-2. The obtained polyisocyanate P-2 had a viscosity of 1,200 mPa·s at 25°C and an isocyanate group content of 22.6%.

[Synthesis Example 4]

(Synthesis of polyisocyanate P-3)

A nitrogen atmosphere was established in a four-necked flask equipped with a stirrer, a thermometer, a reflux condenser tube, a nitrogen blowing tube and a dropping funnel, 1,000 g of HDI and 4.0 g of isobutanol were charged thereinto, and the temperature in the reactor was maintained at 70°C while stirring. Tetramethylammonium caprylate was added thereto, and when the NCO content of the reaction solution reached 38.5% by mass, phosphoric acid was added thereto to terminate the reaction. Subsequently, after filtering the reaction solution, unreacted HDI was removed using a thin film evaporator to obtain a polyisocyanate P-3. The obtained polyisocyanate P-3 had a viscosity of 2,700 mPa·s at 25°C and an isocyanate group content of 21.7% by mass.

[Synthesis Example 5]

(Synthesis of polyisocyanate P-4)

A nitrogen atmosphere was established in a four-necked flask equipped with a stirrer, a thermometer, a reflux condenser tube, a nitrogen blowing tube and a dropping funnel, 1,000 g of HDI and 4.0 g of isobutanol were charged thereinto, and the temperature in the reactor was maintained at 70°C while stirring. Tetramethylammonium caprylate was added thereto, and when the NCO content of the reaction solution reached 45.5% by mass, phosphoric acid was added thereto to terminate the reaction. Then, the temperature was raised to 160°C and held for 1 hour. After filtering the reaction solution, unreacted HDI was removed using a thin film evaporator to obtain a polyisocyanate P-4. The obtained polyisocyanate P-4 had a viscosity of 500 mPa·s at 25°C and an isocyanate group content of 23.3% by mass.

[Synthesis Example 6]

(Synthesis of polyisocyanate P-5)

A nitrogen atmosphere was established in a four-necked flask equipped with a stirrer, a thermometer, a reflux condenser tube, a nitrogen blowing tube and a dropping funnel, 1,000 g of PDI and 4.0 g of isobutanol were charged thereinto, and the temperature in the reactor was maintained at 70°C while stirring. Tetramethylammonium caprylate was added thereto, and when the NCO content of the reaction solution reached 42.5% by mass, phosphoric acid was

added thereto to terminate the reaction. Subsequently, after filtering the reaction solution, unreacted HDI was removed using a thin film evaporator to obtain a polyisocyanate P-1. The obtained polyisocyanate P-5 had a viscosity of 2,000 mPa·s at 25°C and an isocyanate group content of 25.0% by mass.

[Synthesis Example 7]

(Synthesis of polyisocyanate P-6)

5.7 parts by mass of polyethylene glycol monomethyl ether (product name "MPG-130", manufactured by Nippon Nyukazai Co., Ltd.) having an average number of ethylene oxide repeating units of 9.4 (molar equivalent ratio of isocyanate group/hydroxyl group = 39) was added to 94.3 parts by mass of the polyisocyanate P-4 obtained in Synthesis Example 5, and the reaction was carried out by stirring at 90°C for 6 hours under nitrogen. After completion of the reaction, a polyisocyanate P-6 was obtained.

[Synthesis Example 8]

(Synthesis of polyisocyanate P-7)

In a four-necked flask equipped with a stirrer, a thermometer and a gas inlet tube, 1,060 g of 4-aminomethyl-1 ,8-octamethylenediamine (hereinafter may be referred to as a "triamine") was dissolved in 1,500 g of methanol, and 1,800 mL of 35% by mass concentrated hydrochloric acid was gradually added dropwise thereto while cooling. Then, the resulting mixture was concentrated by removing methanol and water under reduced pressure and dried at 60°C and 5 mmHg for 24 hours to obtain a triamine hydrochloride as a white solid. 650 g of the obtained triamine hydrochloride as a fine powder was suspended in 5,000 g of o-dichlorobenzene, and the temperature of the reaction solution was raised while stirring. Then, when the temperature of the reaction solution reached 100°C, phosgene was started to be blown in at a rate of 200 g/hour, and the temperature was further raised. Subsequently, when the temperature of the reaction solution reached 180°C, the temperature was maintained unchanged, and phosgene was continuously blown in for 12 hours. Then, after distilling off the dissolved phosgene and solvent under reduced pressure, vacuum distillation was performed to obtain 420 g of colorless and transparent NTI having a boiling point of 161°C or higher and 163°C of lower at 1.2 mmHg. The NCO content of NTI was 50.0% by mass.

[Synthesis Example 9]

(Synthesis of polyisocyanate P-8)

122.2 g of ethanolamine, 100 ml of o-dichlorobenzene, and 420 ml of toluene were charged into a four-necked flask equipped with a stirrer, a thermometer, and a gas inlet tube, and ice-cooled hydrogen chloride gas was introduced to convert ethanolamine to a hydrochloride salt. Subsequently, 182.5 g of lysine hydrochloride was added, the reaction solution was heated to 80°C to dissolve ethanolamine hydrochloride, and hydrogen chloride gas was introduced to form lysine dihydrochloride. Furthermore, hydrogen chloride gas was passed through at a rate of 20 to 30 ml/min, and the reaction solution was heated to 116°C, and this temperature was maintained until no water was distilled off. The thus produced reaction mixture was recrystallized in a mixed solution of methanol and ethanol to obtain 165 g of lysine β-aminoethyl ester trihydrochloride. 100 g of this lysine β-aminoethyl ester trihydrochloride was suspended as a fine powder in 1,200 ml of o-dichlorobenzene, the temperature of the reaction solution was raised while stirring, and when it reached 120°C, phosgene was started to be blown in at a rate of 0.4 mol/hour, blowing was continued for 10 hours, and the temperature was then raised to 150°C. The suspension almost completely dissolved. Following cooling, the resulting suspension was filtered, the dissolved phosgene and the solvent were removed by distillation under reduced pressure, and vacuum distillation was then performed to obtain 80.4 g of colorless and transparent LTI having a boiling point of 155 to 157°C at 0.022 mmHg. The NCO content of this product was 47.1% by weight.

[Synthesis Example 10]

(Synthesis of polyisocyanate P-9)

A nitrogen atmosphere was established in a four-necked flask equipped with a stirrer, a thermometer, a reflux condenser tube, a nitrogen blowing tube and a dropping funnel, and 50 parts by mass of the polyisocyanate P-4 obtained in Synthesis Example 5 and 50 parts by mass of the polyisocyanate P-7 obtained in Synthesis Example 8 were mixed at room temperature to obtain a polyisocyanate P-9.

[Synthesis Example 11]

(Synthesis of polyisocyanate P-10)

A nitrogen atmosphere was established in a four-necked flask equipped with a stirrer, a thermometer, a reflux condenser tube, a nitrogen blowing tube and a dropping funnel, and 50 parts by mass of the polyisocyanate P-4 obtained in Synthesis Example 5 and 50 parts by mass of the polyisocyanate P-8 obtained in Synthesis Example 8 were mixed at room temperature to obtain a polyisocyanate P-10.

[Synthesis Example 12]

(Synthesis of polyisocyanate P-11)

A nitrogen atmosphere was established in a four-necked flask equipped with a stirrer, a thermometer, a reflux condenser tube, a nitrogen blowing tube and a dropping funnel, and 50 parts by mass of the polyisocyanate P-3 obtained in Synthesis Example 4 and 50 parts by mass of the polyisocyanate P-7 obtained in Synthesis Example 8 were mixed at room temperature to obtain a polyisocyanate P-11.

<Synthesis of polyisocyanate component (A)>

[Synthesis Example 13]

(Synthesis of polyisocyanate component (A)-1)

12.0 parts by mass of the tributylamine salt of 2-hydroxyethanesulfonic acid (HES/TBA) obtained in Synthesis Example 1 was added to 100 parts by mass of the polyisocyanate P-3 obtained in Synthesis Example 4, and the resulting mixture was stirred at 120°C for 3 hours in a nitrogen atmosphere to carry out a reaction. After completion of the reaction, 112 parts by mass of the polyisocyanate P-1 obtained in Synthesis Example 2 was added and mixed to obtain a polyisocyanate component (A)-1.

[Synthesis Example 14]

(Synthesis of polyisocyanate component (A)-2)

6.3 parts by mass of the tributylamine salt of 2-hydroxyethanesulfonic acid (HES/TBA) obtained in Synthesis Example 1 was added to 100 parts by mass of the polyisocyanate P-3 obtained in Synthesis Example 4, and the resulting mixture was stirred at 120°C for 3 hours in a nitrogen atmosphere to carry out a reaction. After completion of the reaction, 26.6 parts by mass of the polyisocyanate P-4 obtained in Synthesis Example 5 was added and mixed to obtain a polyisocyanate component (A)-2.

[Synthesis Example 15]

(Synthesis of polyisocyanate component (A)-3)

12.0 parts by mass of 3-cyclohexylaminopropanesulfonic acid (hereinafter may be abbreviated as "CAPS"), and 7.0 parts by mass of N,N-dimethylcyclohexylamine (hereinafter may be abbreviated as "DMCHA") were added to 100 parts by mass of the polyisocyanate P-3 obtained in Synthesis Example 4, and the resulting mixture was stirred at 80°C for 5 hours under reflux in a nitrogen atmosphere to carry out a reaction. After completion of the reaction, 120 parts by mass of the polyisocyanate P-2 obtained in Synthesis Example 3 was added and mixed to obtain a polyisocyanate component (A)-3.

[Synthesis Example 16]

(Synthesis of polyisocyanate component (A)-4)

4.2 parts by mass of the tributylamine salt of 2-hydroxyethanesulfonic acid (HES/TBA) obtained in Synthesis Example 1 was added to 100 parts by mass of the polyisocyanate P-4 obtained in Synthesis Example 5, and the resulting mixture was stirred at 120°C for 3 hours in a nitrogen atmosphere to carry out a reaction, thereby obtaining a polyisocyanate component (A)-4.

[Synthesis example 17]

(Synthesis of polyisocyanate component (A)-5)

1.1 g of 1,3-butanediol (1,3-BG) and 4.2 parts by mass of the tributylamine salt of 2-hydroxyethanesulfonic acid (HES/TBA) obtained in Synthesis Example 1 were added to 100 parts by mass of the polyisocyanate P-4 obtained in Synthesis Example 5, and the resulting mixture was stirred at 120°C for 3 hours in a nitrogen atmosphere to carry out a reaction, thereby obtaining a polyisocyanate component (A)-5.

[Synthesis example 18]

(Synthesis of polyisocyanate component (A)-6)

6.4 parts by mass of the tributylamine salt of 2-hydroxyethanesulfonic acid (HES/TBA) obtained in Synthesis Example 1 was added to 100 parts by mass of the polyisocyanate P-3 obtained in Synthesis Example 4, and the resulting mixture was stirred at 120°C for 3 hours in a nitrogen atmosphere to carry out a reaction. After completion of the reaction, 26.6 parts by mass of the polyisocyanate P-6 obtained in Synthesis Example 7 was added and mixed to obtain a polyisocyanate component (A)-6.

[Synthesis Example 19]

(Synthesis of polyisocyanate component (A)-7)

7.5 parts by mass of the tributylamine salt of 2-hydroxyethanesulfonic acid (HES/TBA) obtained in Synthesis Example 1 was added to 100 parts by mass of the polyisocyanate P-3 obtained in Synthesis Example 4, and the resulting mixture was stirred at 120°C for 3 hours in a nitrogen atmosphere to carry out a reaction, thereby obtaining a polyisocyanate component (A)-7.

Table 1 shows the physical property values and evaluation results of each polyisocyanate component (A) obtained.

[Table 1]

| | | Synthesis Example 13 | Synthesis Example 14 | Synthesis Example 15 | Synthesis Example 16 | Synthesis Example 17 | Synthesis Example 18 | Synthesis Example 19 | Synthesis Example 7 |
|---|---|---|---|---|---|---|---|---|---|
| Polyisocyanate component (A) | | (A)-1 | (A)-2 | (A)-3 | (A)-4 | (A)-5 | (A)-6 | (A)-7 | P-6 |
| Amine salt of sulfonic acid | | HES/TBA | HES/TBA | - | HES/TBA | HES/TBA | HES/TBA | HES/TBA | - |
| Sulfonic acid and amine compound | Sulfonic acid | - | - | CAPS | - | - | - | - | - |
| | Amine compound | - | - | DMCHA | - | - | - | - | - |
| NCO group content | % by mass | 20.2 | 21.1 | 20.3 | 21.7 | 20.4 | 20.5 | 19.6 | 21.7 |
| Uretdione dimer | % by mass | 3.8 | 2.6 | 3.5 | 11.5 | 11.4 | 2.4 | 0.2 | 11.3 |
| Isocyanurate group: A | mol% | 88.9 | 92.2 | 89.1 | 74.8 | 74.8 | 92.2 | 96.8 | 74.8 |
| Iminooxadiazinedione group: B | mol% | 1.8 | 1 | 1.9 | 2.7 | 2.7 | 1 | 0.6 | 2.7 |
| Uretdione group: C | mol% | 9.3 | 6.8 | 9 | 22.5 | 22.5 | 6.8 | 2.6 | 22.5 |
| Specific molar ratio | - | 0.11 | 0.08 | 0.11 | 0.25 | 0.25 | 0.08 | 0.03 | 0.25 |
| Water dispersibility of polyisocyanate component (A) | | B | B | C | B | B | A | C | D |

<Production of base coating composition>

[Example 1]

(Synthesis of base coating composition 0-a1)

40 g of an aqueous acrylic polyol dispersion (product name: Setaqua 6510, hydroxyl value per resin: 138 mgKOH/g, manufactured by Allnex GmbH) was weighed into a container. Subsequently, the polyisocyanate component (A)-1 obtained in Synthesis Example 13 was added so that the ratio (NCO/OH) of the molar amount of isocyanate groups with respect to the molar amount of hydroxyl groups in the aqueous acrylic polyol dispersion was 1.7. Furthermore, deionized water was added at a proportion such that the solid content in the base coating composition was 42% by mass, and the resulting mixture was stirred at 600 rpm for 10 minutes using a propeller blade to obtain a base coating composition 0-a1. Using the prepared base coating composition, evaluation was performed using the method described above. The results are described in Table 2.

[Examples 2 to 7, Comparative Example 1]

Base coating compositions 0-a2 to 0-a7 and 0-b1 were obtained by using the same method as in Example 1, with the exception that the types of polyisocyanate components (A) were as shown in Table 2. Using the prepared base coating composition, evaluation was performed using the method described above. The results are described in Table 2.

[Comparative Example 2]

40 g of an aqueous acrylic polyol dispersion (product name: Setaqua 6510, hydroxyl value per resin: 138 mgKOH/g, manufactured by Allnex GmbH) was weighed into a container. Subsequently, 9.2 g of a melamine resin (product name "Cymel 325", manufactured by Allnex Japan Inc., imino group type methylated melamine resin) was added. Furthermore, deionized water was added at a proportion such that the solid content in the base coating composition was 42% by mass, and the resulting mixture was stirred at 600 rpm for 10 minutes using a propeller blade to obtain a base coating composition 0-b2. Using the prepared base coating composition 0-b2, evaluation was performed using the method described above. The results are described in Table 2.

[Table 2]

| | Ex. 1 | Ex. 2 | Ex. 3 | Ex. 4 | Ex. 5 | Ex. 6 | Ex. 7 | Comp. Ex. 1 | Comp. Ex. 2 |
|---|---|---|---|---|---|---|---|---|---|
| Coating material composition | 0-a1 | 0-a2 | 0-a3 | 0-a4 | 0-a5 | 0-a6 | 0-a7 | 0-b1 | 0-b2 |
| Polyisocyanate component (A) | (A)-1 | (A)-2 | (A)-3 | (A)-4 | (A)-5 | (A)-6 | (A)-7 | P-6 | - |
| Pot life | A | A | B | A | A | A | A | A | A |
| Hardness | A | A | A | A | A | A | B | C | C |
| Curability | A | A | A | A | A | A | B | A | C |

As shown in the above results, the base coating compositions of Examples 1 to 7 that satisfied the compositions of the present invention had favorable pot lives, and the hardness and curability of single-layer cured films produced using the base coating compositions were favorable.
On the other hand, Comparative Example 1 resulted in low hardness.
In Comparative Example 2, although the pot life was favorable, the hardness and curability were low.

<Production of multilayer coating film laminate>

[Example 8]

(Production of coated sample plate T-a1)

(Production of first coating material composition)

87.9 parts of deionized water, 245.0 parts of a titanium oxide pigment (product name: Ti-Pure R-902+, manufactured by The Chemours Company), 17.2 parts of a waterbased wetting and dispersing agent (product name: BYK-190, manufactured by BYK-Chemie GmbH) and 0.7 parts of an antifoaming agent (product name: Tego 902W) were weighed into a container, and stirred at 2,700 rpm for 120 minutes using a propeller blade.

After stirring, 650 parts of an aqueous acrylic polyol dispersion (product name: Setaqua 6510, hydroxyl value per resin: 138 mgKOH/g, manufactured by Allnex GmbH) was added, and the resulting mixture was further stirred at 1,500 rpm for 30 minutes. While stirring, 2.0 parts of a silicone-based antifoaming agent (product name: BYK-024, manufactured by BYK-Chemie GmbH), 0.7 parts of an antifoaming agent (Tego 902W), and 1.0 part of a surface conditioner (product name: BYK-346, manufactured by BYK-Chemie GmbH) were added, and the resulting mixture was stirred for 15 minutes. Furthermore, 3.0 parts of a viscosity modifier (product name: Acrysol RM-8W, manufactured by The Dow Chemical Company) was added, and the resulting mixture was stirred for 15 minutes.

Subsequently, the polyisocyanate component (A)-1 obtained in Synthesis Example 13 was added so that the ratio (NCO/OH) of the molar amount of isocyanate groups with respect to the molar amount of hydroxyl groups in the aqueous acrylic polyol dispersion was 1.7. Furthermore, 2-(dimethylamino)ethanol and deionized water were added at a proportion such that the solid content in the pH-adjusted coating material composition was 43% by mass, and the resulting mixture was stirred at 600 rpm for 10 minutes using a propeller blade to obtain a first coating material composition 1-a1 having a viscosity of 55 seconds at a pH of 8.0 and 20°C as measured with a Ford cup (No. 4).

(Production of second coating material composition 2-1)

As a second coating material composition 2-1, an aqueous base-2 (black) (product name: nax E-CUBE WB aqueous color base (Silent Black), manufactured by Nippon Paint Co., Ltd.) was used.

(Production of third coating material composition)

An acrylic polyol ("SETALUX DA 665 BA/X (product name)", manufactured by Allnex GmbH) and the polyisocyanate P-3 obtained in Synthesis Example 4 as the polyisocyanate component (B) were blended in advance at an (isocyanate group)/(hydroxyl group) (NCO/OH) molar ratio of 1.7, and BYK-331 (0.10% by mass/resin content), TINUVIN 292 (1.0% by mass/resin content) and TINUVIN 384-2 (1.5% by mass/resin content) were blended as additives to prepare a third coating material composition diluted at a proportion such that a (propylene glycol monomethyl ether acetate)/(solvent naphtha) ratio was 50/50 (mass ratio) and the spray viscosity was 27 seconds (ISO 5 cup).

(Production of three-layer coating film laminate)

Using a cationic electrodeposition coated steel plate as a base material, the first coating material composition serving as a base coating composition was spray coated so as to achieve a dry film thickness of 18 μm and allowed to stand at room temperature for 5 minutes, thereby forming a first uncured coating film.

Thereafter, the aqueous base-2 (black sapphire color) was spray coated as a second coating material composition onto the first uncured coating film so as to achieve a dry film thickness of 13 μm, allowed to stand at room temperature for 5 minutes, and then subjected to preheating at 70°C for 5 minutes to obtain a laminate in which the base material, the first uncured coating film, and a second uncured coating film were laminated in this order.

Next, the third coating material composition produced by the above method was spray coated onto the preheated second uncured coating film so as to achieve a dry film thickness of 40 μm. Thereafter, drying was performed at 80°C for 30 minutes, followed by drying at 3°C for 24 hours in an atmosphere of 50% humidity to obtain a coated sample plate T-a1, which was a laminate having a multilayer coating film.

[Examples 9 to 21 and Comparative Example 3]

(Production of coated sample plates T-a2 to T-a14 and T-b1)

Coated sample plates having a three-layer coating film laminate were obtained by using the same method as in Example 8, with the exception that the types of polyisocyanate components (A) in the first coating material compositions were changed, and the polyisocyanate components (B) in the third coating material compositions were changed to the materials shown in Table 3.

[Example 22]

(Production of coated sample plate T-a15)

A coated sample plate having a three-layer coating film laminate was obtained by using the same method as in Example 8, with the exception that the type of polyisocyanate component (A) in the first coating material composition was changed, the polyisocyanate component (B) in the third coating material composition was changed to the material shown in Table 3, and a second coating material composition 2-2 obtained by mixing a blocked polyisocyanate component (D) described below was used as the second coating material composition.

(Production of blocked polyisocyanate component (D)-1 used in Example 22)

A four-necked flask equipped with a thermometer, a stirring blade and a reflux condenser tube was charged with 100 parts by mass of HDI and 5.2 parts by mass of a polyester polyol ("Placcel 303" (product name), manufactured by Daicel Corporation, average number of functional groups: 3, number average molecular weight: 300) derived from a trihydric alcohol and ε-caprolactone under a nitrogen stream, and the temperature inside the reactor was maintained at 88°C for 1 hour under stirring to carry out a urethane-forming reaction. After that, the temperature inside the reactor was maintained at 62°C, tetramethylammonium caprylate as an isocyanurate-forming catalyst was added thereto, and when the yield reached 51% by mass, phosphoric acid was added thereto to terminate the reaction. After filtering the reaction solution, unreacted HDI was removed using a thin film evaporator to obtain an isocyanurate-type polyisocyanate. The obtained polyisocyanate had an NCO content of 18.8% by mass, a number average molecular weight of 1,180, and an average number of isocyanate groups of 5.3. Further, the obtained polyisocyanate was subjected to $^1$H-NMR analysis to confirm the presence of isocyanurate groups.

100 parts by mass of the polyisocyanate obtained above, 13 parts by mass of dipropylene glycol dimethyl ether (DPDM), 15 parts by mass of methoxypolyethylene glycol (MPG081, number of ethylene oxide repeating units: 15, manufactured by Nippon Nyukazai Co., Ltd.) (amount so as to be 5 mol% with respect to 100 mol% of the isocyanate groups of the polyisocyanate P-2), and 0.08 parts by mass of 2-ethylhexyl acid phosphate (JP-508T, manufactured by Johoku Chemical Co., Ltd.) were mixed, and the resulting mixture was stirred at 120°C for 2 hours to obtain a hydrophilic compound-modified polyisocyanate. The obtained polyisocyanate P-2 had an NCO content of 14.0% by mass and an average number of isocyanate groups of 5.0.

100 parts by mass of the hydrophilic compound-modified polyisocyanate obtained above and 63.9 parts by mass of diisopropyl malonate (102 mol% with respect to 100 mol% of NCO groups) were charged, and dipropylene glycol dimethyl ether (DPDM) was further added thereto to adjust the solid content to 60% by mass. Subsequently, while stirring, 1.0 part by mass of a methanol solution containing sodium methylate (28% by mass with respect to the total mass of the solution) was added dropwise, and then the external bath was adjusted so that the solution temperature was 55°C to carry out a blocking reaction at 55°C for 5 hours, thereby obtaining a blocked polyisocyanate component intermediate having a solid content of 60% by mass. After that, 75 parts by mass of 2-methyl-2-butanol (250 mol% with respect to the blocked isocyanate group) was added to carry out a reaction at 80°C for 3 hours while removing the generated isopropyl alcohol by distillation under normal pressure. Thereafter, isopropanol and 2-methyl-2-butanol were further distilled off at 60°C under reduced pressure (50 kPa), and finally dipropylene glycol dimethyl ether (DPDM) was added thereto, thereby adjusting the solid content to 60% by mass and obtaining a blocked polyisocyanate component (D)-1.

Table 3 shows the specific structure and composition of the produced blocked polyisocyanate component (D)-1.

(Production of second coating material composition 2-2 used in Example 22)

The blocked polyisocyanate component (D)-1 produced above was added to the aqueous base-2 (black) (product name: nax E-CUBE WB aqueous color base (Silent Black), manufactured by Nippon Paint Co., Ltd.) so as to achieve a concentration of 2% by mass, deionized water was then added at a proportion such that the solid content was 25% by mass, and the resulting mixture was stirred at 600 rpm for 10 minutes using a propeller blade to obtain a second coating material composition 2-2.

[Example 23]

(Production of coated sample plate T-a16)

A coated sample plate having a three-layer coating film laminate was obtained by using the same method as in Example 8, with the exception that the type of polyisocyanate component (A) in the first coating material composition

was changed, the polyisocyanate component (B) in the third coating material composition was changed to the material shown in Table 3, and a second coating material composition 2-3 obtained by mixing a blocked polyisocyanate component (D) described below was used as the second coating material composition.

(Production of second coating material composition 2-3 used in Example 23)

The blocked polyisocyanate component (D)-1 produced above was added to the aqueous base-2 (black) (product name: nax E-CUBE WB aqueous color base (Silent Black), manufactured by Nippon Paint Co., Ltd.) so as to achieve a concentration of 4% by mass, deionized water was then added at a proportion such that the solid content was 25% by mass, and the resulting mixture was stirred at 600 rpm for 10 minutes using a propeller blade to obtain a second coating material composition 2-3.

[Example 24]

(Production of coated sample plate T-a17)

A coated sample plate having a three-layer coating film laminate was obtained by using the same method as in Example 8, with the exception that the type of polyisocyanate component (A) in the first coating material composition was changed, the polyisocyanate component (B) in the third coating material composition was changed to the material shown in Table 3, and a second coating material composition 2-4 obtained by mixing a blocked polyisocyanate component (D) described below was used as the second coating material composition.

(Production of blocked polyisocyanate component (D)-2 used in Example 24)

A four-necked flask equipped with a thermometer, a stirring blade and a reflux condenser tube was charged with 100 parts by mass of HDI and 5.2 parts by mass of a polyester polyol ("Placcel 303" (product name), manufactured by Daicel Corporation, average number of functional groups: 3, number average molecular weight: 300) derived from a trihydric alcohol and ε-caprolactone under a nitrogen stream, and the temperature inside the reactor was maintained at 88°C for 1 hour under stirring to carry out a urethane-forming reaction. After that, the temperature inside the reactor was maintained at 62°C, tetramethylammonium caprylate as an isocyanurate-forming catalyst was added thereto, and when the yield reached 51% by mass, phosphoric acid was added thereto to terminate the reaction. After filtering the reaction solution, unreacted HDI was removed using a thin film evaporator to obtain an isocyanurate-type polyisocyanate. The obtained polyisocyanate had an NCO content of 18.8% by mass, a number average molecular weight of 1,180, and an average number of isocyanate groups of 5.3. Further, the obtained polyisocyanate was subjected to $^1$H-NMR analysis to confirm the presence of isocyanurate groups.

100 parts by mass of the polyisocyanate obtained above, 13 parts by mass of dipropylene glycol dimethyl ether (DPDM), 15 parts by mass of methoxypolyethylene glycol (MPG081, number of ethylene oxide repeating units: 15, manufactured by Nippon Nyukazai Co., Ltd.) (amount so as to be 5 mol% with respect to 100 mol% of the isocyanate groups of the polyisocyanate P-2), and 0.08 parts by mass of 2-ethylhexyl acid phosphate (JP-508T, manufactured by Johoku Chemical Co., Ltd.) were mixed, and the resulting mixture was stirred at 120°C for 2 hours to obtain a hydrophilic compound-modified polyisocyanate. The obtained polyisocyanate P-2 had an NCO content of 14.0% by mass and an average number of isocyanate groups of 5.0.

100 parts by mass of the hydrophilic compound-modified polyisocyanate obtained above and 63.9 parts by mass of diisopropyl malonate (102 mol% with respect to 100 mol% of NCO groups) were charged, and dipropylene glycol dimethyl ether (DPDM) was further added thereto to adjust the solid content to 60% by mass. Subsequently, while stirring, 1.0 part by mass of a methanol solution containing sodium methylate (28% by mass with respect to the total mass of the solution) was added dropwise, and then the external bath was adjusted so that the solution temperature was 55°C to carry out a blocking reaction at 55°C for 5 hours, thereby obtaining a blocked polyisocyanate component (D)-2 having a solid content of 60% by mass.

Table 3 shows the specific structure and composition of the produced blocked polyisocyanate component (D)-2.

(Production of second coating material composition 2-4 used in Example 24)

The blocked polyisocyanate component (D)-2 produced above was added to the aqueous base-2 (black) (product name: nax E-CUBE WB aqueous color base (Silent Black), manufactured by Nippon Paint Co., Ltd.) so as to achieve a concentration of 2% by mass, deionized water was then added at a proportion such that the solid content was 25% by mass, and the resulting mixture was stirred at 600 rpm for 10 minutes using a propeller blade to obtain a second coating material composition 2-3.

[Table 3]

| Blocked polyisocyanate component | | (D)-1 | (D)-2 |
|---|---|---|---|
| Structural unit (1) | $R^{11}$ | Ethyl | - |
| | $R^{12}$ | Methyl | - |
| | $R^{13}$ | Methyl | - |
| | $R^{14}$ | Methyl | - |
| | $R^{15}$ | Methyl | - |
| | $R^{16}$ | H/Ethyl | - |
| Structural unit (II) | $R^{21}$ | Methyl | Methyl |
| | $R^{22}$ | Methyl | Methyl |
| | $R^{23}$ | Methyl | Methyl |
| | $R^{24}$ | Methyl | Methyl |
| Molar ratio (structural unit (II)/ structural unit (I)) | | 35/65 | 100/0 |
| Molar ratio (structural unit (I-I)/ structural unit (I)) | | 86% | 0% |

[Comparative Example 4]

(Production of coated sample plate T-b2)

A coated sample plate was obtained by using the same method as in Example 7, with the exception that a coating material composition described below was used as the first coating material composition.

(Production of first coating material composition used in Comparative Example 4)

87.9 parts of deionized water, 245.0 parts of a titanium oxide pigment (product name: Ti-Pure R-902+, manufactured by The Chemours Company), 17.2 parts of a waterbased wetting and dispersing agent (product name: BYK-190, manufactured by BYK-Chemie GmbH) and 0.7 parts of an antifoaming agent (product name: Tego 902W) were weighed into a container, and stirred at 2,700 rpm for 120 minutes using a propeller blade.

After stirring, 650 parts of an aqueous acrylic polyol dispersion (product name: Setaqua 6510, hydroxyl value per resin: 138 mgKOH/g, manufactured by Allnex GmbH) was added, and the resulting mixture was further stirred at 1,500 rpm for 30 minutes. While stirring, 2.0 parts of a silicone-based antifoaming agent (product name: BYK-024, manufactured by BYK-Chemie GmbH), 0.7 parts of an antifoaming agent (Tego 902W), and 1.0 part of a surface conditioner (product name: BYK-346, manufactured by BYK-Chemie GmbH) were added, and the resulting mixture was stirred for 15 minutes. Furthermore, 3.0 parts of a viscosity modifier (product name: Acrysol RM-8W, manufactured by The Dow Chemical Company) was added, and the resulting mixture was stirred for 15 minutes.

Subsequently, 146 parts of a melamine resin (product name "Cymel 325", manufactured by Allnex Japan Inc., imino group type methylated melamine resin) was added. Furthermore, 2-(dimethylamino)ethanol and deionized water were added at a proportion such that the solid content in the pH-adjusted coating material composition was 43% by mass, and the resulting mixture was stirred at 600 rpm for 10 minutes using a propeller blade to obtain a first coating material composition 1-b2 having a viscosity of 55 seconds at a pH of 8.0 and 20°C as measured with a Ford cup (No. 4).

[Evaluation]

(Coating film hardness: König)

The König hardness (times) of the coated sample plates obtained in each of the Examples and Comparative Examples was measured using a pendulum hardness tester manufactured by Erichsen GmbH & Co. KG. The coating film hardness (König) was evaluated in accordance with the following evaluation criteria.

(Evaluation criteria)

A: 80 times or more
B: 60 times or more and less than 80 times

(Water resistance)

The coated sample plates obtained in each of the Examples and Comparative Examples were immersed in warm water at 40°C for 10 days, taken out and dried, and then subjected to the following adhesion evaluation.
100 squares of 1 mm × 1 mm in size were created by making incisions in a coating film surface of each coated test plate with a cutter so as to reach the base, an adhesive cellophane tape was adhered on the surface thereof, and the number of coating films remaining in squares after rapidly peeling this adhesive cellophane tape off at 23°C was examined and evaluated in accordance with the following criteria.

(Evaluation criteria)

A: 100 (no detachment)
B: 90 or more and less than 100
C: 50 or more and less than 90
D: less than 50

For each coated sample plate obtained, various physical properties were measured using the methods described above, and the coating film hardness and water resistance were evaluated. The results are shown in Tables 4A and 4B.

(Finished appearance)

Using BYK WaveS can, the distinctness of image (DOI) of the coated sample plates obtained in each of the Examples and Comparative Examples was measured. The finished appearance (DOI) was evaluated in accordance with the following evaluation criteria.

(Evaluation criteria)

A: 95 or more
B: 90 or more and 94 or less
C: 89 or less

[Table 4A]

| | | Ex. 8 | Ex. 9 | Ex. 10 | Ex. 11 | Ex. 12 | Ex. 13 | Ex. 14 | Ex. 15 | Ex. 16 |
|---|---|---|---|---|---|---|---|---|---|---|
| Multilayer coating film laminate | | T-a1 | T-a2 | T-a3 | T-a4 | T-a5 | T-a6 | T-a7 | T-a8 | T-a9 |
| First coating material composition | Polyisocyanate component (A) | (A)-1 | (A)-2 | (A)-3 | (A)-4 | (A)-5 | (A)-6 | (A)-1 | (A)-1 | (A)-7 |
| Second coating material composition | Type | 2-1 | 2-1 | 2-1 | 2-1 | 2-1 | 2-1 | 2-1 | 2-1 | 2-1 |
| Third coating material composition | Polyisocyanate component (B) | P-3 | P-3 | P-3 | P-3 | P-3 | P-3 | P-4 | P-5 | P-3 |

(continued)

| | | Ex. 8 | Ex. 9 | Ex. 10 | Ex. 11 | Ex. 12 | Ex. 13 | Ex. 14 | Ex. 15 | Ex. 16 |
|---|---|---|---|---|---|---|---|---|---|---|
| Evaluation | Coating film hardness | A | A | A | A | A | A | B | A | B |
| | Water resistance | B | B | B | B | B | B | A | B | C |
| | Finished appearance | C | C | C | C | C | C | A | C | C |

[Table 4B]

| | | Ex. 17 | Ex. 18 | Ex. 19 | Ex. 20 | Ex. 21 | Ex. 22 | Ex. 23 | Ex. 24 | Comp. Ex. 3 | Comp. Ex. 4 |
|---|---|---|---|---|---|---|---|---|---|---|---|
| Multilayer coating film laminate | | T-a10 | T-a11 | T-a12 | T-a13 | T-a14 | T-a15 | T-a16 | T-a17 | T-b1 | T-b2 |
| First coating material composition | Polyisocyanate component (A) | (A)-2 | (A)-2 | (A)-2 | (A)-2 | (A)-2 | (A)-2 | (A)-2 | (A)-2 | P-6 | - |
| Second coating material composition | Type | 2-1 | 2-1 | 2-1 | 2-1 | 2-1 | 2-2 | 2-3 | 2-4 | 2-1 | 2-1 |
| Third coating material composition | Polyisocyanate component (B) | P-7 | P-8 | P-9 | P-10 | P-11 | P-3 | P-3 | P-3 | P-3 | P-3 |
| Evaluation | Coating film hardness | A | A | A | A | A | A | A | A | A | A |
| | Water resistance | A | A | A | A | A | A | A | B | D | D |
| | Finished appearance | B | B | A | A | B | A | A | B | C | C |

As shown in the above results, multilayer coating film laminates having favorable hardness and water resistance were obtained in Examples 8 to 24, even when cured at 80°C, in which the base coating compositions of the present embodiment were used.

From the results of Comparative Examples 3 and 4, it was confirmed that when the base coating composition does not satisfy the specific composition of the present invention, favorable hardness and water resistance cannot be achieved at the same time when cured at 80°C.

## Claims

**1.** A base coating composition for forming a multilayer coating film laminate on an object to be coated,

wherein said multilayer coating film laminate comprises a base layer and one or more coating films;
said base coating composition contains a polyisocyanate component (A) and a hydroxyl group-containing resin component; and
said polyisocyanate component (A) contains
a polyisocyanate containing a sulfonic acid anion group within a molecule, and
one or more tertiary ammonium cations of an amine compound represented by the following general formula (1).

[Chemical Formula 1]

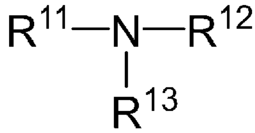

(1)

(wherein $R^{11}$, $R^{12}$, and $R^{13}$ each independently represent a hydrocarbon group having 1 to 10 carbon atoms which may contain an ether bond;
at least one selected from the group consisting of $R^{11}$, $R^{12}$, and $R^{13}$ may contain a ring structure, and two or more selected from the group consisting of $R^{11}$, $R^{12}$, and $R^{13}$ may be bonded to each other to form a ring structure; and
said ring structure is an aromatic ring, a cycloalkyl group having 5 or 6 carbon atoms, a 5-membered ring or 6-membered ring in which $R^{11}$ and $R^{12}$ are bonded to each other, or a multi-membered multi-ring in which $R^{11}$, $R^{12}$, and $R^{13}$ are bonded to each other.)

**2.** The base coating composition according to Claim 1, wherein said polyisocyanate component (A) comprises

a uretdione dimer of a diisocyanate monomer and
an isocyanurate trimer of a diisocyanate monomer.

**3.** The base coating composition according to Claim 2,
wherein a content of said uretdione dimer is 1.0% by mass or more and 20.0% by mass or less with respect to a total mass of said polyisocyanate component (A).

**4.** The base coating composition according to Claim 1 or 2,

wherein said polyisocyanate component (A) contains an iminooxadiazinedione group, and
a specific molar ratio represented by the following formula (2) is 0.05 or more and 0.60 or less,

$$\text{specific molar ratio} = (B + C) / (A + B + C) \qquad (2)$$

(wherein A represents a content ratio (mol%) of an isocyanurate group represented by the following formula (I), B represents a content ratio (mol%) of an iminooxadiazinedione group represented by the following formula (II), and C represents a content ratio (mol%) of a uretdione group represented by the following formula (111).)

[Chemical Formula 2]

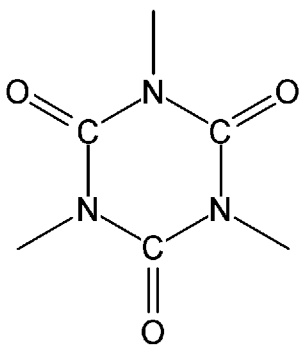

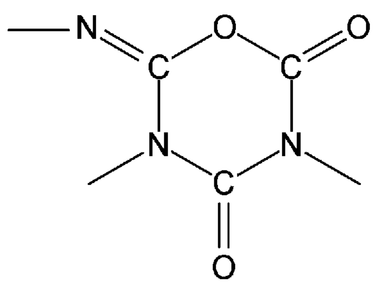

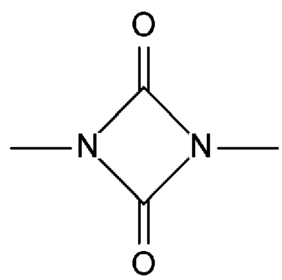

(I) (II) (III)

**5.** The base coating composition according to Claim 4,

wherein said polyisocyanate containing a sulfonic acid anion group within a molecule is a reaction product of an amine salt of a sulfonic acid having an active hydrogen group with a polyisocyanate, and said amine salt of a sulfonic acid having an active hydrogen group is a salt of a sulfonic acid having an active hydrogen group and said amine compound represented by the general formula (1).

**6.** The base coating composition according to Claim 1 or 2, wherein said polyisocyanate component (A) is an aliphatic polyisocyanate.

**7.** A multilayer coating film laminate comprising a first coating film, a second coating film, and a third coating film laminated in this order,

wherein said first coating film is formed from the base coating composition according to Claim 1 or 2,
said second coating film is formed from a coating material composition containing a hydroxyl group-containing resin component, and
said third coating film is formed from a two-component coating material composition containing a hydroxyl group-containing resin component and a polyisocyanate component.

**8.** The multilayer coating film laminate according to Claim 7, wherein said second coating film is formed from a hydroxyl group-containing resin component and a blocked polyisocyanate component (D).

**9.** The multilayer coating film laminate according to Claim 8, wherein said blocked polyisocyanate component (D) comprises a structural unit (1) represented by the following general formula (I),

[Chemical Formula 3]

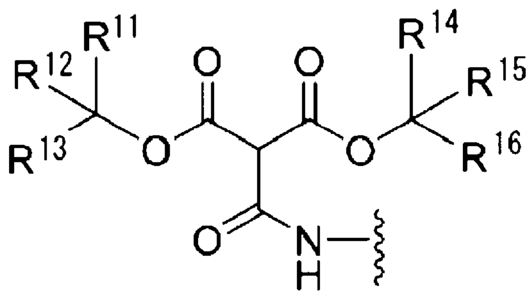

(I)

(wherein $R^{11}$, $R^{12}$ and $R^{13}$ each independently represent an alkyl group which may contain one or more substituents selected from the group consisting of a hydroxy group and an amino group;
a total number of carbon atoms of $R^{11}$, $R^{12}$ and $R^{13}$ is 4 or more and 20 or less;
$R^{14}$, $R^{15}$ and $R^{16}$ each independently represent a hydrogen atom or an alkyl group which may contain one or more substituents selected from the group consisting of a hydroxy group and an amino group; and
a wavy line represents a bonding site with a residue of polyisocyanate excluding an isocyanate group.)

**10.** A method for forming a multilayer coating film laminate,
the method comprising:

a step of coating a first coating material composition onto an object to be coated to obtain a first uncured coating film;
a step of coating a second coating material composition onto said first uncured coating film to obtain a second uncured coating film;
a step of further coating a third coating material composition onto said second uncured coating film to obtain a third uncured coating film; and
a step of simultaneously curing said first uncured coating film, the second uncured coating film and the third uncured coating film by heating at 40°C or higher and 140°C or lower to form a multilayer coating film laminate composed of three layers of a first coating film, a second coating film and a third coating film,
wherein said first coating material composition is the base coating composition according to Claim 1 or 2,
said second coating material composition is a coating material composition containing a hydroxyl group-containing resin component, and
said third coating material composition is a two-component coating material composition containing a hydroxyl group-containing resin component and a polyisocyanate component.

**11.** The method for forming a multilayer coating film laminate according to Claim 10, wherein said second coating material composition is a coating material composition containing a hydroxyl group-containing resin component and a blocked polyisocyanate component (D).

**12.** The method for forming a multilayer coating film laminate according to Claim 11,

wherein a blocked polyisocyanate contained in said blocked polyisocyanate component (D) comprises a structural unit (I) represented by the following general formula (I),

[Chemical Formula 4]

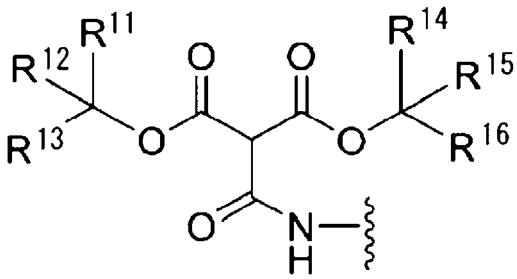

(I)

(wherein $R^{11}$, $R^{12}$ and $R^{13}$ each independently represent an alkyl group which may contain one or more substituents selected from the group consisting of a hydroxy group and an amino group;
a total number of carbon atoms of $R^{11}$, $R^{12}$ and $R^{13}$ is 4 or more and 20 or less;
$R^{14}$, $R^{15}$ and $R^{16}$ each independently represent a hydrogen atom or an alkyl group which may contain one or more substituents selected from the group consisting of a hydroxy group and an amino group; and
a wavy line represents a bonding site with a residue of polyisocyanate excluding an isocyanate group.)

Europäisches Patentamt
European Patent Office
Office européen des brevets

# EUROPEAN SEARCH REPORT

Application Number
EP 23 19 3917

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/117396 A1 (FURUSAWA SATORU [JP] ET AL) 7 May 2009 (2009-05-07)<br>* paragraphs [0128], [0134], [0145] - [0148]; examples 1-12,14,19-23; tables 2,3 * | 1-12 | INV.<br>C08G18/02<br>B05D7/00<br>C07C263/10<br>C08G18/08<br>C08G18/28<br>C08G18/42<br>C08G18/62<br>C08G18/70<br>C08G18/72<br>C08G18/73<br>C08G18/77<br>C08G18/78<br>C08G18/79<br>C08G18/80<br>C09D175/04 |
| X | WO 2010/018872 A1 (KANSAI PAINT CO LTD [JP]; ADACHI TAKATO [JP] ET AL.) 18 February 2010 (2010-02-18)<br>* examples (1-1) - (1-31), (1-34) - (1-36), (1-38) - (1-41); tables 3-13 *<br>* page 75, lines 24-28 *<br>* page 93, line 4 - page 94, line 14 * | 1-12 | |
| A | BAYER: "Raw Materials for Automotive Refinish Systems Desmodur/Desmophen/Bayhydrol/Bayhydur/Roskydal",<br>INTERNET CITATION,<br>February 2005 (2005-02), pages 1-24, XP002613607,<br>Retrieved from the Internet:<br>URL:http://200.182.3.36/bpo/home.nsf/04bbd938b0f97149c1256ac500564711/7710c8878da245ab832570770063bb8e/$FILE/Repintura.pdf<br>[retrieved on 2010-12-09]<br>* page 17 * | 1-12 | TECHNICAL FIELDS SEARCHED (IPC)<br>C08G<br>C23D<br>C07C<br>B05D<br>C09D |
| X | EP 3 689 476 A1 (KANSAI PAINT CO LTD [JP]) 5 August 2020 (2020-08-05)<br>* paragraphs [0125], [0149] - [0153]; examples 1-17; table 4 * | 1-12 | |

-/--

The present search report has been drawn up for all claims

| Place of search | Date of completion of the search | Examiner |
|---|---|---|
| Munich | 19 January 2024 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

1
EPO FORM 1503 03.82 (P04C01)

Europäisches Patentamt
European Patent Office
Office européen des brevets

# EUROPEAN SEARCH REPORT

Application Number
EP 23 19 3917

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Covestro: "Polyisocyanates and Prepolymers", , 23 June 2020 (2020-06-23), XP055707897, Retrieved from the Internet: URL:https://solutions.covestro.com/-/media/covestro/solution-center/brands/downloads/imported/1557223877.pdf [retrieved on 2020-06-23] * page 20 * ----- | 1-12 | |
| X | WO 2009/075389 A1 (KANSAI PAINT CO LTD [JP]; TOMIZAKI YASUHIRO [JP] ET AL.) 18 June 2009 (2009-06-18) * examples 63,138,214; tables 3-5 * * page 109, line 4 - page 110, line 32 * ----- | 1-12 | |
| X | WO 2009/157588 A1 (KANSAI PAINT CO LTD [JP]; TOMIZAKI YASUHIRO [JP] ET AL.) 30 December 2009 (2009-12-30) * page 91, line 2 - page 92, line 31; examples 34,80; tables 2-4 * ----- | 1-12 | TECHNICAL FIELDS SEARCHED (IPC) |
| X | WO 2010/007891 A1 (KANSAI PAINT CO LTD [JP]; KAWAGUCHI YOHICHI [JP] ET AL.) 21 January 2010 (2010-01-21) * page 71, line 4 - page 73, line 1; example 40; tables (3-2), (4-2) * ----- | 1-12 | |
| X | WO 2010/112605 A1 (AKZO NOBEL COATINGS INT BV [NL]; VISSER PETER [NL] ET AL.) 7 October 2010 (2010-10-07) * example 9 * ----- | 1-12 | |
| | -/-- | | |

The present search report has been drawn up for all claims

1

| Place of search | Date of completion of the search | Examiner |
|---|---|---|
| Munich | 19 January 2024 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 4

Europäisches Patentamt
European Patent Office
Office européen des brevets

# EUROPEAN SEARCH REPORT

Application Number
EP 23 19 3917

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2020 025909 A (MITSUI CHEMICALS INC) 20 February 2020 (2020-02-20) * Comparative examples 4 and 5; paragraphs [0339] - [0349], [0362]; tables 1,4 * ----- | 1-12 | |
| X | WO 2021/139821 A1 (WANG JUNYU [CN]; LI HONG [CN]) 15 July 2021 (2021-07-15) * Comparative example 2; page 13, lines 8-14; table 4 * ----- | 1-12 | |
| X | WO 2015/051526 A1 (DOW GLOBAL TECHNOLOGIES LLC [US]; ZHANG LIANG [CN] ET AL.) 16 April 2015 (2015-04-16) * page 21, line 4 - page 22, line 8; examples 1-8; tables 1,3-6 * ----- | 1-12 | |
| X | WO 2021/146987 A1 (ZHANG LIANG [CN] ET AL) 29 July 2021 (2021-07-29) * tables 1-5 * ----- | 1-12 | TECHNICAL FIELDS SEARCHED (IPC) |
| X | WO 2016/101093 A1 (DOW GLOBAL TECHNOLOGIES LLC [US]; ZHANG LIANG [CN] ET AL.) 30 June 2016 (2016-06-30) * tables 1,2,4 * ----- | 1-12 | |
| X | WO 2017/185332 A1 (DOW GLOBAL TECHNOLOGIES LLC [US]; LI JIAN [CN] ET AL.) 2 November 2017 (2017-11-02) * tables 2-4 * ----- | 1-12 | |
| X | CN 112 724 821 A (SHENZHEN UV CHEMTECH INC; SHENZHEN METRO GROUP CO LTD) 30 April 2021 (2021-04-30) * paragraph [0040]; example 1 * ----- | 1-12 | |
| | -/-- | | |

The present search report has been drawn up for all claims

1

| Place of search | Date of completion of the search | Examiner |
|---|---|---|
| Munich | 19 January 2024 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 23 19 3917

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 778 686 A1 (ASAHI CHEMICAL IND [JP]) 17 February 2021 (2021-02-17) * claims 1,17 * ----- | 1-6 | |
| X | EP 3 527 596 A1 (ASAHI CHEMICAL IND [JP]) 21 August 2019 (2019-08-21) * claims 1,14 * ----- | 1-6 | |

TECHNICAL FIELDS SEARCHED (IPC)

1

The present search report has been drawn up for all claims

| Place of search | Date of completion of the search | Examiner |
|---|---|---|
| Munich | 19 January 2024 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 19 3917

This annex lists the patent family members relating to the patent documents cited in the above-mentioned European search report. The members are as contained in the European Patent Office EDP file on
The European Patent Office is in no way liable for these particulars which are merely given for the purpose of information.

19-01-2024

| Patent document cited in search report | Publication date | Patent family member(s) | Publication date |
|---|---|---|---|
| US 2009117396 A1 | 07-05-2009 | CN 101432082 A | 13-05-2009 |
| | | GB 2450835 A | 07-01-2009 |
| | | JP 4825871 B2 | 30-11-2011 |
| | | JP WO2007126107 A1 | 17-09-2009 |
| | | US 2009117396 A1 | 07-05-2009 |
| | | WO 2007126107 A1 | 08-11-2007 |
| WO 2010018872 A1 | 18-02-2010 | CN 102159332 A | 17-08-2011 |
| | | JP 2011530393 A | 22-12-2011 |
| | | US 2011135935 A1 | 09-06-2011 |
| | | WO 2010018872 A1 | 18-02-2010 |
| EP 3689476 A1 | 05-08-2020 | CA 3076799 A1 | 04-04-2019 |
| | | CN 111093841 A | 01-05-2020 |
| | | EP 3689476 A1 | 05-08-2020 |
| | | JP 7106558 B2 | 26-07-2022 |
| | | JP WO2019064958 A1 | 10-09-2020 |
| | | US 2021205844 A1 | 08-07-2021 |
| | | WO 2019064958 A1 | 04-04-2019 |
| WO 2009075389 A1 | 18-06-2009 | CN 101896521 A | 24-11-2010 |
| | | GB 2467701 A | 11-08-2010 |
| | | JP 5751614 B2 | 22-07-2015 |
| | | JP 2011506620 A | 03-03-2011 |
| | | US 2010255328 A1 | 07-10-2010 |
| | | WO 2009075389 A1 | 18-06-2009 |
| WO 2009157588 A1 | 30-12-2009 | CN 102076427 A | 25-05-2011 |
| | | GB 2472751 A | 16-02-2011 |
| | | JP 5653224 B2 | 14-01-2015 |
| | | JP 2011525415 A | 22-09-2011 |
| | | US 2011111242 A1 | 12-05-2011 |
| | | WO 2009157588 A1 | 30-12-2009 |
| WO 2010007891 A1 | 21-01-2010 | CN 102099418 A | 15-06-2011 |
| | | JP 5468024 B2 | 09-04-2014 |
| | | JP 2011528381 A | 17-11-2011 |
| | | US 2011117378 A1 | 19-05-2011 |
| | | WO 2010007891 A1 | 21-01-2010 |
| WO 2010112605 A1 | 07-10-2010 | AU 2010230147 A1 | 13-10-2011 |
| | | CN 102378793 A | 14-03-2012 |
| | | EP 2414464 A1 | 08-02-2012 |
| | | ES 2433644 T3 | 12-12-2013 |
| | | KR 20120007506 A | 20-01-2012 |
| | | KR 20170054567 A | 17-05-2017 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 23 19 3917

This annex lists the patent family members relating to the patent documents cited in the above-mentioned European search report. The members are as contained in the European Patent Office EDP file on
The European Patent Office is in no way liable for these particulars which are merely given for the purpose of information.

19-01-2024

| Patent document cited in search report | Publication date | Patent family member(s) | Publication date |
|---|---|---|---|
| | | RU 2011144574 A | 10-05-2013 |
| | | WO 2010112605 A1 | 07-10-2010 |
| JP 2020025909 A | 20-02-2020 | JP 7106389 B2 | 26-07-2022 |
| | | JP 2020025909 A | 20-02-2020 |
| WO 2021139821 A1 | 15-07-2021 | CN 111793425 A | 20-10-2020 |
| | | US 2023295460 A1 | 21-09-2023 |
| | | WO 2021139821 A1 | 15-07-2021 |
| WO 2015051526 A1 | 16-04-2015 | AU 2013402777 A1 | 12-05-2016 |
| | | BR 112016005865 A2 | 05-09-2017 |
| | | CA 2926380 A1 | 16-04-2015 |
| | | CN 105593292 A | 18-05-2016 |
| | | EP 3030614 A1 | 15-06-2016 |
| | | US 2016251507 A1 | 01-09-2016 |
| | | WO 2015051526 A1 | 16-04-2015 |
| WO 2021146987 A1 | 29-07-2021 | AU 2020425168 A1 | 11-08-2022 |
| | | BR 112022014273 A2 | 20-09-2022 |
| | | CA 3164546 A1 | 29-07-2021 |
| | | CN 114981351 A | 30-08-2022 |
| | | EP 4093818 A1 | 30-11-2022 |
| | | JP 2023520109 A | 16-05-2023 |
| | | US 2022389234 A1 | 08-12-2022 |
| | | WO 2021146987 A1 | 29-07-2021 |
| WO 2016101093 A1 | 30-06-2016 | AU 2014415504 A1 | 20-07-2017 |
| | | BR 112017012066 A2 | 16-01-2018 |
| | | CA 2971481 A1 | 30-06-2016 |
| | | CN 107001847 A | 01-08-2017 |
| | | EP 3237559 A1 | 01-11-2017 |
| | | SG 11201704810X A | 28-07-2017 |
| | | US 2018016463 A1 | 18-01-2018 |
| | | WO 2016101093 A1 | 30-06-2016 |
| WO 2017185332 A1 | 02-11-2017 | AU 2016404531 A1 | 22-11-2018 |
| | | BR 112018072181 A2 | 12-02-2019 |
| | | CA 3022537 A1 | 02-11-2017 |
| | | CN 109071907 A | 21-12-2018 |
| | | EP 3448929 A1 | 06-03-2019 |
| | | JP 6849699 B2 | 24-03-2021 |
| | | JP 2019519627 A | 11-07-2019 |
| | | SG 11201809356Y A | 29-11-2018 |
| | | US 2019153236 A1 | 23-05-2019 |
| | | WO 2017185332 A1 | 02-11-2017 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 23 19 3917

This annex lists the patent family members relating to the patent documents cited in the above-mentioned European search report. The members are as contained in the European Patent Office EDP file on
The European Patent Office is in no way liable for these particulars which are merely given for the purpose of information.

19-01-2024

| Patent document cited in search report | | Publication date | Patent family member(s) | | | Publication date |
|---|---|---|---|---|---|---|
| CN 112724821 | A | 30-04-2021 | NONE | | | |
| EP 3778686 | A1 | 17-02-2021 | CN | 111741991 | A | 02-10-2020 |
| | | | EP | 3778686 | A1 | 17-02-2021 |
| | | | JP | 6999027 | B2 | 18-01-2022 |
| | | | JP | WO2019188781 | A1 | 03-12-2020 |
| | | | WO | 2019188781 | A1 | 03-10-2019 |
| EP 3527596 | A1 | 21-08-2019 | CN | 109843955 | A | 04-06-2019 |
| | | | EP | 3527596 | A1 | 21-08-2019 |
| | | | JP | 6713542 | B2 | 24-06-2020 |
| | | | JP | WO2018070371 | A1 | 24-06-2019 |
| | | | WO | 2018070371 | A1 | 19-04-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7207220 A
- JP SHO5734107 A
- JP SHO61275311 A
- JP HEI11130728 A
- JP 8017881 A
- JP SHO57198760 A
- JP HEI41033 B
- JP 53135931 A
- JP 508 T